(19) Europäisches Patentamt

European Patent Office

Office européen des brevets

(11) **EP 1 047 030 A2**

(12) **EUROPEAN PATENT APPLICATION**

(43) Date of publication:
25.10.2000 Bulletin 2000/43

(51) Int. Cl.⁷: **G07F 17/16**, G07F 19/00, G06F 17/60

(21) Application number: 00303071.5

(22) Date of filing: 12.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **13.04.1999 JP 10520399**
**13.09.1999 JP 25925299**
**14.09.1999 JP 26063799**

(71) Applicant: **SONY CORPORATION**
**Tokyo 141 (JP)**

(72) Inventors:
• **Matsuyama, Shinako**
**Shinagawa-ku, Tokyo (JP)**
• **Ishibashi, Yoshihito**
**Shinagawa-ku, Tokyo (JP)**

(74) Representative:
**Robinson, Nigel Alexander Julian et al**
**D. Young & Co.,**
**21 New Fetter Lane**
**London EC4A 1DA (GB)**

(54) **Information processing apparatus and method, information management apparatus and method, information providing medium, information providing system and method, and information transmission apparatus**

(57) An information processing apparatus and an information processing method, an information management apparatus and an information managing method, an information providing medium, an information providing system and an information providing method, and an information transmission apparatus that facilitate the execution of various processing operations in accordance with content data. Predetermined content data are sent from an information transmission apparatus along with code indicative of predetermined information associated with the use of these content data, specified by a management apparatus, to an information processing apparatus. When using the content data, the information processing apparatus sends the corresponding code to the management apparatus. The management apparatus executes predetermined processing by use of the information indicated by this code. Consequently, when the content data are used, predetermined processing in accordance with the use of the content data can be executed, and at the same time, only changing the code specified by the management apparatus facilitates the execution of different processing operations for the use of the content data.

F I G. 2

EP 1 047 030 A2

**Description**

The present invention relates generally to an information processing apparatus and an information processing method, an information management apparatus and an information managing method, an information providing medium, an information providing system and an information providing method, and an information transmission apparatus. For example, the present invention relates to an information processing apparatus, an information processing method, an information management apparatus and an information managing method, and an information providing medium that use encrypted information.

Systems are known in which information such as music is encrypted and the encrypted information is sent to an information processing apparatus of a user with whom a predetermined contract has been concluded, and the received information is decrypted in that information processing apparatus for use. Such information is hereafter referred to as content.

However, the related-art systems provide no service that discounted prices for content are offered according to content purchase results for each user to purchase content at the discount rates.

It is therefore an object of at least preferred embodiments of the present invention to provide an information processing apparatus and an information processing method, an information management apparatus and an information managing method, and an information providing medium that allow users to purchase content at discount price. It is another object of at least preferred embodiments of the present invention to provide an information providing system, an information providing method, an information transmission apparatus, an information processing apparatus, and an information management apparatus that facilitate the execution of various processing operations in accordance with uses of content data.

In carrying out the invention and according to a first aspect thereof, there is provided an information processing apparatus managed by a management apparatus for decrypting encrypted information and using decrypted information, comprising: storage means for storing a discount amount of a usage fee of the encrypted information; generating means for generating information on charges including information for identifying the usage fee of the encrypted information; setting means for setting, to the information on charges, information that charges for the encrypted information is settled by discounting the discount amount; and sending means for sending, to the management apparatus, the information on charges set with the information that charges for the encrypted information is settled by discounting the discount amount.

In carrying out the invention and according to a second aspect thereof, there is provided an information processing method for an information processing apparatus managed by a management apparatus for decrypting encrypted information and using decrypted information, comprising the steps of: storing a discount amount of a usage fee of the encrypted information; generating information on charges including information for identifying the usage fee of the encrypted information; setting, to the information on charges, information that charges for the encrypted information is settled by discounting the discount amount; and sending, to the management apparatus, the information on charges set with the information that charges for the encrypted information is settled by discounting the discount amount.

In carrying out the invention and according to a third aspect thereof, there is provided an information providing medium for providing a computer-readable program for making an information processing method for an information processing apparatus managed by a management apparatus for decrypting encrypted information and using decrypted information execute processing comprising the steps of: storing a discount amount of a usage fee of the encrypted information; generating information on charges including information for identifying the usage fee of the encrypted information; setting, to the information on charges, information that charges for the encrypted information is settled by discounting the discount amount; and sending, to the management apparatus, the information on charges set with the information that charges for the encrypted information is settled by discounting the discount amount.

According to the above-mentioned information processing apparatus, information processing method, and information providing medium, a discount amount of information usage fee is stored, information on charges including information for identifying the information usage fee is generated, information charges is settled by reducing the discount amount, and information on charges set with information that the information charges is settled by reducing the discount amount is sent to the management apparatus.

In carrying out the invention and according to a fourth aspect thereof, there is provided a management apparatus for managing an information processing apparatus that decrypts encrypted information to use decrypted information, comprising: storage means for storing a discount amount usable by the information processing apparatus; receiving means for receiving information on charges supplied from the information processing apparatus, including information for identifying a usage fee of the encrypted information, and set with information that charges for the encrypted information is settled by discounting the discount amount; reading means for reading the usage fee of the encrypted information from the information on charges; settling means for settling charges of the encrypted information by subtracting the discount amount from the usage fee identified by the information on charges; and computing means for computing, on the basis of an amount of the charges settled by the settling means, a discount amount usable by the information processing apparatus.

In carrying out the invention and according to a fifth aspect thereof, there is provided a managing method for a management apparatus for managing an information processing apparatus that decrypts encrypted information to use decrypted information, comprising the steps of: storing a discount amount usable by the information processing apparatus; receiving information on charges supplied from the information processing apparatus, including information for identifying a usage fee of the encrypted information, and set with information that charges for the encrypted information is settled by discounting the discount amount; reading the usage fee of the encrypted information from the information on charges; settling charges of the encrypted information by subtracting the discount amount from the usage fee identified by the information on charges; and computing, on the basis of an amount of the charges settled in the settling step, a discount amount usable by the information processing apparatus.

In carrying out the invention and according to a sixth aspect thereof, there is provided an information providing medium for providing a computer-readable program for making a management apparatus for managing an information processing apparatus that decrypts encrypted information to use decrypted information execute processing comprising the steps of: storing a discount amount usable by the information processing apparatus; receiving information on charges supplied from the information processing apparatus, including information for identifying a usage fee of the encrypted information, and set with information that charges for the encrypted information is settled by discounting the discount amount; reading the usage fee of the encrypted information from the information on charges; settling charges of the encrypted information by subtracting the discount amount from the usage fee identified by the information on charges; and computing, on the basis of an amount of the charges settled in the settling step, a discount amount usable by the information processing apparatus.

According to the above-mentioned management apparatus, managing method, and information providing medium, a discount amount usable by the information processing apparatus is stored, information on charges supplied from the information processing apparatus, including information for identifying a usage fee of the encrypted information, and set with information that charges for the encrypted information is settled by discounting the discount amount is received, the usage fee of the encrypted information is read from the received information on charges, charges of the encrypted information is settled by subtracting the stored discount amount from the usage fee identified by the information on charges, and a discount amount usable by the information processing apparatus is computed on the basis of an amount of the charges settled.

In carrying out the invention and according to a seventh aspect thereof, there is provided an information providing system comprising: an information transmission apparatus for sending predetermined content data and a code indicative of predetermined information associated with usage of the content data; an information processing apparatus for receiving the content data and the code and sending the code when using the content data; and a management apparatus for receiving the code and executing predetermined processing using the predetermined information indicated by the code.

According to the above-mentioned information providing system, when the content data are used, predetermined processing according to use of these content data can be executed and, at the same time, only changing the code specified by the management apparatus can easily execute different processing operations for the use of the content data.

In carrying out the invention and according to an eighth aspect thereof, there is provided an information transmission apparatus managed by a management apparatus for sending predetermined content data to an information processing apparatus, the information transmission apparatus sending the predetermined content data and a code indicative of predetermined information associated with use of the predetermined content data, the code being sent from the information processing apparatus to the management apparatus when using the predetermined content data, the management apparatus executing predetermined processing using the predetermined information on the basis of the code received from the information processing apparatus.

According to the above-mentioned information transmission apparatus, when the content data are used, the management apparatus can execute predetermined processing according to the use of the content data and, at the same time, only changing the specified code allows the management apparatus to easily execute different processing operations for the use of the content data.

In carrying out the invention and according to a ninth aspect thereof, there is provided a management apparatus for managing an information processing apparatus for receiving predetermined content data from an information transmission apparatus, wherein the predetermined content data and a code indicative of predetermined information associated with use of the content data are sent from the information transmission apparatus to the information processing apparatus and the code is sent, when using the content data, from the information processing apparatus to the management apparatus, which executes predetermined processing by use of the predetermined information indicated by the received code.

According to the above-mentioned management apparatus, when the content data are used, predetermined processing according to the use of the content data can be executed and, at the same time, only changing the specified code facilitates different processing operations for the use of the content data.

In carrying out the invention and according to a tenth aspect thereof, there is provided an information processing apparatus managed by a management apparatus for receiving predetermined content data sent from an information transmission apparatus, the information processing apparatus receiving the content data and a code indicative of predetermined information associated with use of the content data from the information transmission apparatus and sending the received code, when using the content data, to the management apparatus that executes predetermined processing by use of the predetermined information.

According to the above-mentioned information processing apparatus, when the content data are used, only sending the corresponding code to the management apparatus allows it to execute the processing corresponding to the use of the content data and, at the same time, if the specified code is changed, the management apparatus need not be aware thereof. Sending the changed code to the management apparatus allows it to easily execute different processing for the use of the content data.

In carrying out the invention and according to an eleventh aspect thereof, there is provided an information providing method comprising the steps of: data sending in which predetermined content data and a code indicative of predetermined information associated with use of the content data are sent from an information transmission apparatus to an information processing apparatus; code sending in which the content data and the code sent from the information transmission apparatus are received by the information processing apparatus and the information processing apparatus sends the code when using the content data to a management apparatus; and processing executing in which the code sent from the information processing apparatus is received by the management apparatus and the management apparatus executes predetermined processing by use of the predetermined information indicated by the received code.

According to the above-mentioned information providing method, when the content data are used, predetermined processing according to the use of the content data can be executed and, at the same time, only changing the code specified by the management apparatus facilitates different processing for the use of the content data.

Embodiments of the invention will now be described, by way of example only, with reference to the accompanying drawings in which:

FIG. 1 is a block diagram illustrating a first embodiment of a configuration of an EMD system according to one embodiment of the invention;

FIG. 2 is a block diagram illustrating a main information flow in the above-mentioned EMD system;

FIG. 3 is a block diagram illustrating a functional configuration of an EMD service center 1;

FIG. 4 is a diagram illustrating the transmission of a delivery key Kd of the EMD service center 1;

FIG. 5 is further diagram illustrating the transmission of the delivery key Kd of the EMD service center 1;

FIG. 6 is another diagram illustrating the transmission of the delivery key Kd of the EMD service center 1;

FIG. 7 is still another diagram illustrating the transmission of the delivery key Kd of the EMD service center 1;

FIG. 8 is a diagram illustrating the provisional delivery key Kd of the EMD service center 1;

FIG. 9 shows system illustrating an example of system registration information;

FIG. 10 illustrates discount point information;

FIG. 11 is a block diagram illustrating a functional configuration of a content provider 2;

FIGS. 12A and 12B illustrate examples of UCP (Usage Management Policy);

FIGS. 13A and 13B illustrate content management shifts;

FIGS. 14A and 14B illustrate examples of a first-generation duplication;

FIG. 15 illustrates an example of a content provider secure container;

FIG. 16 illustrates an example of a certificate of the content provider 2;

FIG. 17 is a block diagram illustrating a functional configuration of a service provider 3;

FIGS. 18A and 18B illustrate examples of PT (Price Tag);

FIGS. 19A and 19B illustrate examples of other PTs;

FIG. 20 illustrates an example of a service provider secure container;

FIG. 21 illustrates an example of a certificate of the service provider 3;

FIG. 22 is a block diagram illustrating a functional configuration of a receiver 51 of a user home network 5;

FIG. 23 illustrates an example of a certificate of a SAM (Secure Application Module: SAM is a module which executes, for example, right processing of content, authentication processing, and the like in a content distribution system and has tamper resistance) 62 of the receiver 51;

FIG. 24 illustrates an example of UCS (Usage Management Status);

FIG. 25 schematically illustrates the inside of a usage information storage block 63A of an external storage block 63 of the receiver 51;

FIG. 26 illustrates an example of information on charges;

FIG. 27 illustrates information stored in a storage module 73 of the receiver 51;

FIG. 28 illustrates reference information 51;

FIG. 29 illustrates an example of discount point information of the reference information 51;

FIG. 30 illustrates an example of a registration list;

FIG. 31 is a flowchart describing content usage processing;

FIG. 32 is a flowchart describing processing for transmitting the content key Kd to the content provider 2 by the EMD service center 1;

FIG. 33 is a flowchart describing a cross-authentication operation between the content provider 2 and the EMD service center 1;

FIG. 34 is a flowchart describing another cross-authentication operation between the content provider 2 and the EMD service center 1;

FIG. 35 is a flowchart describing still another cross-authentication operation between the content provider 2 and the EMD service center 1;

FIG. 36 is a flowchart describing the transmission of a content provider secure container to the service provider 3 by the content provider 2;

FIG. 37 is a flowchart describing the transmission of a service provider secure container to the receiver 51 by the service provider 3;

FIG. 38 is a flowchart describing the reception of the service provider secure container by the receiver 51;

FIG. 39 is a flowchart describing the processing by the receiver 51 for content reproduction;

FIG. 40 is a flowchart describing settlement processing;

FIG. 41 is a flowchart describing details of the settlement processing;

FIG. 42 is a schematic diagram illustrating settlement processing using no discount point;

FIG. 43 is a schematic diagram illustrating flows of notices of usage amount and discount amount;

FIG. 44 is a schematic diagram illustrating settlement processing using discount point;

FIG. 45 is another schematic diagram illustrating flows of notices of usage amount and discount amount;

FIG. 46 is a block diagram illustrating a second embodiment of the EMD system;

FIG. 47 is a block diagram illustrating a main information flow in the EMD system of the second embodiment;

FIG. 48 is a block diagram illustrating a configuration of a content provider 111;

FIGS. 49A and 49B illustrate UCPs including discount information;

FIG. 50 is a block diagram illustrating a configuration of a service provider 112;

FIGS. 51A and 51B illustrate PTs including discount information;

FIG. 52 is a block diagram illustrating a configuration of a receiver 113 of a user home network 114;

FIG. 53 is a diagram illustrating information on charges including discount information;

FIG. 54 is a diagram illustrating another example of information on charges;

FIG. 55 is a diagram illustrating another example of information on charges including discount information;

FIG. 56 is a block diagram illustrating a configuration of an EMD service center 110;

FIG. 57 is a diagram illustrating a flow of discount information;

FIG. 58 is a schematic diagram illustrating a settlement certificate generated in the EMD service center 110;

FIG. 59 illustrates a UCP of single content;

FIG. 60 illustrates a UCP of album content;

FIG. 61 illustrates another UCP of single content;

FIG. 62 illustrates another UCP of album content;

FIG. 63 illustrates a PT of single content;

FIG. 64 illustrates a PT of album content;

FIG. 65 illustrates another PT of single content;

FIG. 66 illustrates another PT of album content;

FIG. 67 illustrates a UCS;

FIG. 68 illustrates an example of information on charges; and

FIG. 69 illustrates another example of information on charges.

This invention will be described in further detail by way of example with reference to the accompanying drawings.

(1) First embodiment

The following describes a first embodiment of the invention. In order to clarify the correlation between the means of the invention described in the claims appended hereto and the components of the embodiment of the invention, each of the means is followed by parentheses in which an example of the corresponding component of the embodiment is enclosed. It should be noted however that each of the above means are not restricted to those described below.

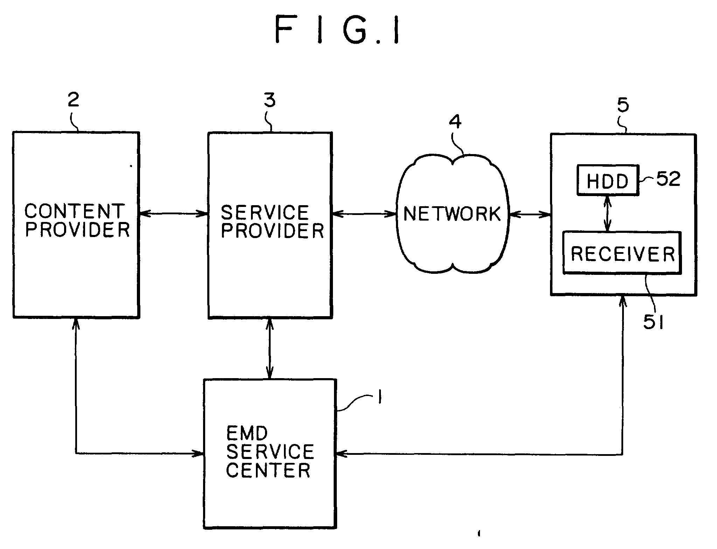

Now, referring to FIG. 1, there is shown an EMD (Electronic Music Distribution) system to which the present invention is applied. As shown, EMD system comprises an EMD service center 1 for handling registrations for the EMD system and managing various devices connected thereto, a content provider 2 for providing content, a service provider 3 for providing predetermined services corresponding to the content, and a user home network 5 composed of devices on which the content is used (in the present example, a receiver 51).

Content delivered (or provided) to devices (for example, to the receiver 51) registered in the EMD system denotes digital data in which information itself has a value. In the present example, one item of content is equivalent to one title of music data. Users purchase provided content (actually buy the right to use the provided content) and use the purchased content for reproduction or duplication.

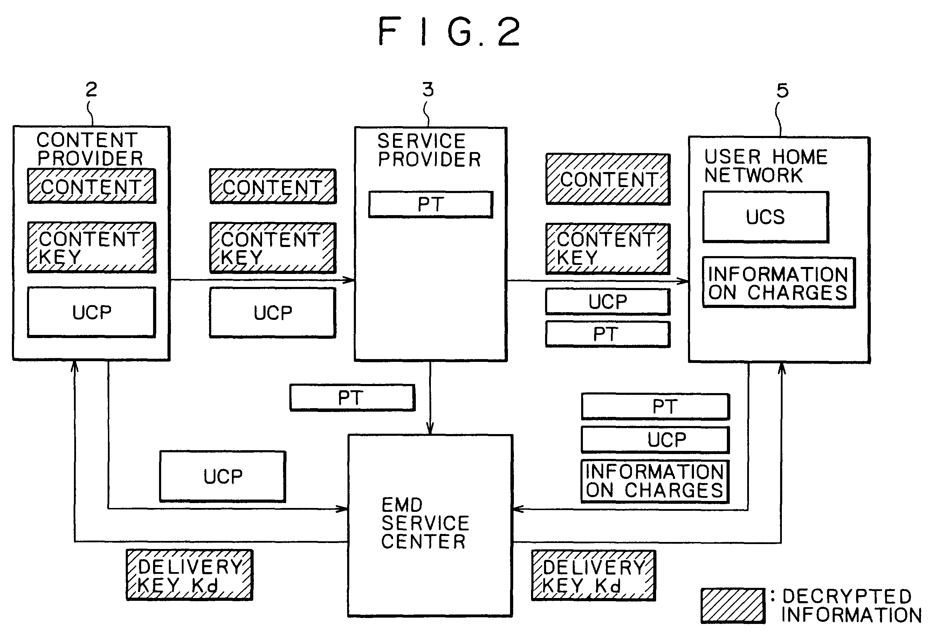

As shown in FIG. 2 illustrating a principle information flow in the EMD system, the EMD service center 1 sends delivery key kd necessary for use of content to the user home network 5 and the content provider 2. The EMD service center 1 receives information such as information on charges from a device of the user home network 5 for settlement on usage of the content by the user.

The content providers 2 holds content to be provided (encrypted by content key Kco), content key Kco (encrypted by delivery key Kd) necessary for decrypting encrypted content, and a UCP (Usage Control Policy) indicative of the information about use of content and provide these items to the service provider 3 in a form of content provider secure container to be described later.

The service providers 3 generates one or more pieces of price information known as PT (Price Tag) corresponding to the UCP provided from the content provider 2 and holds the PTs. The service provider 3 sends to the user home network 5 the generated PT along with the content (encrypted by content key Kco) provided from the content provider 2, content key Kco (encrypted by delivery key Kd), and the UCP in the form of service provider secure container through a network 4 made up of a dedicated cable network, the Internet, of a satellite communication network.

On the basis of the provided UCP and PT, the user home network 5 generates a UCS (Usage Control Status) and executes the processing for using the content on the basis of the generated UCS. The user home network 5 also generates information on charges at the time when the UCS is generated and sends the generated information on charges to the EMD service center 1 along with the information such as the UCP and PT corresponding thereto at the time when delivery key Kd is provided, for example. It should be noted that the user home network 5 may be adapted not to send the UCP and PT to the EMD service center 1.

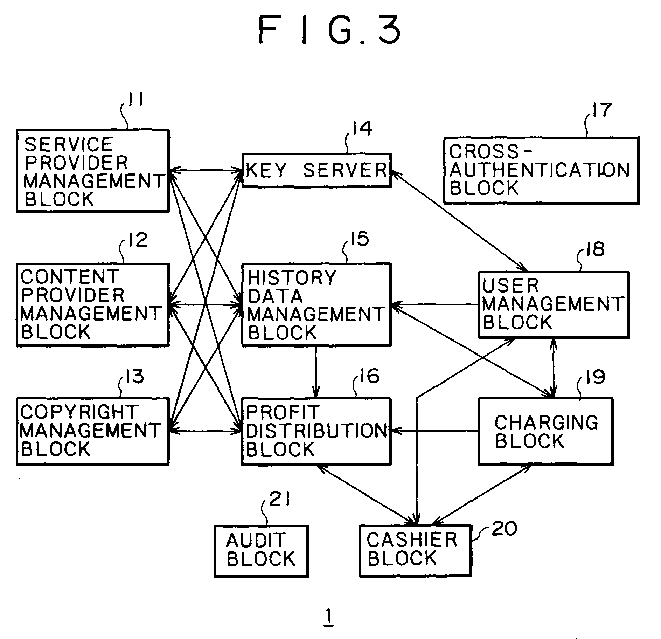

Referring to FIG. 3, there is shown a block diagram indicative of a functional configuration of the EMD service center 1. A service provider management block 11 provides profit-sharing information (to be described later) to the service provider 3. A content provider management block 12 sends delivery key Kd and provides profit-sharing information to the content provider 2.

The copyright management block 13 sends information indicative of content usage results of the user home network 5 to a copyright managing organization, for example JASRAC (Japanese Society for Rights of Authors, Composers and Publishers).

A key server 14 stores delivery key Kd and supplies it to the content provider 2 through the content provider management block 12 and the user home network 5 through a user management block 18.

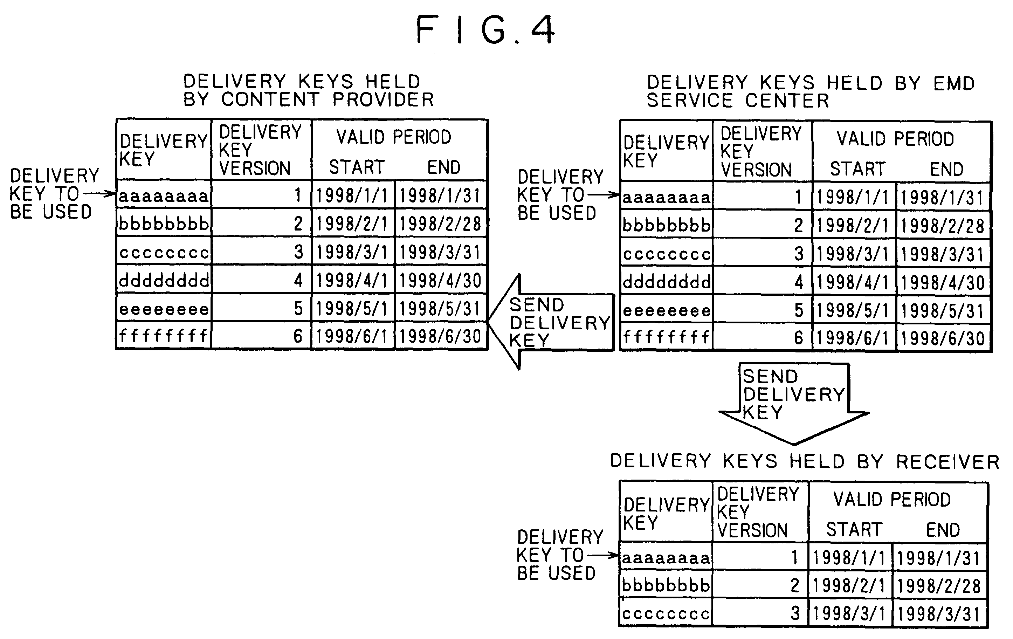

The following describes devices of the user home network 5 officially registered for this EMD system and the delivery key Kd from the EMD service center 1 to be provided to the content provider 2 with reference to FIGS. 4 through 7.

FIG. 4 shows delivery keys Kd held by the EMD service center 1, delivery keys Kd held by the content provider 2, and delivery keys Kd held by the receiver 51 at the time of January 1998, for example, on which the content provider 2 starts providing content and the receiver 51 constituting the user home network 5 starts using the content.

In the example shown in FIG. 4, each delivery key Kd is valid from the first day of each month as shown to the last day of the month. For example, version-1 delivery key Kd having a value "aaaaaaaa", a random number having the predetermined number of bits, is valid from January 1, 1998 to January 31, 1998 (namely, content key Kco for encrypting content to be delivered through the service provider 3 to the user home network 5 during a period starting on January 1, 1998 and ending on January 31, 1998 is encrypted by version-1 delivery key Kd). Version-2 delivery key Kd having a value "bbbbbbbb", a random number having the predetermined number of bits, is valid from February 1, 1998 to February 28, 1998 (namely, content key Kco for encrypting content to be delivered through the service provider 3 to the user home network 5 during this period is encrypted by version-2 delivery key Kd). Likewise, version-3 delivery key Kd is valid in March 1998, version-4 delivery key Kd is valid in April 1998, version-5 delivery key Kd is valid in May 1998, and version-6 delivery key Kd is valid in June 1998.

Before the content provider 2 starts providing content, the EMD service center 1 sends to the content provider 2 six delivery keys Kd of version 1 through version 6 which are valid from January 1998 to June 1998. The content provider 2 receives these six delivery keys Kd and stores them. The delivery keys Kd for six months are stored because the content provider 2 requires a predetermined period for preparing the content to be provided and for encrypting the content key prior to content delivery.

Before the receiver 51 starts using the content, the EMD service center 1 sends to the receiver 51 three delivery keys Kd of version 1 through version 3 which are valid from January 1998 to March 1998. The receiver 51 receives these three delivery keys Kd and stores them. The delivery keys Kd for three months are stored for the receiver 51 to avoid situations such that the receiver 51 cannot use the content due to troubles such as the failure to establish connection to the EMD service center 1 even during the contract period. This key storage is also made to reduce the frequency of connection to the EMD service center 1 to reduce the load of the user home network 5.

During the period from January 1, 1998 to January 31, 1998, version-1 delivery key Kd is used by the EMD service center 1, the content provider 2, and receiver 51 constituting the user home network 5.

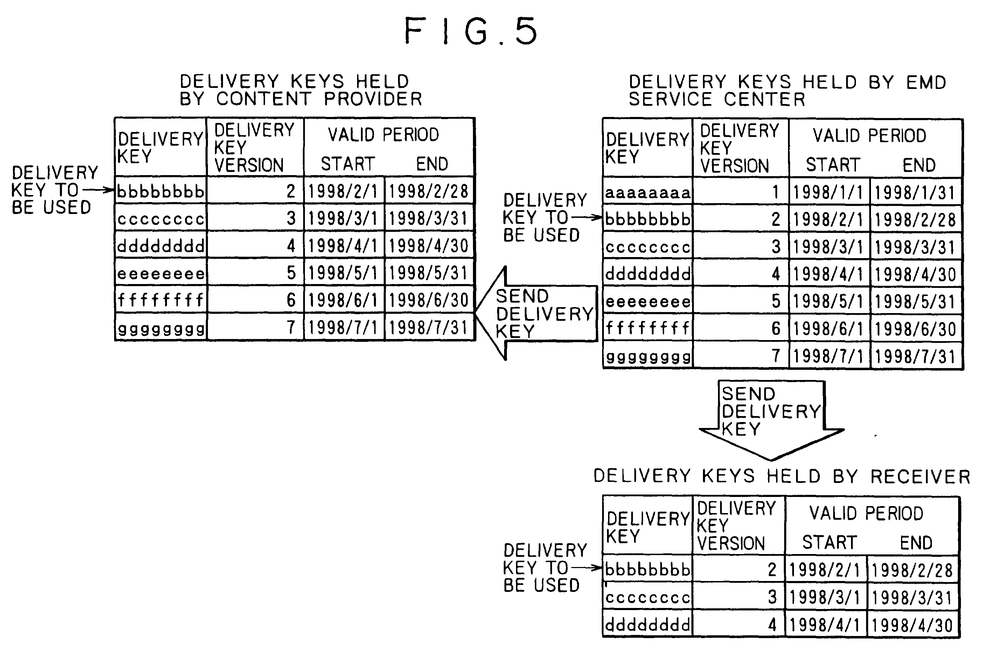

The following describes the transmission of delivery keys Kd of the EMD service center 1 to the content provider 2 and the receiver 51 as of February 1, 1998 with reference to FIG. 5. The EMD service center 1 sends to the content provider 2 six delivery keys Kd of version 2 through version 7 which are valid from February 1998 to July 1998. The content provider 2 receives these six delivery keys and writes them over the previously stored delivery keys Kd. The EMD service center 1 sends to the receiver 51 three delivery keys Kd of version 2 through version 4 which are valid from February 1998 to April 1998. The receiver 51 receives these keys and writes them over on the previously stored delivery keys Kd. The EMD service center 1 stores the version-1 delivery key as it is. By doing so, the EMD service center can use the delivery keys Kd used in the past should unexpected troubles occur or unauthorized activities occur or be found.

During a period starting from February 1, 1998 to February 28, 1998, version-2 delivery key Kd is used by the EMD service center 1, the content provider 2, and the receiver 51 constituting the user home network 5.

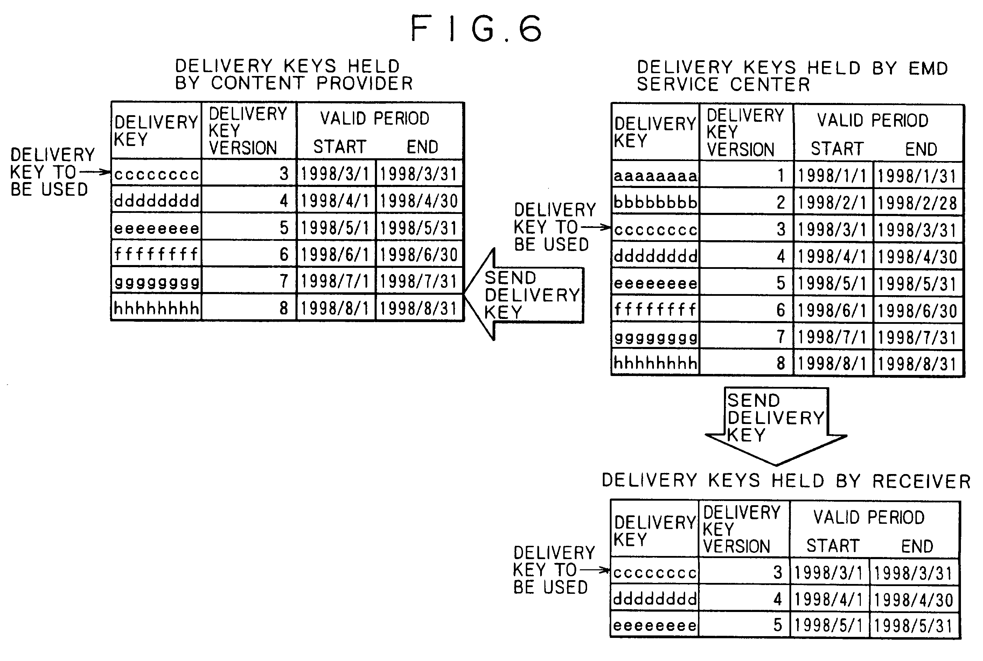

The following describes the transmission of delivery keys Kd of the EMD service center 1 to the content provider 2 and the receiver 51 as of March 1, 1998 with reference to FIG. 6. The EMD service center 1 sends to the content provider 2 the six delivery keys Kd of version 3 through version 8 which are valid from March 1998 to August 1998. The content provider 2 receives these six keys and writes them over on the previously stored delivery keys Kd. The EMD service center 1 sends to the receiver 51 the three delivery keys Kd of version 3 through version 5 which are valid from March 1998 to May 1998. The receiver 51 receives these three keys and writes them over on the previously stored delivery keys Kd. The EMD service center 1 stores version-1 delivery key Kd and version-2 delivery key Kd as they are.

During a period starting from March 1, 1998 to March 31, 1998, version-3 delivery key Kd is used by the EMD service center 1, the content provider 2, and the receiver 51 constituting the user home network 5.

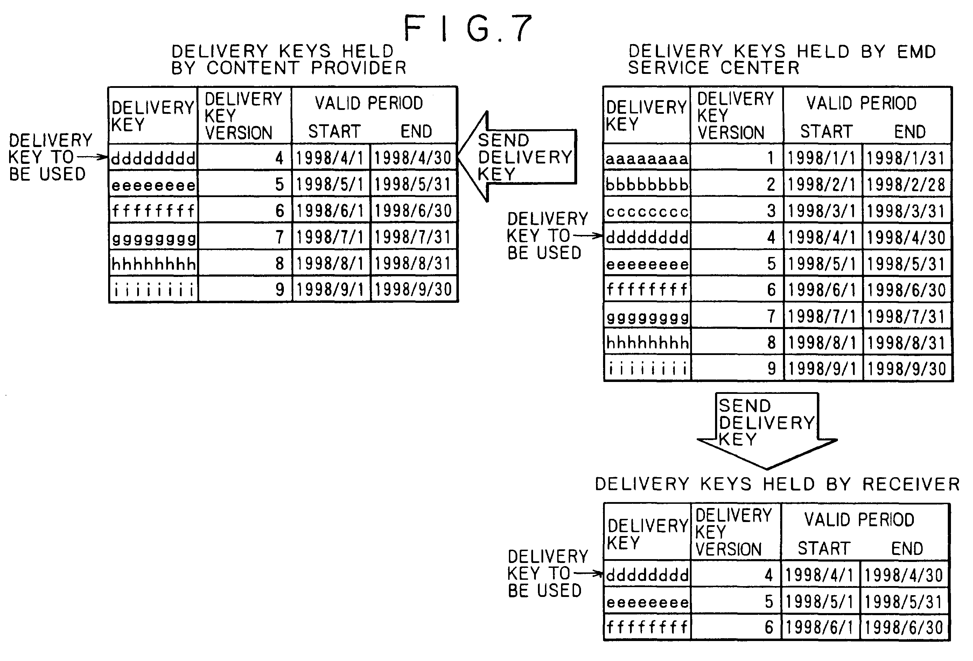

The following describes the transmission of delivery keys Kd of the EMD service center 1 to the content provider 2 and the receiver 51 as of April 1, 1998 with reference to FIG. 7. The EMD service center 1 sends to the content provider 2 six delivery keys Kd of version 4 through version 9 which are valid from April 1998 to September 1998. The content provider 2 receives these six keys and writes them over on the previously stored delivery keys Kd prior to receiving the keys. The EMD service center 1 sends to the receiver 51 the three delivery keys Kd of version 4 through version 6 which are valid from April 1998 to June 1998. The receiver 51 receives these three keys and writes them over on the previously stored delivery keys Kd. The EMD service center 1 stores version-1 delivery key Kd, version-2 delivery key Kd, and version-3 delivery key Kd as they are.

During a period from April 1, 1998 to April 30, 1998, the version-4 delivery key Kd is used by the EMD service center 1, the content provider 2, and the receiver 51 constituting the user home network 5.

Thus, distribution of delivery keys Kd for months ahead allows a user to purchase content, even if the user does not access the EMD service center 1 at all for one or two months, and receive necessary delivery key Kd when the user accesses the EMD service center 1 as time being.

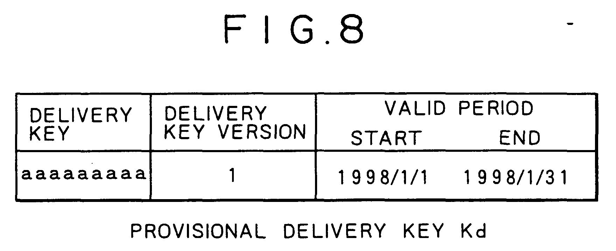

The delivery keys Kd of 3 or 6 months are distributed, as described, to the device of the user home network 5 which has been officially registered in the EMD system and to the content provider 2. The other device which is not officially but provisionally (details to be described later) registered in the EMD system, of the user home network 5 is distributed with not delivery keys Kd for three months but provisional delivery key Kd for 1 month as shown in FIG. 8. In the present example, such a registration procedure taking about 1 month as credit granting processing is required for officially registering each device of the user home network 5 into the EMD system. Therefore, also during a period (about 1 month) between the application for official registration and the credit granting thereof, the delivery keys Kd usable for that period are distributed to the device not officially but provisionally registered device.

Referring to FIG. 3 again, the history data management block 15 stores the information on charges, and the PT and UCP corresponding to that content supplied from the user management block 18.

The profit distribution block 16 computes the profits for the EMD service center 1, the content provider 2, and the service provider 3 on the basis of various pieces of information supplied from the history data management block 15 and outputs the computational results to the service provider management block 11, the content provider management block 12, the cashier block 20, and the copyright management block 13.

A profit (amount) of the content provider 2 (hereafter referred to as a CP profit amount) and a profit (amount) of the service provider 3 (hereafter referred to as A SP profit amount) are obtained from following equations (1) and (2) respectively:

$$\text{CP profit amount = CP share amount - CP commission - CP discount amount} \qquad (1)$$

$$\text{SP profit amount = SP share amount - SP commission - SP discount amount} \qquad (2)$$

The CP share amount is assumed in the present example to be 60% of content usage fee (refer to equation (3) below). The SP share amount is assumed to be 40% of content usage fee (refer to equation (4) below).

$$\text{CP share amount = usage fee} \times 0.6 \qquad (3)$$

$$\text{SP share amount = usage fee} \times 0.4 \qquad (4)$$

In the above equations, the CP commission in the above equation (1) denotes fees for various processing operations performed on the content provider 2 of the EMD service center 1. The CP commission is assumed to be 10% (refer to equation (5) below) of the CP share amount in the present example. The SP commission in the above equation (2) denotes fees for various processing operations performed on the service provider 3 of the EMD service center 1. The SP commission is also assumed to be 10% (refer to equation (6) below) of the SP share amount.

$$\text{CP commission = CP share amount} \times 0.1 \qquad (5)$$

$$\text{SP commission = SP share amount} \times 0.1 \qquad (6)$$

In equation (1) above, the discount amount denotes a predetermined discount amount that the user can use at the purchase of content (hereafter referred to as a user discount amount). This is a shared amount of the content provider 2, which is assumed to be 20% (refer to equation (7) below) of the user discount amount in the present example. Likewise, the SP discount amount in equation (2) above is a shared amount of the user discount amount by the service provider 3, which is assumed to be 30% (refer to equation (8) below) of the user discount amount.

$$\text{CP discount amount = user discount amount} \times 0.2 \qquad (7)$$

$$\text{SP discount amount = user discount amount} \times 0.3 \qquad (8)$$

It should be noted that the user discount amount is assumed to be 10% (refer to equation (9) below) of the fee to be actually paid by the user (hereafter referred to as a user payment amount).

$$\text{User discount amount = user payment amount} \times 0.1 \qquad (9)$$

The profit (amount) (hereafter referred to as an EMD profit amount) of the EMD service center 1 is obtained from equation (10) below:

$$\text{EMD profit amount = CP commission + SP commission - EMD discount amount} \qquad (10)$$

CP commission is obtained from equation (5) above and SP commission from equation (6) above. EMD service center discount amount (hereafter referred to as EMD discount amount) is a shared amount by the EMD service center 1 of the user discount amount and assumed to be 50% thereof (refer to equation (11) below).

$$\text{EMD discount amount = user discount amount} \times 0.5 \qquad (11)$$

The cross-authentication block 17 executes cross authentication between the content provider 2, the service provider 3, and the device of the user home network 5.

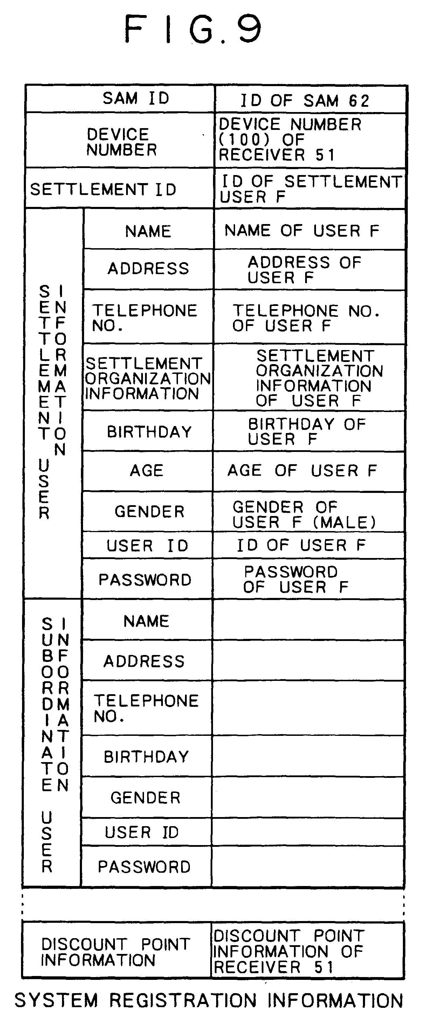

The user management block 18 manages information associated with the devices of the user home network 5 which can be registered in the EMD system (this information hereafter referred to as system registration information). The system registration information includes "SAM ID," "Device Number," "Settlement ID," "Settlement User Information," plural pieces of "Subordinate User Information," and "Discount Point Information" as shown in FIG. 9.

"SAM ID" stores the ID (or serial number) of the SAM of the device constituting the user home network 5. The SAM ID stores ID of a SAM 62 in the receiver 51 shown in FIG. 9.

"Device Number" has a device number preset to a device having a SAM in the user home network 5. If the device in the user home network 5 has a capability of communicating with the service provider 3 through the network 4 and directly with the EMD service center 1 (namely, if the device has a communication block) and a capability of outputting (or displaying) the descriptions of UCP and PT for example to the user and allowing the user to select the usage description of UCP (namely, if the device has a display block and an operator block), the device (hereafter referred to as a main device) is assigned with a device number 100 or higher. If the device has no such capabilities, the device (hereafter referred to as a subordinate device) is assigned with a device number 99 or lower. In present example, the receivers 51 and 201 have each a device having the above-mentioned capabilities, so that the device is assigned with a device number 100 or higher (100 in present example). Thus, device number 100 is set to the device number corresponding to the SAM 62 of the receiver 51 as shown in FIG. 9.

"Settlement ID" has a predetermined settlement ID to be assigned at the official registration in the EMD system. In present example, the receiver 51 is officially registered for a settlement user and assigned a settlement ID, so that this assigned settlement ID is recorded in "Settlement ID" corresponding to the ID of the SAM 62 of the system registration information shown in FIG. 9.

"Settlement User Information" includes the name, address, telephone number, settlement organizations information (for example, credit card number), birthday, age, gender, ID, and password for example of the user for whom charges is settled (this user is hereafter referred to as a settlement user).

The settlement user's name, address, telephone number, settlement organization information, birthday, age, gender, ID, and password to be set to "Settlement User Information" (if these items of information set for the settlement user need not be distinguished from each other, they are hereafter generically referred to as user generation information) are provided by the settlement user at the time of application for the official registration. In present example, the name, the address, the telephone number, and the settlement organization information need to be correct valid information (for example, the information registered in a settlement organization) because credit-granting processing is executed on the basis of these items of information. In the present example, the birthday, the age, and the gender need not be correct because they are not used for credit granting processing and therefore the user is not always required to submit them. The ID and password of the settlement user to be recorded in the "Settlement User Information" are assigned and set at the time of the provisional registration in the EMD system.

In the present example, with the receiver 51, user F is registered as the settlement user, so that the user general information, ID, and password provided by user F are set to "Settlement User Information" corresponding to the ID of the SAM 62 of the system registration information shown in FIG. 9. In the present example, user F is assumed to be male.

Each "Subordinate Users Information" stores the name, address, telephone number, birthday, age, gender, ID, and password for example of a user for whom charges is not settled (this user is hereafter referred to as a subordinate user). Namely, of the item of information to be set to "Settlement User Information," the items of information other than the settlement organization information are set. Because no credit granting processing is executed for the subordinate user, the subordinate user's name, address, telephone number, birthday, age, and gender need not be correct. For example, the name may be a dummy name or a nickname. The name is used for identifying the user, but the user need not provide the other information. The ID and password of the subordinate user to be set to "Subordinate User Information" are assigned and set at the time of provisional or official registration.

In the present example, no subordinate user is registered for the receiver 51, so that no information is set to "Subordinate User Information" corresponding to the ID of the SAM 62 of the system registration information shown in FIG. 9.

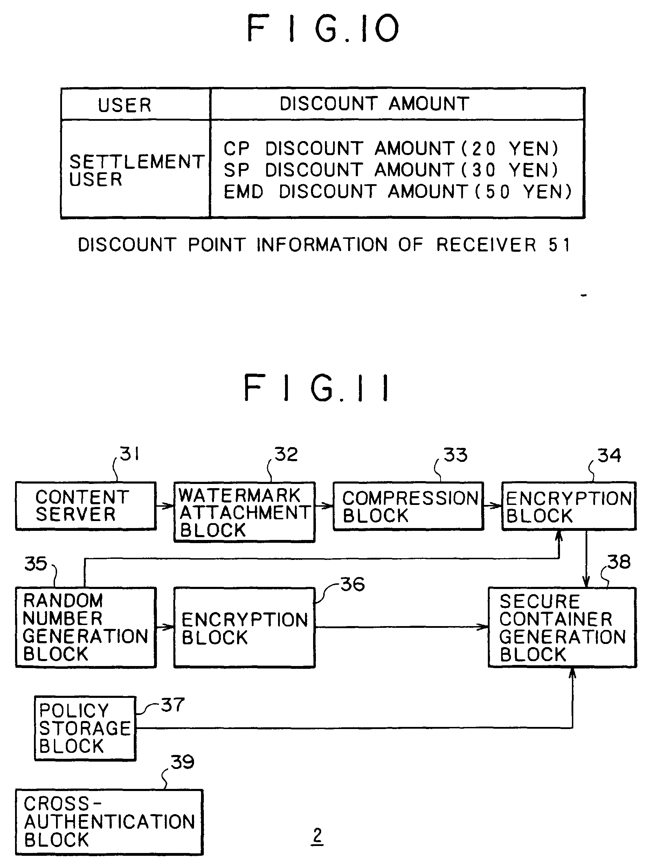

"Discount Point Information" has a discount point outputted from the profit distribution block 16. In the present example, the discount point is equal to the discount amount (yen). FIG. 10 shows the CP discount amount, SP discount amount, and EMD discount amount given to user F when user F purchased 1000 yen of content.

The CP discount amount is obtained from equation (7) above to be 20 (= $1000 \times 0.1 \times 0.2$) yen. The SP discount amount is obtained from equation (8) above to be 30 (= $1000 \times 0.1 \times 0.3$) yen. The EMD discount amount is obtained from equation (11) above to be 50 (= $1000 \times 0.1 \times 0.5$) yen. In the present example, the user discount amount is 100 (= 20 + 30 + 50) yen.

In addition to management of the above-mentioned system registration information, the user management block 18 generates a registration list (to be described later) in correspondence with predetermined processing and sends it along with delivery key Kd to the user home network 5.

Referring to FIG. 3 again, an charging block 19 computes a content usage fee on the basis of the information on charges, UCP, PT, and user discount amount supplied from the history data management block 15 to obtain the amount to be paid by a user and supplies the computed content usage fee to the cashier block 20 and the profit distribution block 16. For example, if information on charges A, UCP A, and PT A-1 are supplied from the history data management block 15, then the charging block 19 recognizes the UCP A corresponding to the information on charges of this time from the ID set to "UCP ID" of information on charges A and recognizes that the UCP A has been supplied from the history data management block 15.

The charging block 19 recognizes the PT A-1 corresponding to the information on charges of this time from the ID set to "PT ID" of information on charges A and recognizes that it has been supplied from the history data management block 15. When the UCP A and PT A-1 are found supplied thereto, the charging block 19 recognizes that the ID set to "ID" of "Usage Description" of information on charges A is the ID of "Usage Description 11" of the UCP A and detects "2000 yen" set to "Price Description 11" of the corresponding PT A-1 as the usage fee of the content.

If the usage of discount point is requested by the user, the charging block 19 subtracts the user discount amount supplied from the user management block 18 from the detected content usage fee, obtaining a user payment amount (refer to equation (12) below).

$$\text{User payment amount} = \text{content usage fee} - \text{user discount amount} \qquad (12)$$

If the user does not request the usage of discount point, the content usage fee is equal to the user payment amount.

The cashier block 20 communicates with external financial organizations such as banks not shown to execute settlement processing on the basis of the amounts payable to or receivable from the user, the content provider 2, and the service provider 3. And besides, the cashier block 20 notifies the result of the settlement processing to the user management block 18.

The audit block 21 checks the information on charges, PT, and UCP supplied from the device of the user home network 5 for validity (or unauthorized activities). In the present example, the EMD service center 1 receives UCP from the content provider 2, PT from the service provider, and UCP and PT from the user home network 5.

Referring to FIG. 11, there is shown a block diagram indicative of a functional configuration of the content provider 2. A content server 31 stores content to be provided to the user and sends the content to a watermark attachment block 32. The watermark attachment block 32 attaches a watermark (or an electronic watermark) to the content and supplies the resultant content to a compression block 33.

The compression block 33 compresses the content supplied from the watermark attachment block 32 by use of a compression scheme such as ATRAC2 (Adaptive Transform Acoustic Coding 2) (trademark) and supplies the compressed content to an encryption block 34. The encryption block 34 encrypts the compressed content with a key consisted of a random number supplied from a random number generation block 35 (this random number hereafter being referred to as content key Kco) by adopting a common key cryptography such as DES (Data Encryption Standard) and outputs the encrypted content to a secure container generation block 38.

The random number generation block 35 supplies a random number having the predetermined number of bits for providing the content key Kco to the encryption block 34 and another encryption block 36. The encryption block 36 encrypts content key Kco by use of delivery key Kd supplied from the EMD service center 1 through a common key encryption scheme such as DES, and outputs encrypted content key Kco to the secure container generation block 38.

DES is the encryption scheme which uses a 56-bit common key to process 64 bits of plaintext as one block. The DES processing is composed of a data permutation block in which plaintext is permuted into ciphertext and a key processing block in which a key (or an enlargement key) for use in the data permutation block is generated from the common key. All algorithms of DES are publicized, so that only the basic processing of the data permutation block will be described below.

First, the 64 bits of plaintext are divided into high-order 32 bits $H_0$ and low-order 32 bits $L_0$. From an input of a 48-bit enlargement key $K_1$ and the low-order 32 bits $L_0$ supplied from the key processing block, an output of F function obtained by permutating the low-order 32 bits $L_0$ is computed. F function is consisted of two basic transformations; substitution for substituting numeric values by a predetermined law and transposition in which bit positions are transposed by a predetermined law. Next, the high-order 32 bits $H_0$ is exclusively ORed with the output of F function, obtaining a result thereof being $L_1$ and $L_0$ being $H_1$.

On the basis of the high-order 32 bits $H_0$ and the low-order 32 bits $L_0$, the above-mentioned process is iterated 16 times, resultant high-order 32 bits $H_{16}$ and low-order 32 bits $L_{16}$ being output as ciphertext. Decryption of the ciphertext is realized by use of the common key used in the encryption and by following the above-mentioned process in the reverse order.

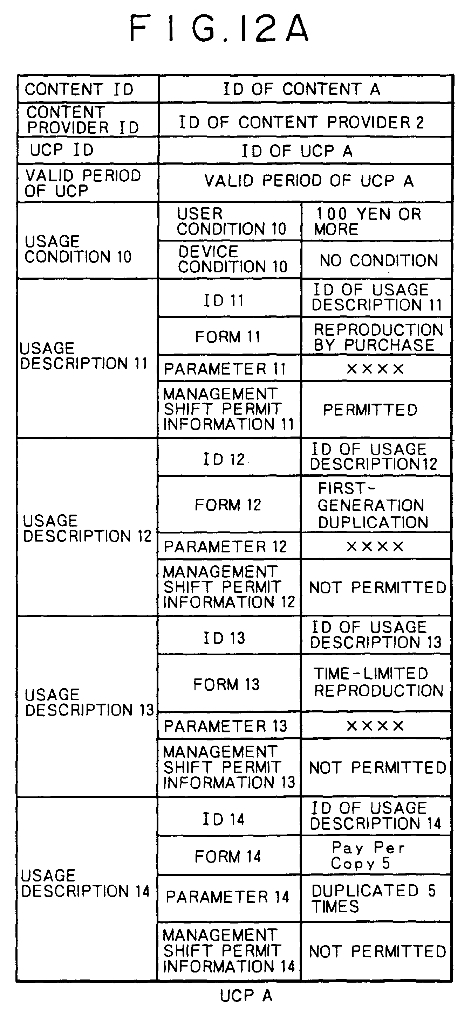

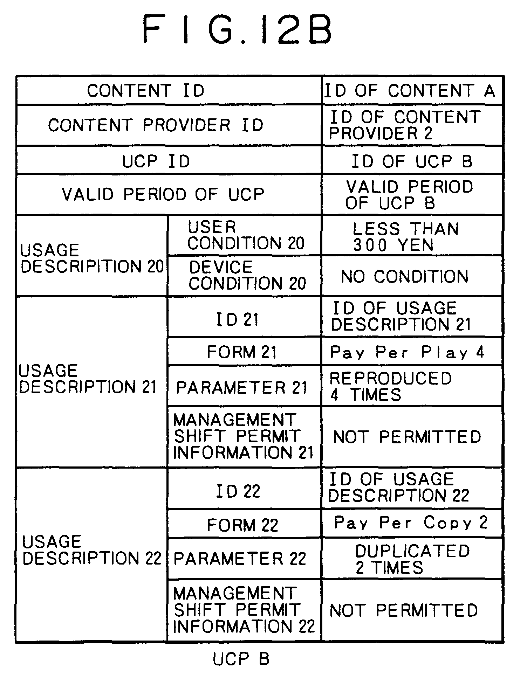

A policy storage block 37 stores the UCP corresponding to content and outputs the UCP to the secure container generation block 38. FIGS. 12A and 12B show UCP A and UCP B, respectively, which are set for content A stored in the content server 31 and are stored in the policy storage block 37. The UCP includes predetermined information for items such as "Content ID," "Content Provider ID," "UCP ID," "Valid Period of UCP," "Usage Condition," and "Usage Description." Set to "Content ID" is the ID of the content corresponding to the UCP. The ID of content A is set to "Content ID" of UCP A (FIG. 12A) and UCP B (FIG. 12B), respectively.

"Content Provider ID" has the ID of the content provider from which the content is provided. The ID of the content provider 2 is set to the "Content Provider ID" of UCP A and UCP B. Set to "UCP ID" is the predetermined ID assigned to each UCP. The ID of UCP A is set to "UCP ID" of UCP A and the ID of UCP B is set to "UCP ID" of UCP B. Set to "Valid Period of UCP " is the information indicative of the valid period of the UCP. The valid period of UCP A is set to "Valid Period of UCP" of UCP A and the valid period of UCP B is set to "Valid Period of UCP" of UCP B.

"Usage Condition" has predetermined information corresponding to "User Condition" and "Device Condition." Set to "User Condition" is information indicative of a user predetermined condition allowing the selection of this UCP. Set to "Device Condition" is information indicative of device predetermined condition allowing the selection of this UCP.

For UCP A, "Usage Condition 10" is set. "User Condition 10" of "Usage Condition 10" has information ("100 YEN OR MORE") indicative of a condition that the user discount amount is 100 yen or more. "Device Condition 10" of "Usage Condition 10" has information ("No condition") indicative that there is no condition. Namely, only a user having a user discount point of 100 yen or more selects UCP A.

For UCP B, "Usage Condition 20" is set. "User Condition 20" of "Usage Condition 20" has information ("lower than 100 yen") indicative of a condition that the user discount amount is lower than 100 yen. "Device Condition 20" of "Usage Condition 20" has information ("No condition") indicative that there is no condition. Namely, only a user having a user discount amount of lower than 100 yen selects UCP A.

"Usage Description" includes predetermined information for "ID," "Form," "Parameter," and "Management shift permit information." Set to "ID" is a predetermined ID assigned to information to be set to "Usage Description." Set to "Form" is information indicative of content's usage forms such as reproduction and duplication. Set to "Parameter" is predetermined information corresponding to the usage form set to "Form."

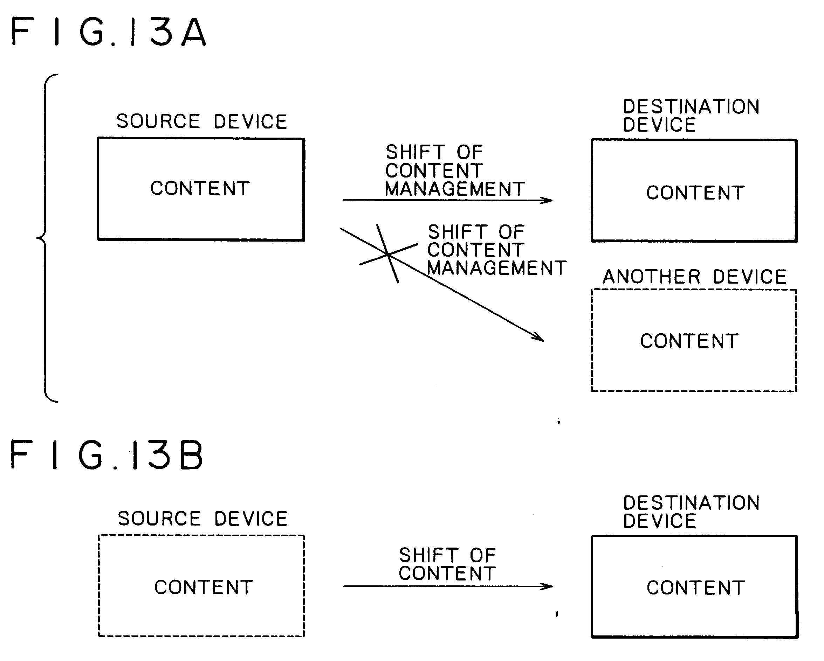

"Management shift permit information" has information indicative whether content management shift is enabled or not (permitted or not). When a content management shift occurs, the content is duplicated into a destination device without leaving a source device as shown in FIG. 13A. Namely, the same content is used by both the source and destination devices. This is different from a usual content management shift in which, as shown in FIG. 13B, content is moved to a destination device, leaving a source device and therefore the content is available only in the destination device.

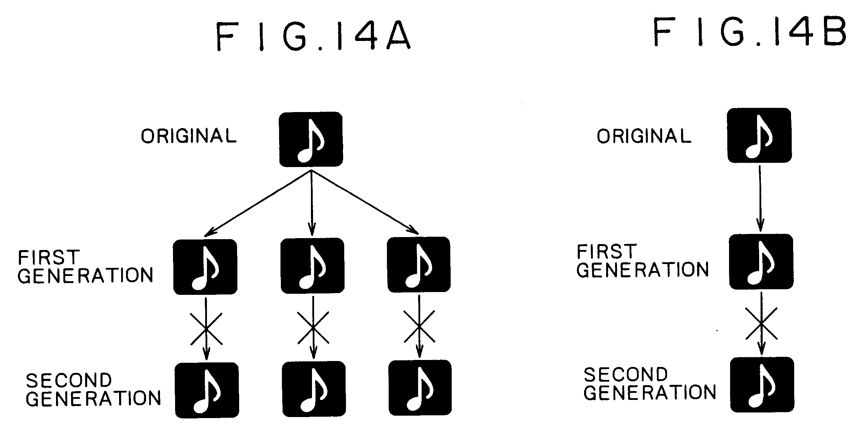

It should be noted that, while a content management shift is in process, the source device is not allowed to shift content to another destination device as shown in FIG. 13A. Namely, the content is held only by the two devices, between one source and one destination. This is different from first-generation duplication in which two or more duplications (of the first generation) can be generated from original content as shown in FIG. 14A. This is also different from one-time-only duplication shown in FIG. 14B because the content shifted to one destination device can be retrieved therefrom and then passed to another destination device.

Referring to FIG. 12A again, four pieces of information of "Usage Description 11" through "Usage Description 14" are set to UCP A. In "Usage Description 11," "ID 11" has a predetermined ID assigned to "Usage Description 11." "Form 11" has information ("Reproduction by Purchase") indicative of the usage form for purchase content for reproduction. "Parameter 11" has predetermined information for "Reproduction by Purchase." "Management shift permit information 11" has "Yes" indicative of permission of content management shift.

In "Usage Description 12," "ID 12" has a predetermined ID allocated to "Usage Description 12." "Form 12" has information ("First-generation duplication") indicative of a usage form in which first generation duplication is to be made. As shown in FIG. 14A, in the first-generation duplication, plural first-generation duplications can be made from the original content but no second-generation duplication can be made from the first-generation duplication (such duplication is not permitted). "Parameter 12" has predetermined information corresponding to "First-generation duplication." "Management shift permit information 12" has "No" indicative of no permission of content management shift.

In "Usage Description 13," "ID 13" has a predetermined ID assigned to "Usage Description 13." "Form 13" has information ("Time-limited Reproduction") indicative of a usage form in which the content is reproduced only in a predetermined period. "Parameter 13" has the start and end of the predetermined period for "Time-limited Reproduction." "Management shift permit information 13" has "NO" indicative of no permission of content management shift.

In "Usage Description 14," "ID 14" has a predetermined ID assigned to "Usage Description 14." "Form 14" has information ("Pay Per Copy 5") indicative of a usage form in which duplication is made 5 times. It should be noted that, in this case too, no duplication can be made from another duplication as shown in FIG. 14B (such duplication is not permitted). "Parameter 14" has information indicative that duplication can be made 5 times ("Duplication 5 Times"). "Management shift permit information 14" has "No" indicative of no permission of content management shift.

UCP B shown in FIG. 12B has two usage descriptions, "Usage Description 21" and "Usage Description 22." In "Usage Description 21," "ID 21" has a predetermined ID allocated to "Usage Description 21." "Form 21" has information ("Pay Per Play 4") indicative of a usage form in which reproduction can be made 4 times. "Parameter 21" has information indicative that reproduction can be made 4 times ("Reproduction 4 Times." "Management shift permit information 21" has "No."

In "Usage Description 22," "ID 22" has a predetermined ID allocated to "Usage Description 22." "Form 22" has "Pay Per Copy 2." "Parameter 22" has information indicative of "Duplication twice" reflecting the information of "Form 22." "Management shift permit information 11" has "No."

Comparison between the details of UCP A and those of UCP B shows that the user having 100 yen or more discount amounts can select a usage description from four usage descriptions 11 through 14 while the user having discount points of less than 100 yen is allowed only two usage descriptions 21 and 22 to select.

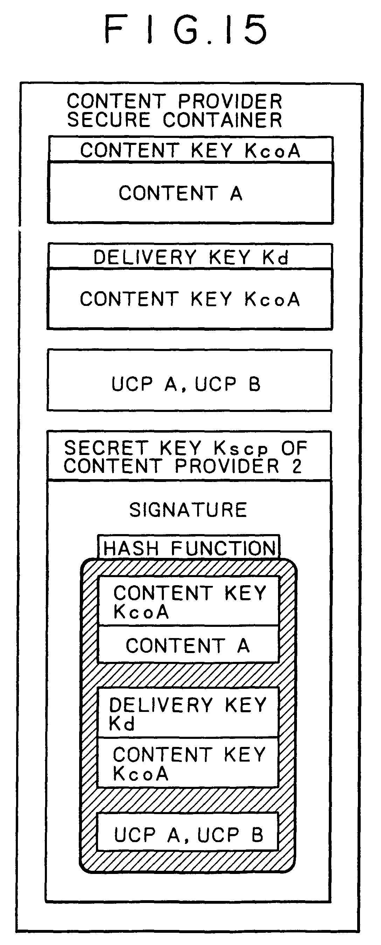

Referring to FIG. 11 again, the secure container generation block 38 generates a content provider secure container consisting of content A (encrypted using a content key KcoA), the content key KcoA (encrypted using delivery key Kd), UCP A, UCP B, and a signature, for example, as shown in FIG. 15. The signature is obtained by encrypting a hash value obtained by applying a hash function to data to be transmitted (in this case, all of the content A encrypted using the content key KcoA, the content key KcoA encrypted using the delivery key Kd, UCP A, and UCP B) with use of a secret key (in this case, a secret key Kscp of the content provider 2) of public key cryptography.

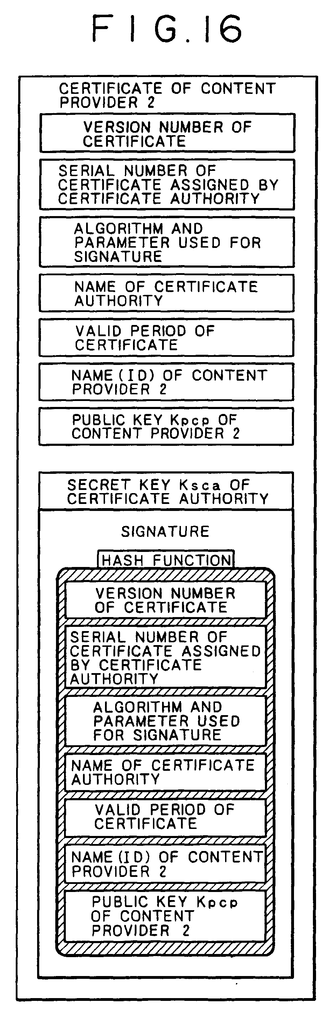

The secure container generation block 38 also attaches a certificate of the content provider 2 shown in FIG. 16 to the generated content provider secure container and sends them to the service provider 3. This certificate is consisted of the version number of the certificate, the serial number of the certificate assigned to the content provider 2 by a certificate authority, the algorithm and parameter used for signing the certificate, the name of the certificate authority, the valid period of the certificate, the name of the content provider 2, the public key Kpcp of the content provider 2, and the signature (encrypted by the secret key Ksca of the certificate authority).

The signature is the data used for checking tampering and creator authentication. The signature is generated by obtaining a hash value by applying a hash function to the data to be transmitted and encrypting the obtained hash value by the secret key of public key cryptography.

The following describes matching between the hash function and the signature. The hash function is used to compress predetermined data to be transmitted into data having a predetermined bit length and outputs these data as a hash value. The hash function is characterized by that it is difficult to predict the input from a hash value (output), the change of a single bit in the data inputted into the hash function causes the change of many bits of the hash value, and it is difficult to search for input data having a same hash value.

A receiver who received a signature and data decrypts the signature by the public key of public key cryptography and gets a result (a hash value) of the decryption. Further, a hash value of the received data is computed and the computed hash value is matched against the hash value obtained by decrypting the signature. If a match is found, it indicates that the received data are not tampered and therefore they are as sent from a sender who has the secret key corresponding to the public key. Of the hash function for signature, MD4, MD5, or SHA-1 is available for example.

The following describes public key cryptography. Unlike common key cryptography in which a same key (a common key) is used in encryption and decryption, public key cryptography uses different keys for encryption and decryption. In public key cryptography, one of the keys is made public while the other is kept secret. The key made public is referred to as a public key. The key kept secret is referred to as a secret key.

The following briefly describes RSA (Rivest-Shamir-Adleman), a representative public key cryptography. First, two sufficiently large prime numbers p and q are obtained. Then, product n of p and q is obtained. Lowest common multiple L between (p-1) and (q-1) is computed. Further, number e which is 3 or higher and less than L and mutually prime with L (namely, e and L can be commonly divided only by 1).

Next, multiplication inverse d of number e associated with a multiplication to modulus L is obtained. Namely, "ed = 1 mod L" is established between d, e, and L, d being computed by Euclidean algorithm. At this time, n and e provide the public key and p, q and d provide the secret key.

Ciphertext C is computed from plaintext M by the processing of equation (13):

$$C = M \wedge e \bmod n \tag{13}$$

Ciphertext C is decrypted into plaintext M by the processing of equation (14):

$$M = C \wedge d \bmod n \tag{14}$$

Although the proof is omitted herein, the encryption and decryption by RSA are based on Fermat's Little Theorem, in which equation (15) is established:

$$M = C \wedge d = (M^e) \wedge d = M \wedge (ed) = M \bmod n \tag{15}$$

If secret keys p and q are known, secret key d can be computed from public key e. But, if the number of digits of public key n is increased to a degree which makes quantitatively difficult the factorization of public key n into prime factors, knowing only public key n cannot compute secret key d from public key e, disabling the decryption. Thus, in RSA encryption scheme, a key for encryption can be made different from a key for decryption.

The following briefly describes elliptic curve cryptography, another example of public key cryptography. Let a certain point on an elliptic curve $y \wedge 2 = x \wedge 3 + ax + b$ be B. Define the addition of the point on the elliptic curve. nB represents a result of the addition of B by n times. Likewise, define the subtraction. It has been proven difficult to compute n from B and nB. B and nB provide the public key and n provides the secret key. Using random number r, ciphertexts C1 and C2 are computed from plaintext M by the processing of equations (16) and (17):

$$C1 = M + rnB \qquad (16)$$

$$C2 = rB \qquad (17)$$

Ciphertexts C1 and C2 are decrypted into plaintext M by the processing of equation (18):

$$M = C1 - nC2 \qquad (18)$$

Ciphertexts that can be decrypted are only those having secret key n. Thus, like RSA, elliptic curve cryptography can make the key for encryption different from the key for decryption.

Referring to FIG. 11 again, before receiving delivery key Kd from the EMD service center 1, the cross-authentication block 39 of the content provider 2 cross-authenticates with the EMD service center 1. Before sending a content provider secure container to the service provider 3, the cross-authentication block 39 may cross-authenticate with the service provider 3. In the present example, however, because the content provider secure container has no information which should be kept confidential, this cross-authentication is not necessarily required.

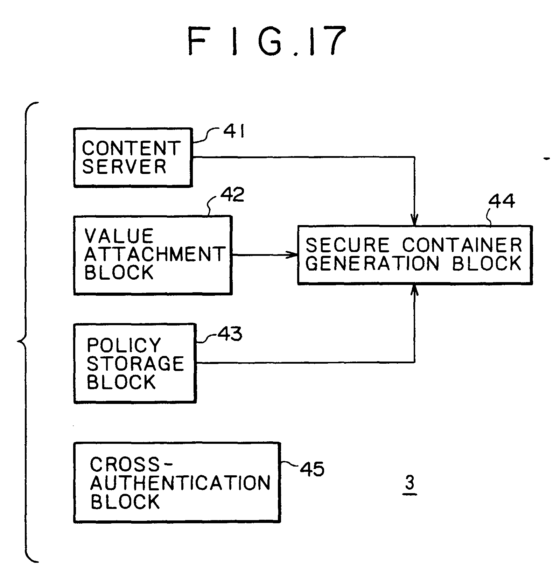

Now, referring to FIG. 17, the functional configuration of the service provider 3 will be described. A content server 41 stores the content (encrypted by content key Kco), content key Kco (encrypted by delivery key Kd), UCP, and signature included in a content provider secure container supplied from the content provider 2 and supplies them to a secure container generation block 44.

A value attachment block 42 verifies the correctness of the content provider secure container on the basis of the signature included therein. In doing so, this block verifies the certificate of the content provider 2. If the certificate is found correct, this block obtains the public key of the content provider 2. On the basis of the obtained public key, this block verifies the correctness of the content provider secure container.

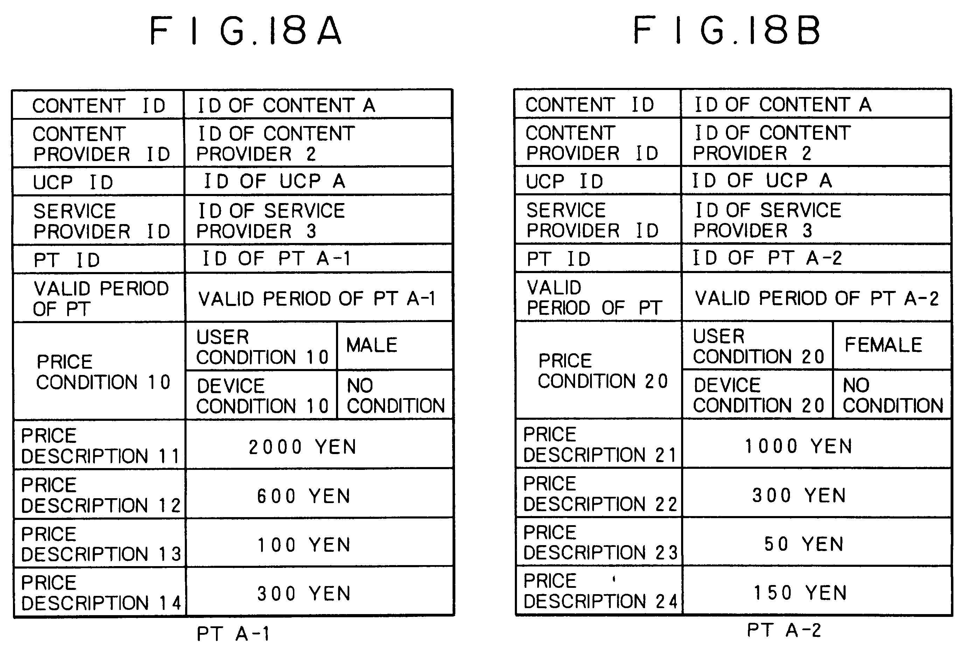

If the content provider secure container is found correct, the value attachment block 42 generates a PT corresponding to the UCP contained in the content provider secure container and supplies generated PT to the secure container generation block 44. FIGS. 18A and 18B show PT A-1 and PT A-2, respectively, generated in correspondence with the UCP A shown in FIG. 12A. The PT includes items of information which are set to "Content ID," "Content Provider ID," "UCP ID," "Service Provider ID," "PT ID," "PT Valid Period," "Price Condition," and "Price Description."

The corresponding items of information are set to "Content ID," "Content Provider ID," and "UCP ID" of the PT. To be specific, the ID of content A is set to "Content ID" of PT A-1 and PT A-2. The ID of the content provider 2 is set to "Content Provider ID" of these PTs. The ID of UCP A is set to "UPC ID" of these PTs.

"Service Provider ID" contains the ID of the service provider 3 from which the PT has been supplied. "Service Provider ID" of PT A-1 and PT A-2 has the ID of the service provider 3. "PT ID" has a predetermined ID assigned to each PT. "PT ID" of PT A-1 has the ID of PT A-1. "PT ID" of PT A-2 has the ID of PT A-2. "Valid Period of PT" has information indicative of the valid period of the PT. "Valid Period of PT" of PT A-1 has the valid period of PT A-1. "Valid Period of PT" of PT A-2 has the valid period of PT A-2.

As with the case of "Usage Condition" of UCP, "Price Condition" has predetermined information corresponding to the items of "User Condition" and "Device Condition." "User Condition" has information indicative of a user condition permitting the selection of this PT. "Device Condition" has information indicative of a device condition permitting the selection of this PT.

In the case of PT A-1, "Price Condition 10" is set. "User Condition 10" of "Price Condition 10" has information indicative of the user as a male ("Male"). "Device Condition 10" has "No condition." That is, only a male user can select PT A-1.

In the case of PT A-2, "Price Condition 20" is set. "User Condition 20" of "Price Condition 20" has information indicative of the user as a female ("Female"). "Device Condition 20" has "No Condition." Namely, only a female user can select PT A-2.

"Price Description" of the PT shows a usage amount for usage of the content in a usage form as set in "Form" of "Usage Description" of PT A-1. Namely, "2000 yen" set to "Price Description 11" of PT A-1 and "1000 yen" set to "Price Description 21" of PT A-2 indicate content purchase prices (fees) because "Form 11" of "Usage Description 11" indicates "Reproduction by Purchase."

"600 yen" of "Price Description 12" of PT A-1 and "300 yen" of "Price Description 22" of PT A-2 indicate usage amount of content A in the usage form of first-generation duplication as set in "Form 12" of "Usage Description 12" of UCP A. Likewise, "100 yen" of "Price Description 13" of PT A-1 and "50 yen" of "Price Description 23" of PT A-2 indicate usage fees of content A in a usage form of time-limited reproduction as set in "Form 13" of "Usage Description 13" of UCP A. Next, "300 yen" of "Price Description 14" of PT A-1 and "150 yen" of "Price Description 24" of PT A-2 indicate usage fees of content A in a usage form of duplicating it 5 times as set in "Form 14" of "Usage Description 14" of UCP A.

In the present example, comparison of the price description of PT A-1 (applied to male user) with the price description of PT A-2 (applied to female user) indicates that the price in PT A-1 is twice as high as the price in PT A-2. For example, "Price Description 11" of PT A-1 corresponding to "Usage Description 11" of UCP A is "2000 yen" and "Price Description 21" of PT A-2 corresponding to "Usage Description 11" of UCP A is "1000 yen." Likewise, the prices set to "Price Description 12" through "Price Description 14" of PT A-1 are twice as high as those set to "Price Description 22" through "Price Description 24" of PT A-2. Namely, female users can use content A at prices one half of those for male users.

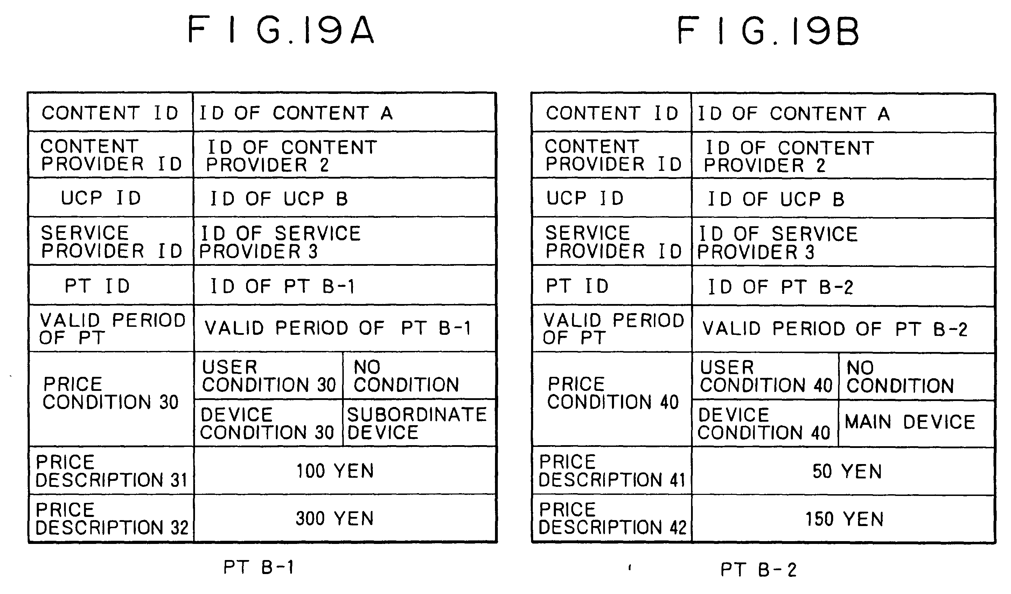

FIGS. 19A and 19B show PT B-1 and PT B-2, respectively, generated in correspondence with UCP B shown in FIG. 12B. PT B-1 includes the ID of content A, the ID of the content provider 2, the ID of UCP B, the ID of the service provider 3, the ID of PT B-1, the valid period of PT B-1, price condition 30, and two price descriptions 31 and 32.

"User Condition 30" of "Price Condition 30" of PT B-1 has "No Condition." "Device Condition 30" has information ("Subordinate Device") indicative that this device is a subordinate device. Namely, PT B-1 can be selected only when content A is used on a subordinate device.

Because "Form 21" of "Usage Description 21" of UCP B (refer to FIG. 12B) is "Pay Per Play 4," "100 yen" of "Price Description 31" of PT B-1 indicates the fee for reproducing the content 4 times. Because "Form 22" of "Usage Description 22" of UCP B is "Pay Per Copy 2," "300 yen" of "Price Description 32" indicates a fee for duplicating the content twice.

PT B-2 shown in FIG. 19B generated in correspondence with UCP B includes ID of content A, ID of content provider 2, ID of UCP B, ID of service provider, ID of PT B-2, valid period of PT B-2, price condition 40, and two price descriptions 41 and 42.

"User Condition 40" of "Price Condition 40" of PT B-2 has "No Condition." "Device Condition 40" has information ("Main Device") indicative that this device is a main device. Namely, PT B-2 is selectable only when the content A is used in the main device.

Prices shown in "Price Description 41" and "Price Description 42" of PT B-2 indicate fees for using the content A in the usage forms set in "Form 21" of "Usage Content 21" and "Form 22" of "Usage Content 22" of UCP B, respectively.

Comparison of the price description of PT B-1 (applied to a subordinate device) with the price description of PT B-2 (applied to a main device) indicates that the price description of PT B-1 is set twice as high as the price description of PT B-2. For example, "Price Description 31" of PT B-1 is "100 yen" while "Price Description 41" of PT B-2 is "50 yen." "Price Description 32" is "300 yen" while "Price Description 42" is "150 yen."

Referring to FIG. 17 again, a policy storage block 43 stores the UCP of the content supplied from the content provider 2 and supplies the received UCP to the secure container generation block 44.

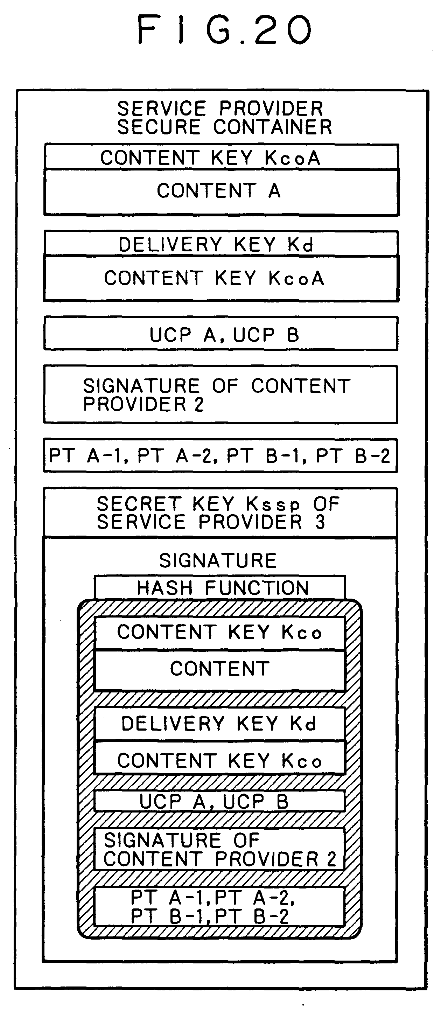

The secure container generation block 44 generates a service provider secure container composed of content A (encrypted by content key KcoA), content key KcoA (encrypted by delivery key Kd), UCP A, UCP B, signature of content provider 2, PT A-1, PT A-2, PT B-1, PT B-2, and signature of the service provider 3 for example as shown in FIG. 20.

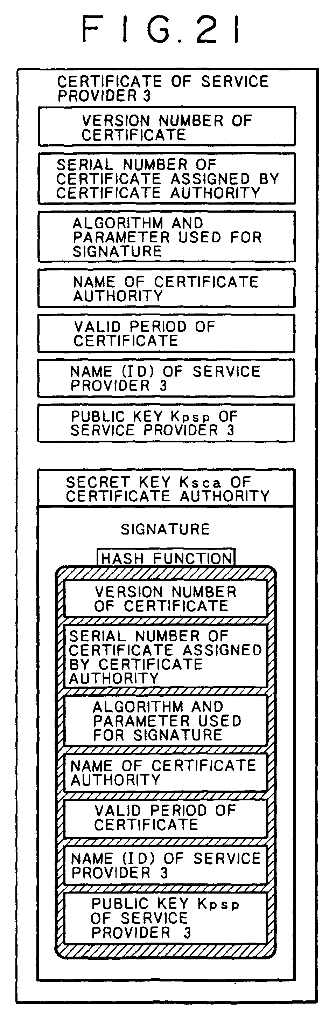

The secure container generation block 44 attaches a service provider certificate composed of certificate version number to the generated service provider secure container, certificate serial number assigned by certificate authority to service provider 3, algorithm and parameter used for the signature, name of certificate authority, the valid period of certificate, name of service provider 3, public key Kpsp of service provider 3, and signature as shown in FIG. 21 and sends the resultant secure container to the user home network 5.

Referring to FIG. 17 again, a cross-authentication block 45 cross-authenticates with the content provider 2 before receiving the content provider secure container from the content provider 2. Before sending the service provider secure container to the user home network 5, the cross-authentication block 45 cross-authenticates with the user home network 5. If the network 4 is based on satellite communication for example, the cross-authentication between the service provider 3 and the user home network 5 is not executed. In the present example, because no confidential information is included in the content provider secure container and the service provider secure container, the service provider 3 need not execute cross-authentication with the content provider 2 and the user home network 5.

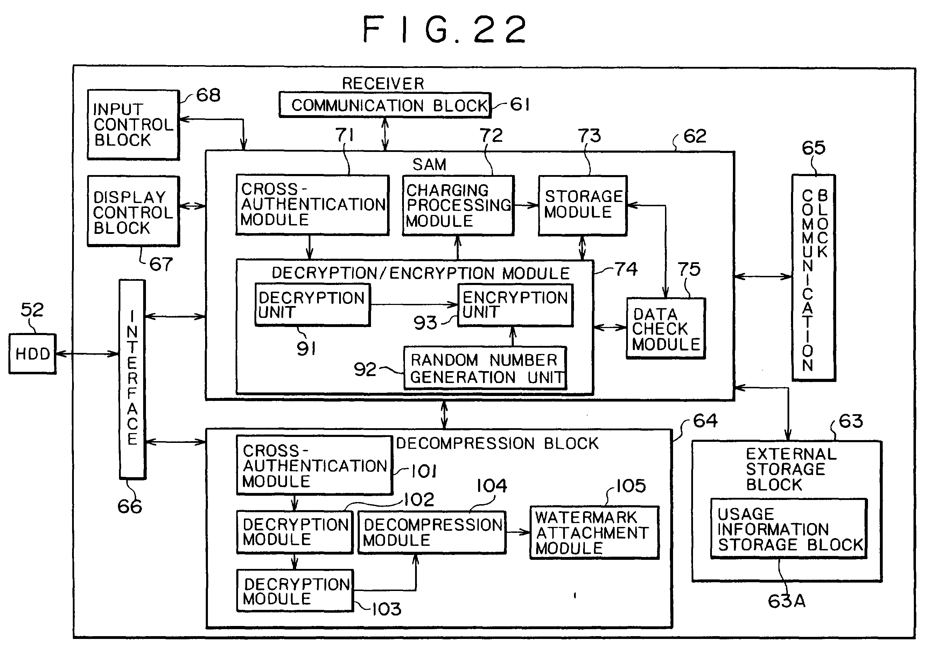

The following describes an exemplary configuration of the receiver 51 constituting the user home network 5 with reference to FIG. 22. The receiver 51 comprises a communication block 61, the SAM 62, an external storage block 63, a decompression block 64, a communication block 65, an interface 66, a display control block 67, and an input control block 68. The communication block 61 communicates with the service provider 3 through the network 4 or with the EMD service center 1 for sending and receiving predetermined information.

The SAM 62 comprises a cross-authentication module 71, an charging processing module 72, a storage module 73, a decryption/encryption module 74, and data check module 75. The SAM 62 is made up of a single-chip IC (Integrated Circuit) dedicated to cryptographic processing. This IC has a multilayer structure in which the internal memory cells are sandwiched between dummy layers such as aluminum layers and the width of the operating voltage or frequency is held narrow, thereby providing properties (tamper-proof) that make difficult unauthorized access from outside.

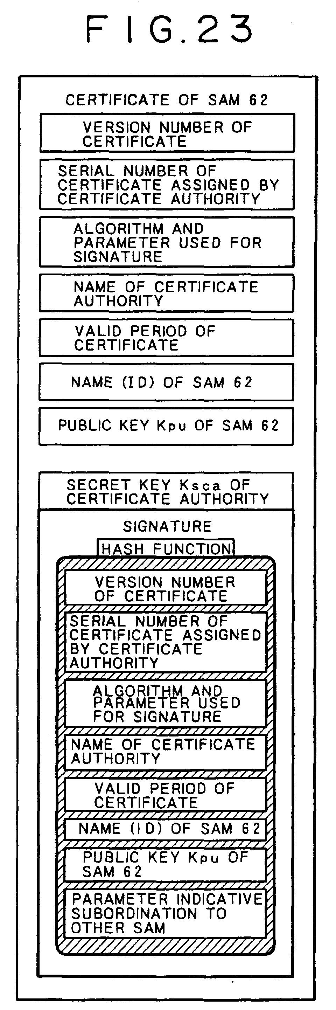

The cross-authentication module 71 of the SAM 62 sends the certificate of the SAM 62 shown in FIG. 23 stored in the storage module 73 to the other party of cross-authentication, executes cross-authentication with it, and supplies a temporary key Ktemp shared by the other party to the decryption/encryption module 74. The certificate of the SAM 62 includes the same information as that included in the certificate (refer to FIG. 16) of the content provider 2 and the certificate (refer to FIG. 21) of the service provider 3 and therefore its description will be omitted.

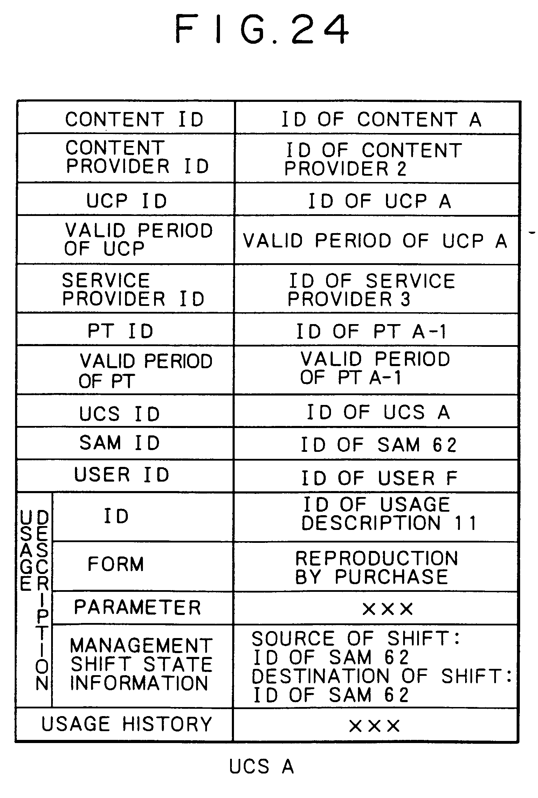

The charging processing module 72 generates UCS and information on charges on the basis of the usage description of the selected UCP. FIG. 24 shows UCS A generated on the basis of the usage description 11 of UCP A shown in FIG. 12A and PT A-1 shown in FIG. 18A. As shown in FIG. 24, UCS has predetermined information corresponding to items "Content ID," "Content Provider ID," "UCP ID," "Valid Period of UCP," "Service Provider ID," "PT ID," "Valid Period of PT," "UCS ID," " SAM ID," "User ID," "Usage Description," and "Usage History."

"Content ID," "Service Provider ID," "UCP ID," "Valid period of UCP," "Service Provider ID," "PT ID," and "Valid Period of PT" of UCS have respective items of information of PT. Namely, "Content ID" of UCS A shown in FIG. 24 has the ID of content A, "Content Provider ID" has the ID of the content provider 2, "UCP ID" has the ID of the UCP A, "Valid Period of UCP" has the valid period of UCP A, "Service Provider ID" has the ID of the service provider 3, "PT ID" has the ID of PT A-1, and "Valid Period of PT" has the valid period of PT A-1.

"UCS ID" has a predetermined ID assigned to UCS and "UCS ID" of UCS A has the ID of UCS A. "SAM ID" has the ID of the SAM of the device, "SAM ID" of UCS A has the ID of the SAM 62 of the receiver 51. "User ID" has the ID of the user of the content and "User ID" of UCS A has the ID of User F.

"Usage Description" has items "ID," "Form," "parameter," and "Management Shift Status Information." Amongst of these items, information of items corresponding to "Usage Description" of the selected UCP are set. Namely, "ID" of UCS A has information (the ID of usage description 11) set to "ID 11" of "Usage Description 11" of UCP A, "Form" has "reproduction by purchase" set in "Form 11" of "Usage Description 11", "Parameter" has information (corresponding to "reproduction by purchase") set in "Parameter 11" of "Usage Description 11.".

If "Permitted" is set to "Control Shift Permit Information" of the selected UCP (namely, control shift is permitted), the IDs of the control shift source device (the device that purchased the content) and the control shift destination device are set to "Control Shift State Information" of "Usage Description." It should be noted that, in the state where no content control shift has been made, the ID of the control-shift source device is set also as the ID of the control shift destination device. On the other hand, if "Not Permitted" is set to "Control Shift Permit Information" of the UCP, "Not Permitted" is set to "Control Shift State Information." Namely, in this case, no content control shift is executed (namely, content control shift is not permitted). Because, in "Control Shift State Information" of UCS A, "Permitted" is set to "Control Shift Permit Information 11" of "Usage Description 11" of UCP A and content A is not control-shifted at this moment, the ID of the SAM 62 is set as the ID of the control shift source device and the ID of the control shift destination device.

"Usage History" includes the history of usage form for the same content. "Usage History" of UCS A stores only information indicative of "reproduction by purchase." If content A has been used before in the receiver 51 for example, the information thereof is also stored in the "Usage History."

It should be noted that the above-mentioned UCS has "UCP Valid Period" and "PT Valid Period" but a UCS may be adapted not to have these items. Also, the above-mentioned UCS has "Content Provider ID" but a UCS may be adapted not to have this item if the ID of the UCP is unique and therefore a content provider can be identified by this ID. Further, "Service Provider ID" may not be provided if the ID of PT is unique and therefore a service provider can be identified by this ID.

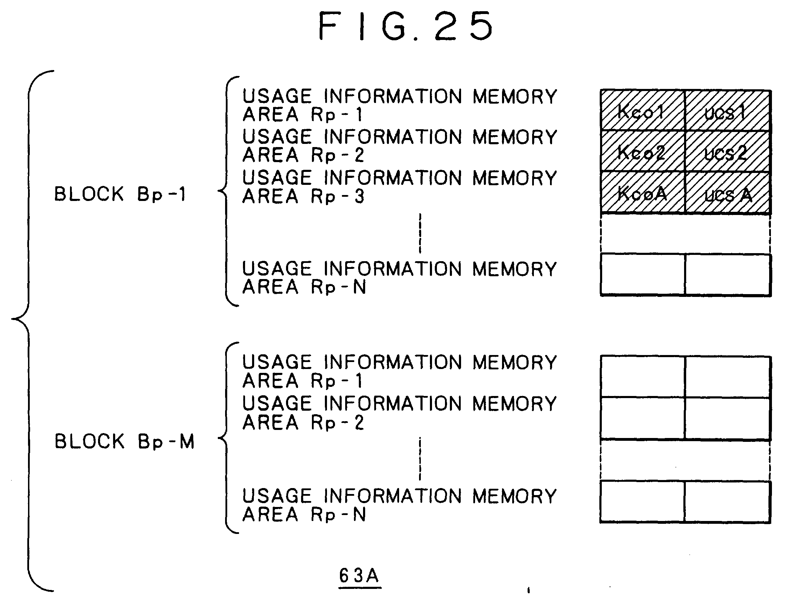

The generated UCS is sent to the external storage block 63 along with content key Kco (encrypted by save key Ksave) supplied from a decryption unit 91 of the decryption/encryption module 74 of the receiver 51. The UCS and the content key are stored in a usage information storage block 63A. The usage information storage block 63A are divided into M blocks Bp-1 through Bp-M (for example, in units of one megabytes) as shown in FIG. 25. Each block Bp is further divided into N usage information memory areas Rp-1 through Rp-N. The content key Kco (encrypted by save key Ksave) and UCS supplied from the SAM 62 are stored in a pair into the usage information memory area Rp of predetermined block Bp of the usage information storage block 63A.

In the example of FIG. 25, the pair of UCS A shown in FIG. 24 and the content key KcoA (encrypted by save key Ksave) for decrypting content A is stored in usage information memory area Rp-3 of block Bp-1. Usage information memory areas Rp-1 and Rp-2 of block Bp-1 store content keys Kco1 and Kco2 (each encrypted by save key Ksave) and UCS 1 and UCS 2 respectively. USage information memory areas Rp-4 (not shown) through Rp-N of block Bp-1 and blocks Bp-2 (not shown) through Bp-M store neither content key Kco nor UCS but store predetermined initial information indicative that they are free. It should be noted that, if the content key Kco (encrypted by save key Ksave) and UCS stored in the usage information memory area Rp need not be distinguished from each other, they are generically referred to as usage information.

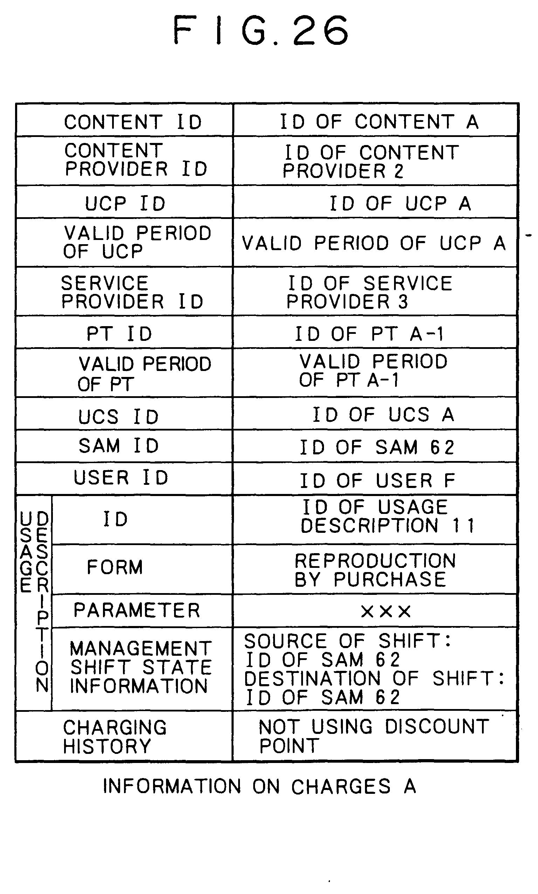

FIG. 26 shows information on charges A generated at the same time as UCS A shown in FIG. 24. The information on charges includes "Content ID," "Content Provider ID," "UCP ID," "Valid Period of UCP," "Service Provider ID," "PT ID," "Valid Period of PT," "UCS ID," "SAM ID," "User ID," "Usage description," and "Charging History" as shown in FIG. 26.

"Content ID," "Content Provider ID," "UCP ID," "Valid Period of UCP," "Service Provider ID," "PT ID," "Valid Period of PT," "UCS ID," "SAM ID," "User ID," and "Usage Description" of the information on charges have corresponding items of information of UCS. Namely, "Content ID" of information on charges A shown in FIG. 26 has the ID of content A, "Content Provider ID" has the ID of the content provider 2, "UCP ID" has the ID of UCP A, "Valid Period of UCP" has the valid period of UCP A, "Service Provider ID" has the ID of the service provider 3, "PT ID" has the ID of PT A-1, "Valid Period of PT" has the valid period of PT A-1, "UCS ID" has the ID of UCS A, "SAM ID" has the ID of SAM 62, "User ID" has the ID of user F, and "Usage Description" has the usage description of UCS A.

"Charging History" of information on charges has information indicative that discount points is used and information indicative that discount point is not used. "Charging History" of information on charges A has information indicative that discount point is not used. It should be noted that a total amount of charges is also set to "Charging History."

It should be noted that the above-mentioned information on charges has "UCP Valid Period" and "PT Valid Period" but information on charges may be adapted not to have these items. Also, the above-mentioned information on charges has "Content Provider ID" but information on charges may be adapted not to have this item if the ID of the UCP is unique and therefore a content provider can be identified by this ID. Further, "Service Provider ID" may not be provided if the ID of PT is unique and therefore a service provider can be identified by this ID.

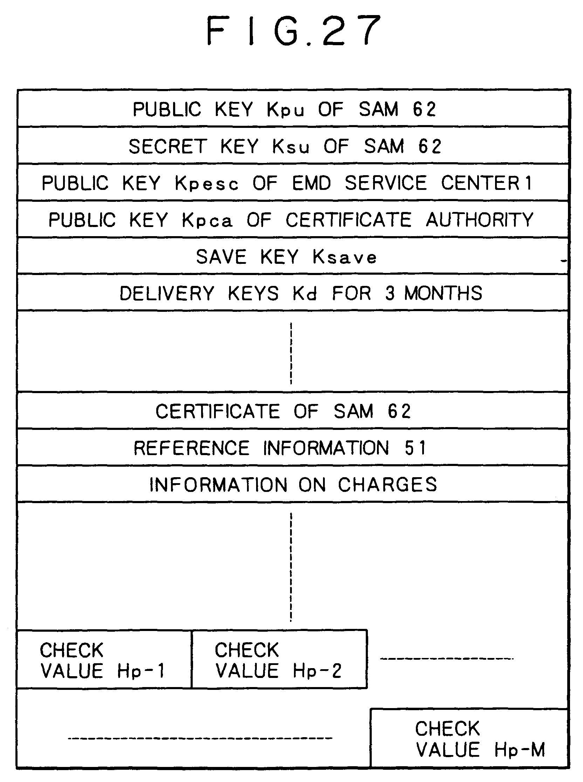

Referring to FIG. 22 again, the storage module 73 stores, as shown in FIG. 27, public key Kpu of the SAM 62, secret key Ksu of SAM 62, public key Kpesc of the EMD service center 1, public key Kpca of certificate authority, save key Ksave, delivery keys Kd for three months, the certificate of SAM 62 (refer to FIG. 23), information on charges (for example, information on charges A shown in FIG. 26), reference information 51 and M check values Hp-1 through Hp-M.

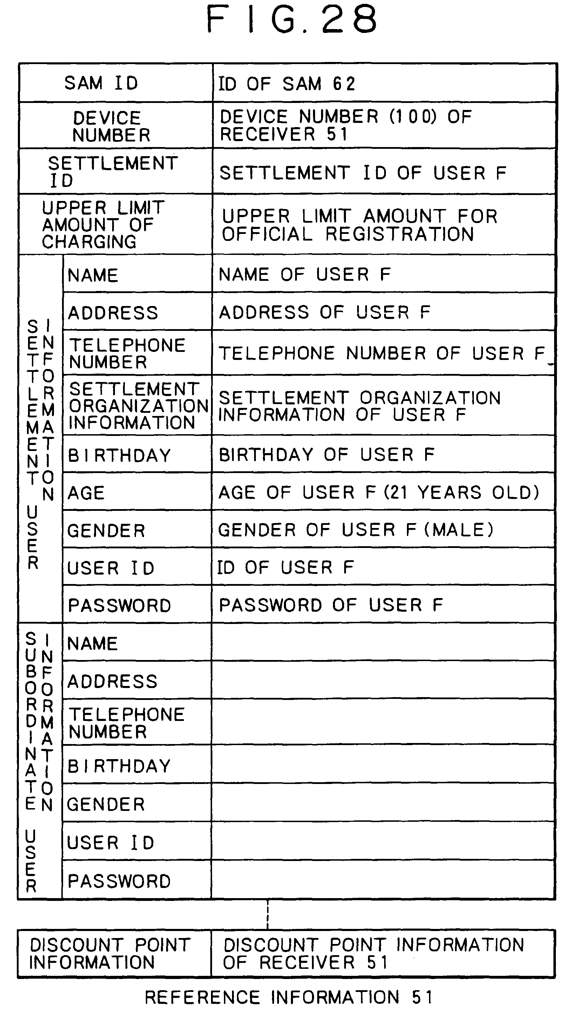

FIG. 28 shows the reference information 51 stored in the storage module 73. The reference information 51 includes predetermined information items "SAM ID," "Device Number," "Settlement ID," "Upper Limit Amount of Charging," "Settlement User Information," "Subordinate User Information," and "Discount Point Information."

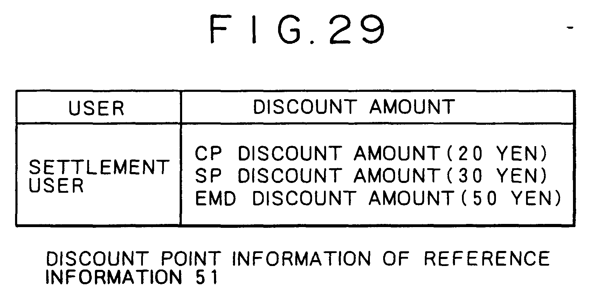

"SAM ID," "Device Number," "Settlement ID," "Upper Limit Amount of Charging," "Settlement User Information," "Subordinate User Information," and "Discount Point Information" of the reference information have corresponding items of information of the system registration information (refer to FIG. 9) managed by the user management block 18 of the EMD service center 1. Namely, the reference information 51 has the ID of the SAM 62, the device number (100) of SAM 62, the settlement ID of user F, settlement user information (general information of user F such as name, address, telephone number, settlement organization information, birthday, age, and gender) of user F, the ID of user F, the password of user F, and the discount point information (the same as shown in FIG. 10) shown in FIG. 29.

"Upper Limit Amount of Charging" has the upper limit amount of charging which is different when the device is officially or provisionally registered in the EMD system. In the present example, the receiver 51 is officially registered, so that the "Upper Limit Amount of Charging" of the reference information 51 has information ("Upper Limit Amount for Official Registration") indicative of the upper limit amount for official registration. It should be noted that the upper limit amount for official registration is greater than that for provisional registration.

The following describes the M check values Hp-1 through Hp-M shown in FIG. 27 stored in the storage module 73. Check value Hp-1 is a hash value obtained by applying hash function to the entire data stored in the block Bp-1 of the usage information storage block 63A (refer to FIG. 25) of the external storage block 63. Like check value Hp-1, check values Hp-2 through Hp-M are hash values obtained by applying hash function to the data stored in blocks Bp-2 through Bp-M.

Referring to FIG. 22 again, the decryption/encryption module 74 of the SAM 62 comprises a decryption unit 91, a random number generation unit 92, and an encryption unit 93. The decryption unit 91 decrypts the encrypted content key Kco by delivery key Kd and outputs the decrypted key to the encryption unit 93. The random number generation unit 92 generates a random number having the predetermined number of digits at the time of cross-authentication to generate temporary key Ktemp as required (for example, at the time of cross certification) and sends this key to the encryption unit 93.

The encryption unit 93 encrypts the decrypted content key Kco again by the save key Ksave stored in the storage module 73. The encrypted content key Kco is supplied to the external storage block 63. When sending the content key Kco to the decompression block 64, the encryption unit 93 encrypts the content key Kco by the temporary key Ktemp generated by the random number generation unit 92.

The data check module 75 compares check value Hp stored in the storage module 73 with the hash value of the data in the corresponding block Bp in the usage information storage block 63A of the external storage block 63 to see if the data in the block Bp are tampered. Also the data check module 75 computes check value Hp again when purchase, usage, or management shift of content is made, storing the computed check value into the storage module 73 (or updating the stored check value with the newly computed check value).

The decompression block 64 comprises a cross-authentication module 101, a decryption module 102, a decryption module 103, a decompression module 104, and a watermark attachment module 105. The cross-authentication module 101 cross-authenticates the SAM 62 and outputs the temporary key Ktemp to the decryption module 102. The decryption module 102 decrypts by use of the temporary key Ktemp the content key Kco encrypted by the temporary key Ktemp and outputs the decrypted content key to the decryption module 103. The decryption module 103 decrypts the content stored in the HDD 52 by the content key Kco and outputs the decrypted content to the decompression module 104. The decompression module 104 decompresses the decrypted content by a scheme such as ATRAC2 and outputs the decompressed content to the watermark attachment module 105. The watermark attachment module 105 attaches a predetermined watermark (electronic watermark) which is information for identifying the receiver 51 (for example, ID of SAM 62) to the content and outputs the watermarked content to a loudspeaker, not shown, reproducing music for example.

The communication block 65 communicates with the other device (not shown) of the user home network 5. The interface 66 changes signals supplied from the SAM 62 and the decompression block 64 into a predetermined format and outputs the resultant signals to the HDD 52 and signals from the HDD 52 into a predetermined format and outputs the resultant signals to the SAM 62 and the decompression block 64.

The display control block 67 manages the output to a display block (not shown). The input control block 68 manages the input from an operator block (not shown) composed of various operation management.

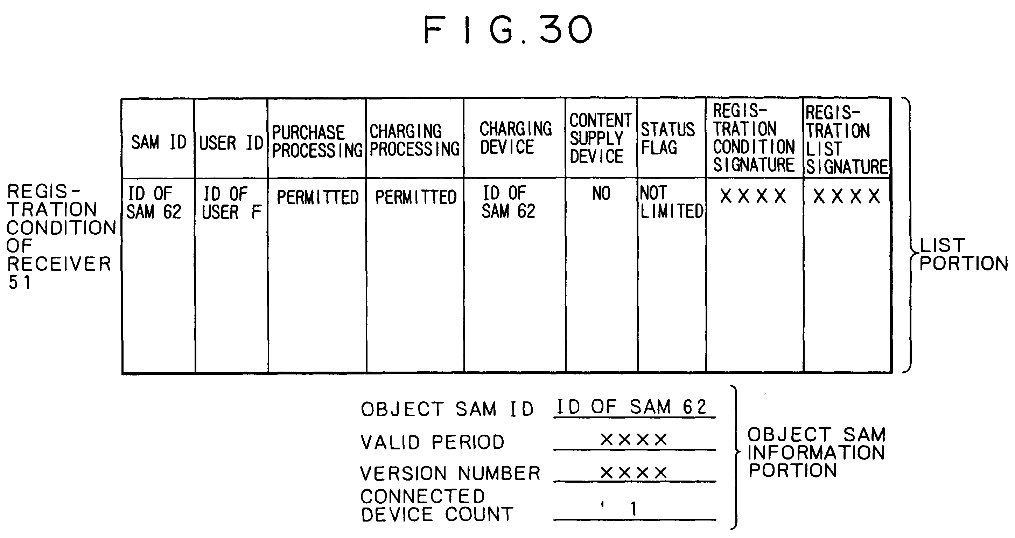

The HDD 52 stores a registration list as shown in FIG. 30 in addition to the content, UCP, and PT supplied from the service provider 3. The registration list consists of a list portion in which information is stored in table form and an object SAM information portion in which predetermined information about the device holding this list is stored.

The object SAM information portion stores, in "Object SAM ID," the SAM ID of the device holding this registration list, namely the ID of the SAM 62 of the receiver 51 in this example. The object SAM information portion also stores, in "Valid Period," the valid period of this registration list and, in "Version Number," the version number of this registration list. This portion further stores, in "Connected Device Count," the number of connected devices (including the receiver 51 itself), namely value 1 because no other devices are connected.

The list portion consists of 9 items "SAM ID," "User ID," "Purchase Processing," "Charging Processing," "Charging Device," "Content Supply Device," "Status Flag," "Registration Condition Signature," and "Registration List Signature." In the present example, predetermined information is stored in these items as the registration condition of the receiver 51.

"SAM ID" stores the ID of the SAM of the device. In this example, the ID of the SAM 62 of the receiver 51 is stored. "User ID" stores the ID of the user of the device. In this example, the ID of user F is stored.

"Purchase Processing" stores information ("Permitted" or "Not Permitted") indicative whether the processing for purchasing content can be executed or not. In this example, the receiver 51 can execute this processing, so that "Permitted" is stored.

"Charging Processing" stores information ("Permitted" or "Not Permitted") indicative whether the corresponding device can execute processing for settlement with the EMD service center 1. In this example, since user F is registered as a settlement user, the receiver 51 can execute this processing. Therefore, "Permitted" is set to "Charging Processing."

"Charging Device" stores the ID of the SAM of the device that executes the processing the charges added up in the corresponding device. In this example, since the receiver 51 (the SAM 62) can settle the charges of its own, the ID of the SAM 62 is stored.

"Content Supply Device" stores, if the corresponding device is supplied content not from the service provider 3 but from another connected device, the ID of the SAM of that connected device. In this example, since the receiver 51 receives content from the service provider 3, information ("No") indicative that there is no content supplying device.

"Status Flag" stores an operation limiting condition of the corresponding device. If there is no limitation, information ("Not Limited") indicative thereof is stored. If a certain limitation is imposed, information ("Limited") indicative thereof is stored. If the operation of the corresponding device is stopped, information ("Stop") is stored. If settlement has been unsuccessful or the credit granting processing for official registration has not been completed (namely, only provisional registration has been made), "Limited" is set to "Status Flag" of that device. In this example, in the device with "Limited" set to "Status Flag," the processing for using already purchased content is executed but the processing for purchasing new content is not executed. Namely, a certain limitation is imposed on that device. If unauthorized duplication of content for example is detected, "Stop" is set to "Status Flag," stopping the operation of that device. Thus, that device cannot receive any service from the EMD system.

In the present example, it is assumed that no limitation is imposed on the receiver 51, so that "No" is set to "Status Flag."

"Registration Condition Signature" stores the signature by the EMD service center 1 for the information stored as registration conditions into "SAM ID," "User ID," "Purchase Processing," "Charging Processing," "Charging Device," "Content Supply Device," and "Status Flag." In the present example, the signature for the registration condition of the receiver 51 is stored. To "Registration List Signature," the signature for the entire data set to the registration list is set.

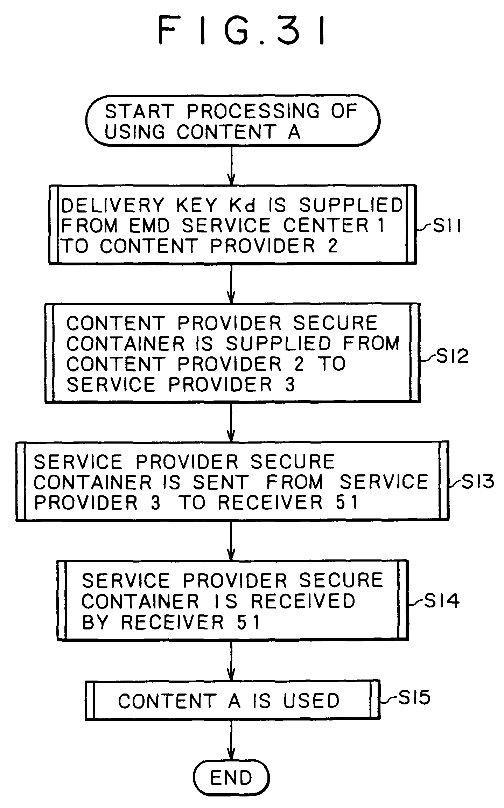

The following describes the processing of the EMD system with reference to the flowchart shown in FIG. 31 by use of an example in which content A held in the content server 2 is supplied to the receiver 51 of the user home network 5 through the service provider 3.

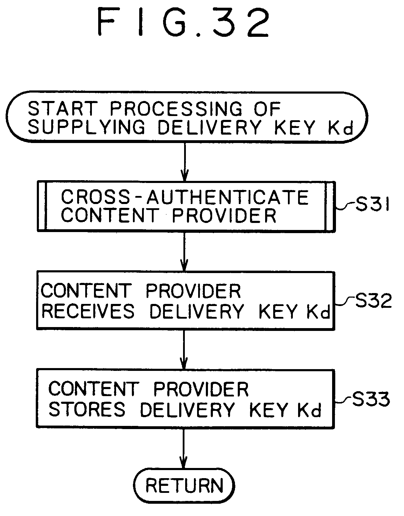

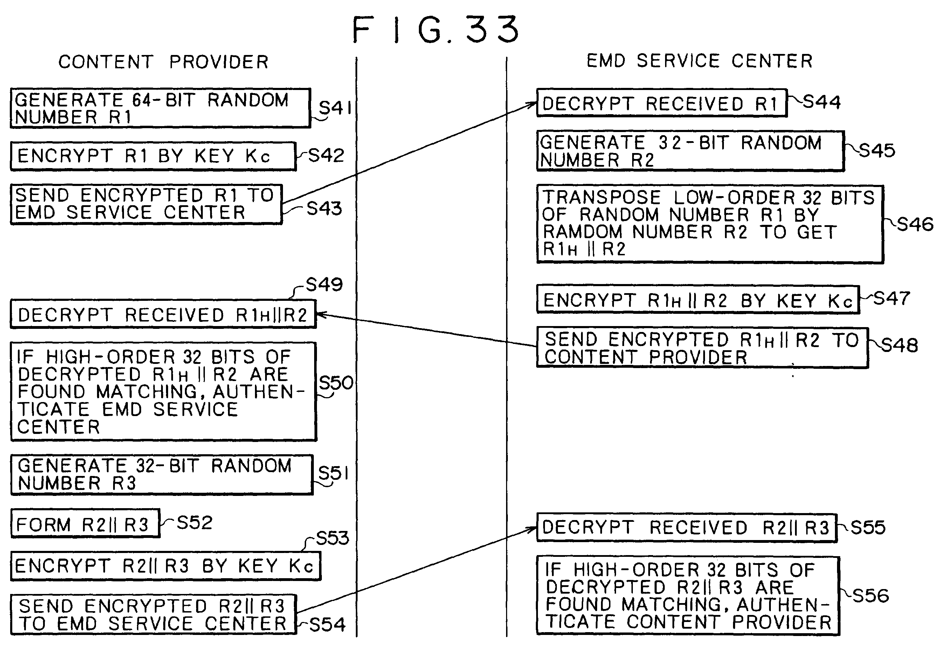

Now, in step S11, processing is executed for supplying delivery key Kd from the EMD service center 1 to the content provider 2. This processing is detailed in FIG. 32. Namely, in step S31, the cross-authentication block 17 of the EMD service center 1 cross-authenticates the cross-authentication block 39 of the content provider 2. If the content provider 2 is found a valid provider, the content provider management block 12 of the EMD service center 1 sends the delivery key Kd supplied from the key server 14 to the content provider 2. Details of the cross-authentication processing will be described later with reference to FIGS. 33 through 35.

Next, in step S32, the encryption block 36 of the content provider 2 receives the delivery key Kd sent from the EMD service center and stores it in step S33.

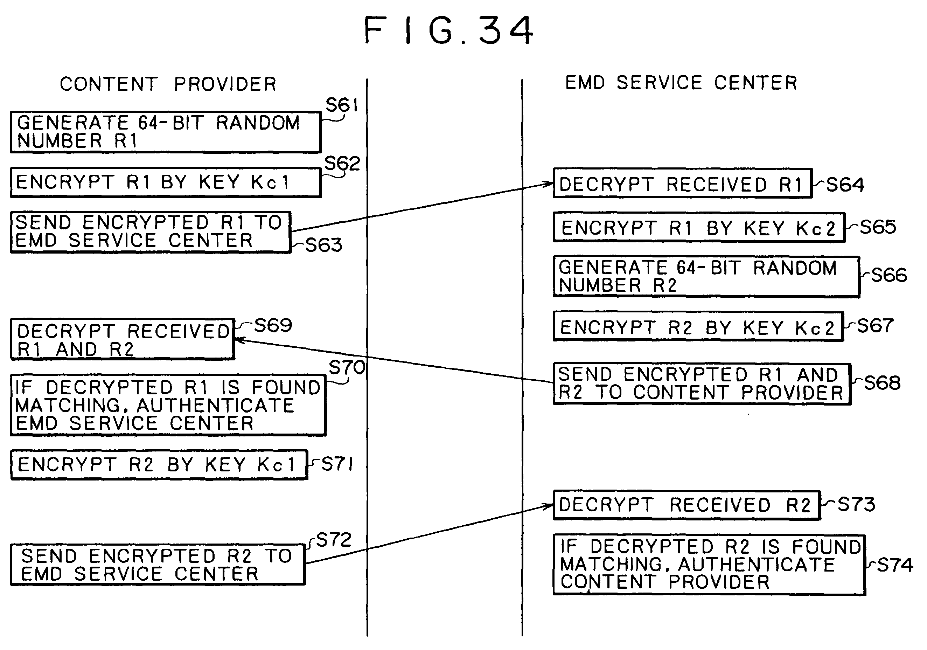

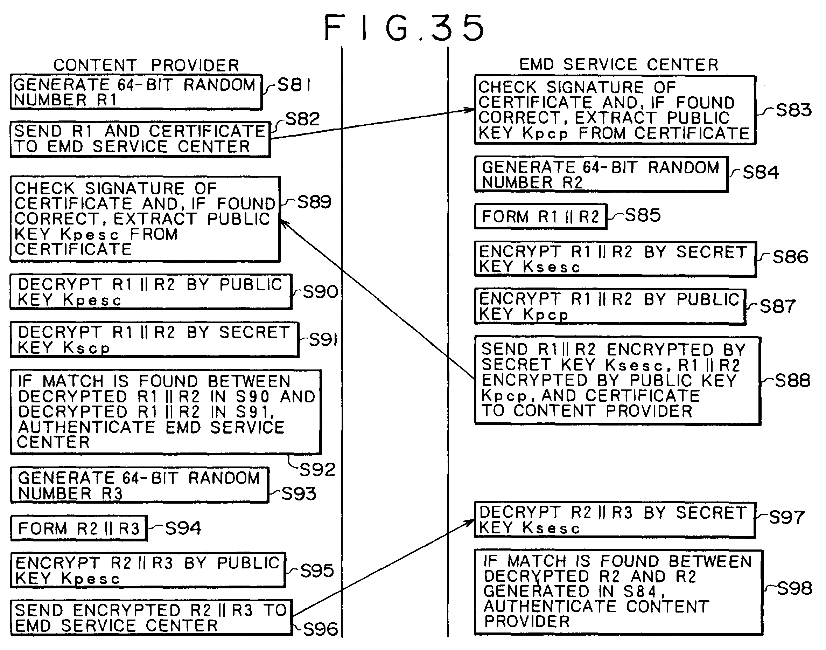

Thus, when the encryption block 36 of the content provider 2 has stored the delivery key Kd, the delivery key supply processing comes to an end and the system proceeds to step S12 shown in FIG. 31. Before describing the processing of step S12 and so on, the cross-authentication (for checking for masquerading) in step S31 of FIG. 32 will be described by use of an example in which one common key is used (refer to FIG. 33), another example in which two common keys are used (refer to FIG. 34), and still another example in which public key cryptography is used (refer to FIG. 35).

FIG. 33 shows a flowchart describing cross-authentication processing between the cross-authentication block 39 of the content provider 2 and the cross-authentication block 17 of the EMD service center 1 by use of one common key and DES which is public key cryptography. In step S41, the cross-authentication block 39 of the content provider 2 generates a 64-bit random number R1 (this may be generated by the random number generation block 35). In step S42, the cross-authentication block 39 of the content provider 2 encrypts on the basis of DES the random number R1 by the common key Kc stored in advance (this encryption may be made by the encryption block 36). In step S43, the cross-authentication block 39 sends the encrypted random number R1 to the cross-authentication block 17 of the EMD service center 1.

In step S44, the cross-authentication block 17 decrypts the received random number R1 by the stored common key Kc. In step S45, the cross-authentication block 17 generates a 32-bit random number R2. In step S46, the cross-authentication block 17 transposes the low-order 32 bits of the decrypted 64-bit random number R1 with the random number R2 to generate a coherence $R1_H||R2$. It should be noted here that $Ri_H$ denotes the high-order bits of Ri and A||B denotes a coherence between A and B (m-bit B is linked to the end of n-bit A to provide (n + m) bits). In step S47, the cross-authentication block 17 encrypts $R1_H||R2$ by the common key Kc on the basis of DES. In step S48, the cross-authentication block 17 sends the encrypted $R1_H||R2$ to the content provider 2.

In step S49, the cross-authentication block 39 of the content provider 2 decrypts the received $R1_H||R2$ by the common key Kc. In step S50, the cross-authentication block 39 checks the high-order 32 bits $R1_H$ of the decrypted $R1_H||R2$. If the high-order 32 bits $R1_H$ are found matching the high-order 32 bits $R1_H$ of the random number R1 generated in step S41, it indicates that the EMD service center 1 is a valid center. Otherwise, this processing is aborted. In the case of matching, then, in step S51, the cross-authentication block 39 generates a 32-bit random number R3. In step S52, the cross-authentication block 39 sets the received decrypted 32-bit random number R2 to the upper and the generated random number R3 to the lower to provide a coherence R2||R3. In step S53, on the basis of DES, the cross-authentication block 39 encrypts the coherence R2||R3 by the common key Kc. In step S54, the cross-authentication 39 sends the encrypted coherence R2||R3 to the cross-authentication block 17 of the EMD service center 1.

In step S55, the cross-authentication block 17 decrypts the received coherence R2||R3 by the common key Kc. In step S56, the cross-authentication block 17 checks the high-order 32 bits of the decrypted coherence R2||R3. If they are found matching the random number R2, the cross-authentication block 17 authenticates the content provider 2 as a valid provider; otherwise, the cross-authentication block 17 determines the content provider 2 to be an invalid provider and ends the processing.

FIG. 34 is a flowchart describing cross-authentication processing between the cross-authentication block 39 of the content provider 2 and the cross-authentication block 17 of the EMD service center 1 by use of two common keys Kc1 and Kc2 on the basis of DES. In step S61, the cross-authentication block 39 generates a 64-bit random number R1. In step S62, the cross-authentication block 39 encrypts the random number R1 by the stored common key Kc1 on the basis of DES. In step S63, the cross-authentication block 39 sends the encrypted random number R1 to the EMD service center 1.

In step S64, the cross-authentication block 17 of the EMD service center 1 decrypts the received random number R1 by the stored common key Kc1. In step S65, the cross-authentication block 17 encrypts the random number R1 by the stored common key Kc2. In step S66, the cross-authentication block 17 generates a 64-bit random number R2. In step S67, the cross-authentication block 17 encrypts the random number R2 by the common key Kc2. In step S68, the cross-authentication block 17 sends the encrypted random number R1 and the encrypted random number R2 to the cross-authentication block 39 of the content provider 2.

In step S69, the cross-authentication block 39 decrypts the received random number R1 and random number R2 by the stored common key Kc2. In step S70, the cross-authentication block 39 checks the decrypted random number R1. If this random number R1 is found matching the random number R1 (before encryption) generated in step S61, the cross-authentication block 39 authenticates the EMD service center 1 as a valid center; otherwise, the cross-authentication block 39 determines the EMD service center 1 to be an invalid center and ends the processing. In step S71, the cross-authentication block 39 encrypts the decrypted random number R2 by the common key Kc1. In step S72, the cross-authentication block 39 sends the encrypted random number R2 to the EMD service center 1.

In step S73, the cross-authentication block 17 decrypts the received random number R2 by the common key Kc1. In step S74, the cross-authentication block 17 checks the decrypted random number R2. If this decrypted random number R2 is found matching the random number R2 (before encryption) generated in step S66, the cross-authentication block 17 authenticates the content provider 2 as a valid provider; otherwise, the cross-authentication block 17 determines the content provider 2 to be an invalid provider and ends the processing.

FIG. 35 shows a flowchart describing cross-authentication processing between the cross-authentication block 39 of the content provider 2 and the cross-authentication block 17 of the EMD service center 1 by use of 160-bit elliptic curve cryptography of public key cryptography. In step S81, the cross-authentication block 39 generates a 64-bit random number R1. In step S82, the cross-authentication block 39 sends a certificate (obtained from certificate authority in advance) including the public key Kpcp of its own and the random number R1 to the cross-authentication block 17.

In step S83, the cross-authentication block 17 of the EMD service center 1 decrypts the signature (encrypted by the secret key Ksca of the certificate authority) of the received certificate by the previously acquired public key Kpca of the certificate authority, extracts the public key Kpcp of the content provider 2 and the hash value of the name of the content provider 2, and extracts the public key Kpcp of the content provider 2 included in the certificate as plaintext and name of the content provider 2. If the certificate is found correct, the signature of the certificate can be decrypted. The public key Kpcp and the hash value of the name of the content provider 2 obtained by the decryption match the public key Kpcp of the content provider 2 included in the certificate as plaintext and the hash value obtained by applying hash function to the name of the content provider 2, respectively. Thus, the public key Kpcp is authenticated to be the public key not tampered. If the signature cannot be decrypted or if the signature can be decrypted but there is no hash value match, it indicates that either the public key is not correct or the provider is not correct, and then the processing is ended.

When a correct authentication result has been obtained, the cross-authentication block 17 generates a 64-bit random number R2 in step S84. In step S85, the cross-authentication block 17 generates a coherence R1||R2. In step S86, the cross-authentication block 17 encrypts the coherence R1||R2 by its own secret key Ksesc. In step S87, the cross-authentication block 17 encrypts the coherence R1||R2 by the public key Kpcp of the content provider 2 obtained in step S83. In step S88, the cross-authentication block 17 sends the coherence R1||R2 encrypted by the secret key Ksesc, the coherence R1||R2 encrypted by the public key Kpcp, and the certificate (previously obtained from the certificate authority) including its own public key Kpesc to the cross-authentication block 39 of the content provider 2.

In step S89, cross-authentication block 39 decrypts the signature of the received certificate by the previously obtained public key Kpca of the certificate authority and, if the signature is found correct, extracts the public key Kpesc from the certificate. This processing is generally the same as that of step S83 and therefore its description will be skipped. In step S90, by use of the public key Kpesc obtained in step S89, the cross-authentication block 39 decrypts the coherence R1||R2 encrypted by the secret key Ksesc of the EMD service center 1. In step S91, by use of its own secret key Kscp, the cross-authentication block 39 decrypts the encrypted coherence R1||R2. In step S92, the cross-authentication block 39 compares the coherence R1||R2 decrypted in step S90 with the coherence R1||R2 decrypted in step S91. If a match is found, the cross-authentication block 39 authenticates the EMD service center 1 as a correct center; otherwise, the cross-authentication block 39 determines the center to be incorrect and ends the processing.

If a correct authentication result has been obtained, the cross-authentication block 39 generates a 64-bit random number R3 in step S93. In step S94, the cross-authentication block 39 generate a coherence R2||R3. In step S95, the cross-authentication block 39 encrypts the coherence R2||R3 by the public key Kpesc obtained in step S89. In step S96, the cross-authentication block 39 sends the encrypted coherence R2||R3 to the cross-authentication block 17 of the EMD service center 1.

In step S97, the cross-authentication block 17 decrypts the encrypted coherence R2||R3 by its own secret key Ksesc. In step S98, if the decrypted random number R2 is found matching the random number R2 (before being encrypted) generated in step S84, the cross-authentication block 17 authenticates the content provider 2 as a correct provider; otherwise, the cross-authentication block 17 determines the content provider 2 as incorrect and ends the processing.

Thus, the cross-authentication block 17 of the EMD service center 1 and the cross-authentication block 39 of the content provider 2 execute the cross-authenticating operations. The random numbers used in the cross-authentication are used for a temporary key Ktemp which is valid only for the processing that follows this cross-authentication processing.

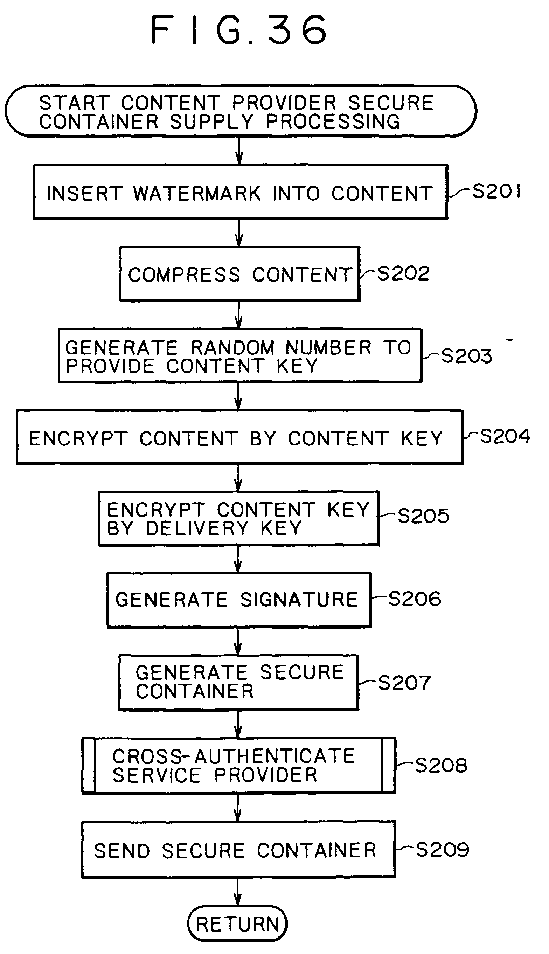

The following describes the processing of step S12 shown in FIG. 31. In step S12, processing is performed in which a content provider secure container is supplied from the content provider 2 to the service provider 3. Details of this processing will be described with reference to the flowchart of FIG. 36. To be more specific, the watermark attachment block 32 of the content provider 2 reads content A from the content server 31, inserts a predetermined watermark indicative of the content provider 2 into content A, and sends the resultant content to the compression block 33.

In step S202, the compression block 33 of the content provider 2 compresses watermarked content A by a predetermined scheme such as ATRAC2 and supplies the compressed content to the encryption block 34. In step S203, the random generation block 35 generates a random number that provides a content key KcoA and supplies it to the encryption block 34.

In step S204, the encryption block 34 of the content provider 2 encrypts the compressed watermarked content A by use of the random number (namely the content key KcoA) generated in the random generation block 35 on the basis of a predetermined cryptography such as DES. In step S205, on the basis of a predetermined cryptography such as DES, the encryption block 36 encrypts the content key KcoA by the delivery key Kd supplied from the EMD service center 1.

In step S206, the secure container generation block 38 of the content provider 2 computes a hash value by applying hash function to all of the content A (encrypted by the content key KcoA), the content key KcoA (encrypted by the delivery key Kd) and the UCP A and UCP B corresponding to the content A stored in the policy storage block 37 and encrypts the hash value with its own secret key Kscp, thereby generating a signature shown in FIG. 15.

In step S207, the secure container generation block 38 of the content provider 2 generates a content provider secure container shown in FIG. 15 which includes the content A (encrypted by the content key KcoA), the content key KcoA (encrypted by the delivery key Kd), the UCP A and UCP B, and the signature generated in the step S206.

In step 208, the cross-authentication block 39 of the content provider 2 cross-authenticates the cross-authentication block 45 of the service provider 3. This authentication processing is generally the same as that described with reference to FIGS. 33 through 35 and therefore its description will be skipped. In step S209, the secure container generation block 38 of the content provider 2 attaches the certificate previously issued by the certificate authority to the content provider secure container generated in step 207 and sends them to the service provider 3.

Thus, when the content provider secure container has been supplied to the service provider 3, the content provider secure container supply processing comes to an end and the system proceeds to step S13 shown in FIG. 31.

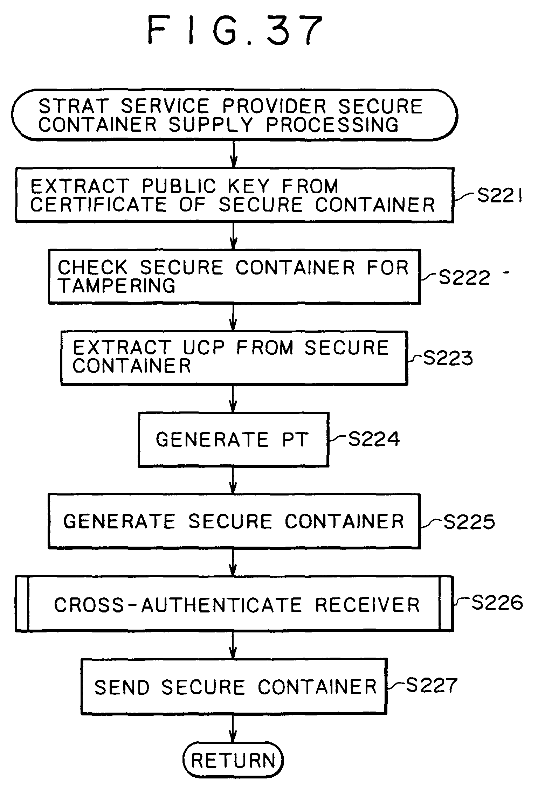

In step S13, the service provider secure container is supplied from the service provider 3 to the user home network 5 (or the receiver 51). Details of this processing will be described with reference to the flowchart shown in FIG. 37. To be more specific, in step S221, the value attachment block 42 of the service provider 3 checks the signature included in the certificate attached to the content provider secure container supplied from the content provider 2. If the certificate is found untampered, the value attachment block 42 takes the public key Kpcp of the content provider 2 out of the certificate. The signature of the certificate is checked in the same manner as in the processing of step S83 shown in FIG. 35 and therefore the description of this checking will be skipped.

In step S222, the value attachment block 42 of the service provider decrypts the signature of the content provider secure container supplied from the content provider 2 by the public key Kpcp thereof. The value attachment block 42 matches the obtained hash value against the hash value obtained by applying hash function to all of the content A (encrypted by the content key KcoA), the content key KcoA (encrypted by the deliver key Kd), and the UCP A and UCP B, thereby checking the content provider secure container for tampering. If a mismatch is found (or the secure container is found tampered), this processing is aborted. In this example, however, it is assumed that no tampering has been found in the secure container and therefore the system proceeds to step S223.

In step S223, the value attachment block 42 takes the content A (encrypted by the content key KcoA), the content key KcoA (encrypted by the delivery key Kd), and the signature out of the content provider secure container and sends them to the content server 41. The content server 41 receives and stores them. The value attachment block 42 also takes the UCP A and the UCP B out of the secure container and supplies them to the secure container generation block 44.

In step 224, the value attachment block 42 generates PT A-1 and PT A-2 and PT B-1 and PT B-2 on the basis of the extracted UCP A and UCP B and supplies the generated PTs to the secure container generation block 44 of the service provider 3.

In step S225, the secure container generation block 44 generates the service provider secure container shown in FIG. 20 from the content A (encrypted by the content key KcoA) and the content key KcoA (encrypted by the delivery key Kd) read from the content server 41 and the UCP A, UCP B, the signature of the content provider 2, the PT A-1, A-2, B-1, and B-2, and their signature.

In step S226, the cross-authentication block 45 of the service provider 3 cross-authenticates the cross-authentication block 71 of the receiver 51. This cross-authentication processing is generally the same as the case described with reference to FIGS. 33 through 35 and therefore the description will be skipped.

In step S227, the secure container generation block 44 attaches the certificate of the service provider 3 to the service provider secure container generated in step S225 and sends the resultant secure container to the receiver 51 of the user home network 5.

Thus, when the service provider secure container has been supplied from the service provider 3 to the receiver 51, the service provider secure container supply processing comes to an end and the system proceeds to step S14 shown in FIG. 31.

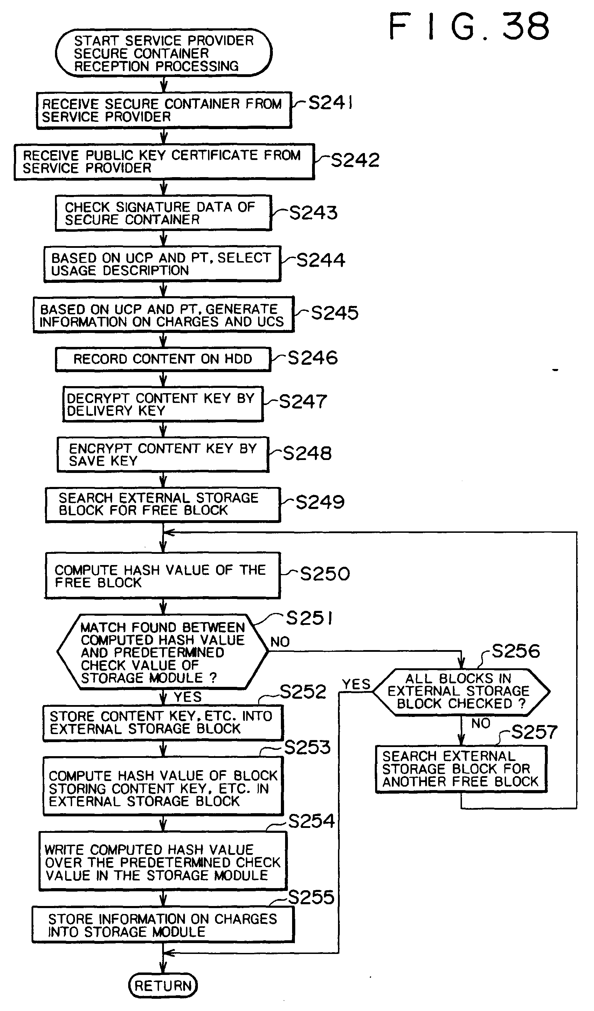

In step S14, the service provider secure container outputted from the service provider 3 is received by the receiver 51 of the user home network 5. Details of this processing will be described with reference to the flowchart shown in FIG. 38. To be more specific, in step S241, the cross-authentication module 71 of the receiver 51 cross-authenticates the cross-authentication block 45 of the service provider 3 through the communication block 61. When this cross-authentication is successful, the communication block 61 receives the service provider secure container (refer to FIG. 20) from the cross-authenticated service provider 3. If this cross-authentication is unsuccessful, this processing is aborted. In this example, it is assumed that the cross-authentication is successful and the system proceeds to step S242.

In step S242, the communication block 61 of the receiver 51 receives a public key certificate from the service provider 3 cross-authenticated in step S241.

In step S243, the decryption/encryption module 74 of the receiver 51 checks the signature included in the service provider secure container received in step S241 for tampering. If the secure container is found tampered, this processing is aborted. In this example, it is assumed that the service container is found untampered and the system proceeds to step S244.

In step S244, the UCP and the PT and their usage and price descriptions are selected. To be specific, in the reference information 51 (refer to FIG. 28) stored in the storage module 73 of the receiver 51, the UCP satisfying the usage condition and the PT satisfying the price condition are selected. In the present example, in "Discount Point Information" of the reference information 51 of the receiver 51, the user discount amount is 100 (= 20 + 30 + 50) yen as shown in FIG. 29. Namely, according to this reference information 51, of UCP A and UCP B set in correspondence with content A, UCP A (refer to FIG. 12A) in which "User Condition 10" of "Usage Condition 10" is "100 yen or more." Further, "Settlement User Information" of the reference information 51 indicates that user F is male, so that the condition set to "Price Condition 10" of PT A-1 (refer to FIG. 18A) is satisfied. Consequently, of PT A-1 and PT A-2 generated in correspondence with UCP A, PT A-1 is selected.

Next, the descriptions of the UCP A and PT A-1 thus selected are displayed on a display block (not shown) through the display control block 67. Referring to the displayed descriptions (to examine usage forms to be used and their prices, for example), user F performs an operation on an operator block (not shown) for selecting a predetermined "Usage Description" of the UCP A. The input control block 68 outputs the ID of the selected usage description of the UCP A and the ID of the PT A-1 to the SAM 62, input from the operator block. In the present example, it is assumed that usage description 11 of the UCP A (price description 11 of PT A-1) has been selected.

At the same time, the discount point information in the reference information 51 stored in the storage module 73 (if there is no discount point, information thereof) is displayed on the display block. Referring to the displayed information, user F performs an operation on the operator block for setting the decision whether to use discount point or not. The input control block 68 outputs the decision to the SAM 62. In the present example, it is assumed that no discount point is used.

In step S245, the charging processing module 72 of the SAM 62 of the receiver 51 generates the UCS A and information on charges A ("Charging History" indicates that no discount point is used) on the basis of "Usage Description 11" of UCP A and the PT A-1 selected in step S244. Namely, in this case, the content A is purchased at a price of 2,000 yen and reproduced.

In step S246, the content A (encrypted by the content key KcoA), the UCP A-1, the PT A-1 and PT A-2, and the signature of the content provider 2 are taken out of the service provider secure container (refer to FIG. 20) and stored in the HDD 52. In step S247, the decryption unit 91 of the decryption/encryption module 74 decrypts the content key KcoA (encrypted by the delivery key Kd) included in the service provider secure container by the delivery key Kd stored in the storage module 73.

In step S248, the encryption unit 93 of the decryption/encryption module 74 encrypts the content key KcoA decrypted in step S247 by the save key Ksave stored in the storage module 73.

In step S249, the data check module 75 of the receiver 51 detects the block Bp of the usage information storage block 63A (refer to FIG. 25) of the external storage block 63 in which the content key KcoA encrypted by the save key Ksave in step S248 and the UCS A generated in step S245 are stored in a pair. In the present example, the block Bp-1 of the usage information storage block 63A is detected. It should be noted that, in the usage information storage block 63A shown in FIG. 25, the content key KcoA and the UCS A are shown as stored in the usage information memory area Rp-3 of the block Bp-1, but, at this point of time, these are not stored in the Rp-3, which stores instead predetermined initial information indicative that the Rp-3 is free.

In step S250, the data check module 75 of the receiver 51 obtains a hash value by applying hash function to the data (all data stored in the usage information memory areas Rp-1 through Rp-N) in the block Bp-1 detected in step S249. Next, in step S251, the data check module 75 compares the hash value obtained in step S250 with the check value Hp-1 (refer to FIG. 27) corresponding to the block Bp-1 stored in the storage module 73. If a match is found, it indicates that the data in the block Bp-1 are not tampered, so that the system proceeds to step S252.

In step S252, the SAM 62 of the receiver 51 stores the usage information (the content key KcoA encrypted by the save key Ksave in step 248 and the UCS A generated in step S245) into the usage information memory area Rp-3 of the block Bp-1 of the external storage block 63.

In step S253, the data check module 75 of the receiver 51 computes a hash value by applying hash function to all data stored in the block Bp-1 of the usage information storage block 63A to which the usage information memory area Rp-3 in which the usage information was stored in step S252. In step S254, the data check module 75 writes the obtained hash value over the check value Hp-1 stored in the storage module 73. In step S255, the charging processing module 72 stores the information on charges A generated in step S245 into the storage module 73, upon which the processing comes to an end.

If, in step S251, no match is found between the computed hash value and the check value Hp-1, it indicates that the data in the block Bp-1 are tampered. The system proceeds to step S256, in which the data check module 75 determines whether all blocks Bp of the usage information storage block 63A of the external storage block 63 have been checked. If all blocks Bp are found not checked, then, in step S257, the data check module 75 checks the usage information storage block 63A for other free blocks Bp. Then, back to step S250, the processing is repeated.

In step S256, if all blocks Bp of the usage information storage block 63A are found checked, it indicates that there is no block Bp (usage information memory area Rp) that can store usage information, upon which the service provider secure container receiving processing comes to an end.

Thus, when the service provider secure container has been received by the receiver 51, the processing comes to an end and the system proceeds to step S15 shown in FIG. 31.

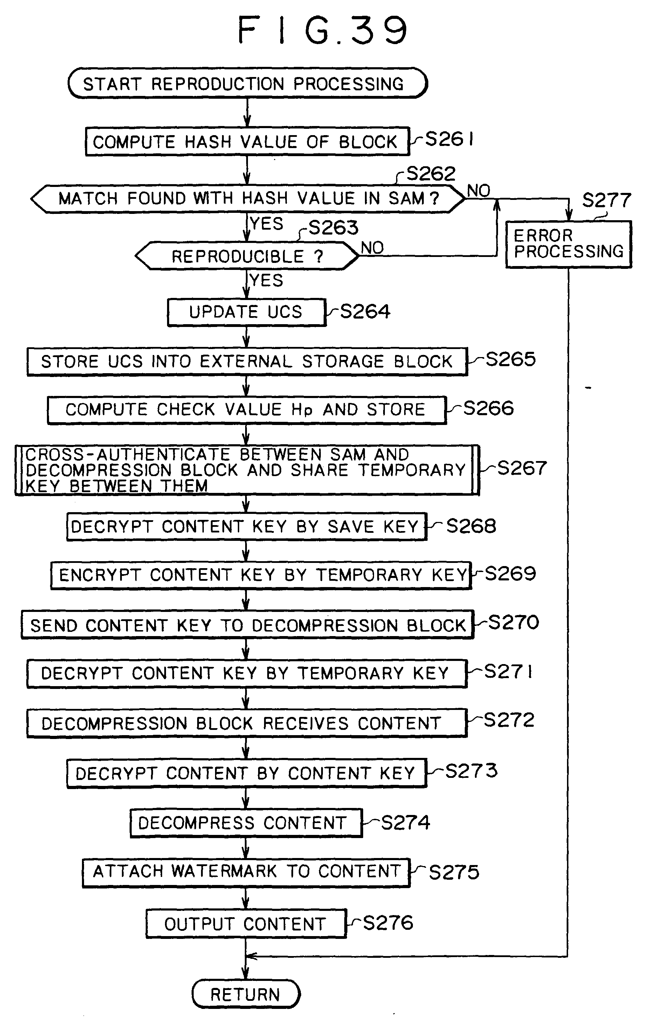

In step S15, the supplied content A is used in the receiver 51. In this case, according to the usage description 11 of the selected UCP A, the content A is used by reproduction. Therefore, the following describes the processing of reproducing the content A with reference to the flowchart shown in FIG. 39.

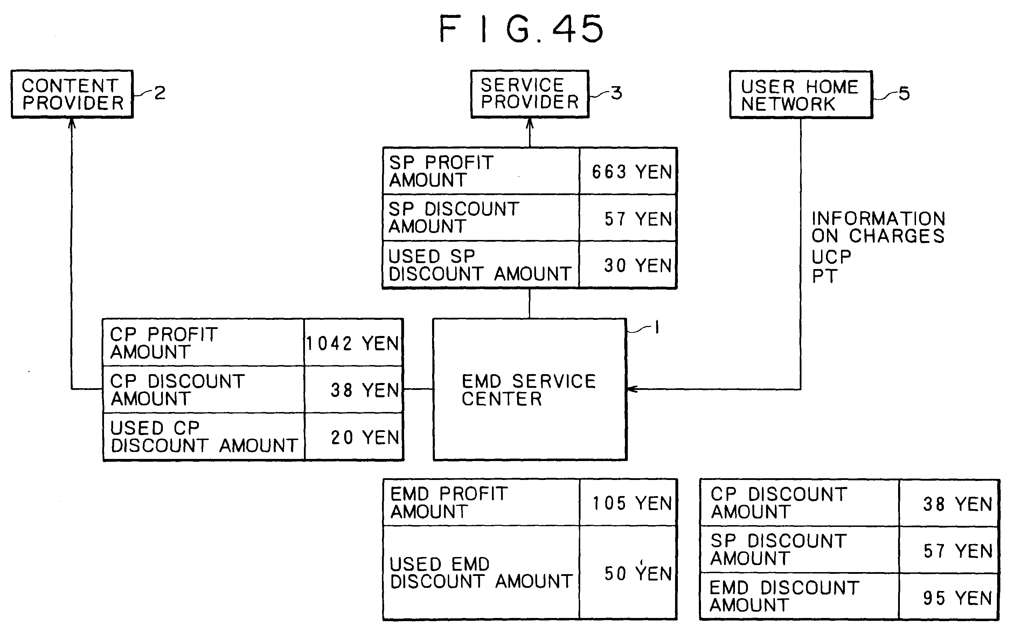

In step S261, the data check module 75 of the receiver 51 computes a hash value by applying hash function to the data stored in step S252 of FIG. 38 in the block Bp-1 of the usage information storage block 63A to which the usage information memory area Rp-3 storing the content key KcoA (encrypted by the save key Ksave) and the UCS A belongs, in step S252 shown in FIG. 45.

In step S262, the data check module 75 compares the hash value computed in step S261 and the hash value (check value Hp-1) computed in step S253 of FIG. 38 and stored in the storage module 73 in step S254. If a match is found, it indicates that the data in the block Bp-1 are not tampered. The system proceeds to step S263.

In step S263, it is determined, on the basis of the information indicated by "Parameter" of "Usage Description" of the UCS A (refer to FIG. 24), whether the content A is usable or not. For example, in the UCS in which "Form" of "Usage Description" is "time-limited reproduction," its "Parameter" stores the start and end periods (or times) of the reproduction, so that the current time is checked whether it is inside the time limit range. If the current time is found inside the time limit range, it is determined that corresponding content is usable; otherwise, the content is unusable. In the UCS in which "Form" of "Usage Description" is the reproduction (or duplication) only by a predetermined number of times, its "Parameter" stores the remaining number of times the content can be used. In this case, if the number of times set to "Parameter" is not zero, it is determined that the corresponding content is usable. If the number of times is zero, it is determined that the corresponding content is unusable.

"Form" of "Usage Description" of the UCS A is "reproduction by purchase," so that, in this case, the content A is purchased and reproduced without condition. Namely, "Parameter" of "Usage Description" of the UCS A stores the information indicative of usability of content. Hence, in the present example, it is determined in step S263, that the content A is usable and the system proceeds to step S264.

In step S264, the charging processing module 72 of the receiver 51 updates the UCS A. Although information to be updated is not included in the UCS A, if "Form" of "Usage Description" is the reproduction only by the predetermined number of times, the reproduction count set to the "Parameter" is decremented by one.

Next, in step S265, the receiver 51 stores the UCS A (actually not updated) updated in step S264 into the usage information memory area Rp-3 of the block Bp-1 of the usage information storage block 63A. In step S266, the data check module 75 computes a hash value by applying hash function to the data in the block Bp-1 of the usage information storage block 63A in which the UCS A was stored in step S265 and writes the computed hash value over the check value Hp-1 stored in the storage module 73.

In step S267, the cross-authentication module 71 of the SAM 62 cross-authenticates the cross-authentication module 101 of the decompression block 64 and the SAM 62 and the decompression block 64 share temporary key Ktemp. This cross-authentication processing is generally the same as described with reference to FIGS. 33 through 35 and therefore its description will be skipped. Random numbers R1, R2, R3 or their combination used for cross-authentication is used as the temporary key Ktemp.

In step S268, the decryption unit 91 of the decryption/encryption module 74 decrypts the content key KcoA (encrypted by the save Ksave) stored in the block Bp-1 (the usage information memory area Rp-3) of the usage information storage block 63A in step S252 of FIG. 38 by the save key Ksave stored in the storage module 73.

Next, in step S269, the encryption unit 93 of the decryption/encryption module 74 encrypts the decrypted content key KcoA by temporary key Ktemp. In step S270, the SAM 62 sends the content key KcoA encrypted by temporary key Ktemp to the decompression block 64.

In step S271, the decryption module 102 of the decompression block 64 decrypts the content key KcoA by temporary key Ktemp. In step S272, the decompression block 64 receives the content A (encrypted by the content key Kco) stored in the HDD 52. In step S273, the decryption module 103 of the decompression block 64 decrypts the content A (encrypted by the content key Kco) by the content key KcoA.

In step S274, the decompression module 104 of the decompression block 64 decompresses the decrypted content A by a predetermined scheme such as ATRAC2. In step S275, the watermark attachment module 105 of the decompression block 64 inserts a predetermined watermark identifying the receiver 51 into the decompressed content A. In step S276, the content A is outputted to a speaker, not shown, for example, upon which the content reproduction processing comes to an end.

In step S262, if the hash value computed in step S261 is found not matching the check value Hp-1 stored in the storage module 73 of the receiver 51 or, if the content is found unusable, then the SAM 62 executes, in step S263, a predetermined error handling operation such as displaying an error message on a display block not shown through the display control block 67, upon which the content reproduction processing is aborted.

Thus, when the content A is reproduced (or used) in the receiver 51, the content reproduction processing as well as the content A usage processing shown in FIG. 31 come to an end.

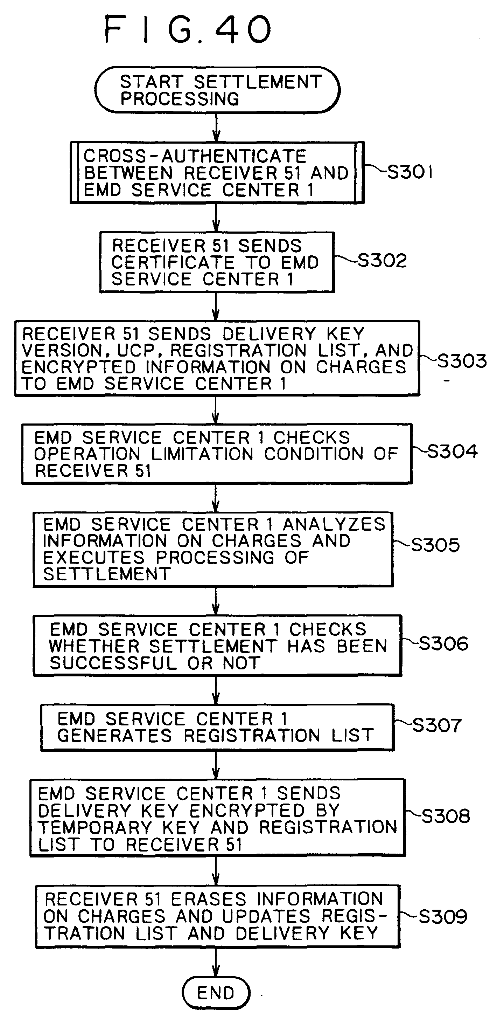

The following describes the processing of settling the charges of the receiver 51 with reference to the flowchart shown in FIG. 40. It should be noted that this settlement processing starts when added-up charges exceeds a predetermined upper limit amount (namely, the upper limit amount for official or provisional registration) or the version of delivery key Kd has become obsolete and therefore cannot decrypt the content key Kco (encrypted by delivery key Kd) in step S247 of FIG. 38 for example (namely, the service provider secure container cannot be received).

To be specific, in step S301, cross-authentication is executed between the receiver 51 and the EMD service center 1. This cross-certification is generally the same as described with reference to FIGS. 33 through 35 and therefore its description will be skipped.

Next, in step S302, the SAM 62 of the receiver 51 sends a certificate to the user management block 18 of the EMD service center 1. In step S303, the SAM 62 of the receiver 51 encrypts the information on charges stored in the storage module 73 by the temporary key Ktemp shared by the EMD service center 1 in step S301. Then, the SAM 62 sends the encrypted information on charges to the EMD service center 1 along with the version of the delivery key Kd, the corresponding UCP and PT stored in the HDD 52, and the registration list.

In step S304, the user management block 18 of the EMD service center 1 receives and decrypts the information supplied from the receiver 51 in step S303 and checks to see if there is any unauthorized action in the receiver 51 that sets "stop" to "Status Flag" of the registration list.

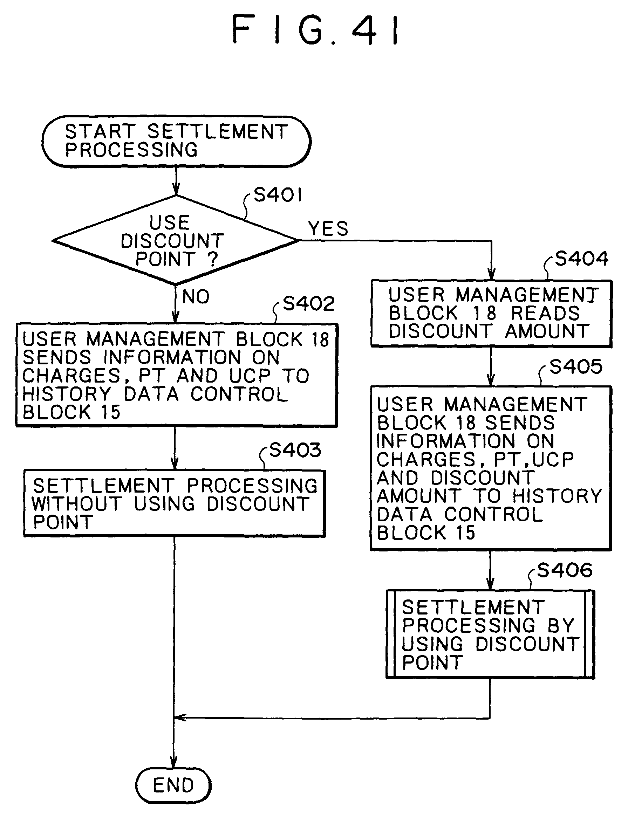

In step S305, the charging block 19 of the EMD service center 1 analyzes the information on charges received in step S303 to execute settlement processing. Details of this processing will be described with reference to the flowchart shown in FIG. 41. Next, in step S306, the user management block 18 determines whether the charges has been successful or not by the processing executed in step S305.

Next, in step S307, on the basis of the confirmation made in step S304 and the confirmation made in step S306, the user management block 18 sets the registration condition of the receiver 51 and attaches a signature thereto to form the registration list of the receiver 51.

For example, if an unauthorized action is found in step S304, "stop" is set to "Status Flag" of the registration list. In this case, the further processing is all stopped. Namely, the receiver 51 cannot receive the services of the EMD system. If the settlement is found unsuccessful in step S306, "limited" is set to "Status Flag" of the registration list. In this case, the receiver 51 can reproduce the already purchased content but cannot purchase new content.

Next, in step S308, the user management block 18 encrypts the delivery key Kd of the latest version (the delivery keys Kd of the latest version for 3 months) by temporary key Ktemp and sends the encrypted keys and the registration list generated in step S307 to the receiver 51.

In step S309, the SAM 62 receives the delivery keys Kd and the registration list through the communication block 61, decrypts them, and stores the decrypted delivery keys and registration list into the storage module 73. At this moment, the information on charges stored in the storage module 73 is deleted and the registration list and the delivery keys Kd are updated by new ones.

The following describes details of the settlement processing shown in step S305 of FIG. 40 with reference to the flowchart of FIG. 41.

In step S401, the user management block 18 of the EMD service center 1 refers to "Charging History" of the information on charges to determine whether "Use Discount Point" is set. If "Use Discount Point" is found not set (namely, "Not Use Discount Point" is set), the system proceeds to step S402.

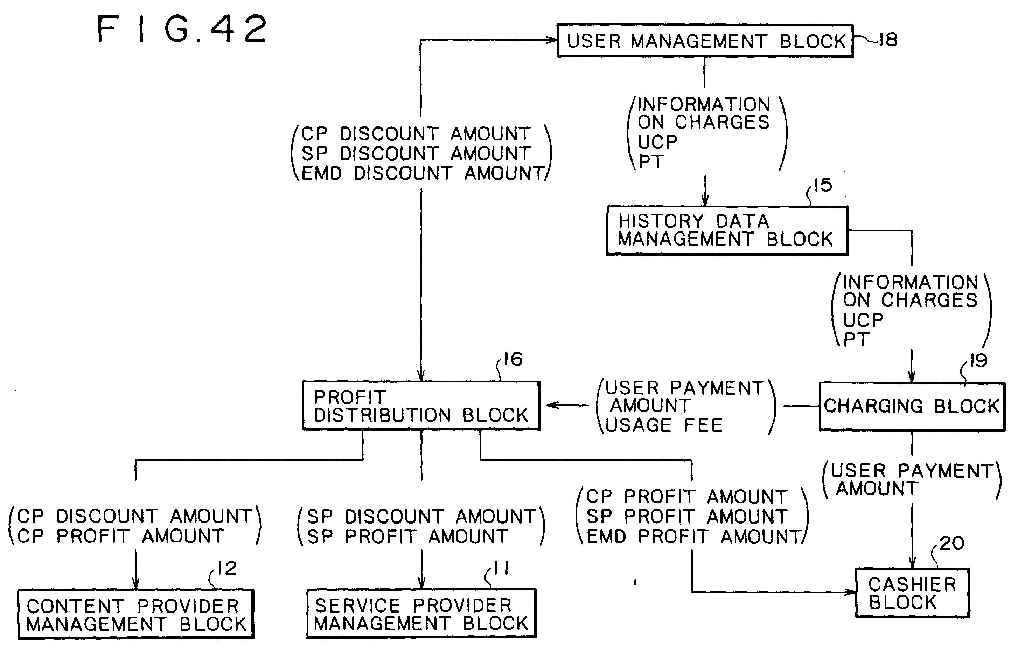

In step S402, the user management block 18 outputs the information on charges, UCP, and PT received in step S303 to the history data management block 15. In step S403, the charging processing that does not use discount point is executed. The following describes details of this processing with reference to FIG. 42.

The history data management block 15 holds the information on charges, PT, and UCP supplied from the user management block 18 and supplies them to the charging block 19. The charging block 19 detects a content usage fee from the received items of information and sends the detected content usage fee and a user payment amount equal thereto to the profit distribution block 16 and only the user payment amount to the cashier block 20.

To be more specific, from the ID set to "UCP ID" of the information on charges, the charging block 19 determines the UCP corresponding to the charges of this time and recognizes that this UCP has been supplied from the history data management block 15. From the ID set to "PT ID" of the information on charges, the charging block 19 determines the PT corresponding to the charges of this time and recognizes that this PT has been supplied from the history data management block 15. When the UCP and the PT are found supplied, the charging block 19 determines "Price Description" of the PT corresponding to "Usage Description" of the UCP from the ID set to "ID" of "Usage Description" and read the content usage fee set to this "Price Description." Thus, the content usage fee is detected and the user payment amount is made equal to the detected content usage fee. In the present example, the content usage fee is "1000 yen" set to "Price Description 11" of PT A-1 and therefore the user payment amount is equal thereto.

At the same time, the charging block 19 notifies the profit distribution block 16 that no discount point has been used.

The profit distribution block 16 substitutes the user payment amount supplied from the charging block 19 into equation (9) to compute a user discount amount. The profit distribution block 16 substitutes the computed user discount amount into equations (7), (8), and (11) to compute a CP discount amount, an SP discount amount, and an EMD discount amount respectively. For example, if the user payment amount is 1000 yen as in the present example, the user discount amount is 100 (= $1000 \times 0.1$) yen, the CP discount amount is 20 (= $100 \times 0.2$) yen, the SP discount amount is 30 (= $100 \times 0.3$) yen, and the EMD discount amount is 50 (= $100 \times 0.5$) yen.

The profit distribution block 16 supplies the computed CP discount amount (20 yen), SP discount amount (30 yen), and EMD discount amount (50 yen) to the user management block 18. The user management block 18 stores these pieces of discount information into "Discount Point Information" of the system registration information. Consequently, the discount amounts as shown in FIG. 10 are set to "Discount Point Information" of the system registration information. The profit distribution block 16 sends the computed CP discount amount (20 yen) to the content provider management block 12 and the computed SP discount amount (30 yen) to the service provider management block 11.

Next, the profit distribution block 16 computes a CP profit amount and an SP profit amount. To be more specific, the profit distribution block 16 substitutes the content usage fee (1000 yen) supplied from the charging block 19 into equations (3) and (4) to compute a CP share amount and an SP share amount. Then, the profit distribution block 16 substitutes the computed CP share amount into equation (5) and the computed SP share amount into equation (6) to compute a CP commission and an SP commission. In the present example, the CP share amount is 600 (= $1000 \times 0.6$) yen and the SP share amount is 400 (= $1000 \times 0.4$) yen. Consequently, the CP commission is 60 (= $600 \times 0.1$) yen and the SP commission is 40 (= $400 \times 0.1$) yen.

The profit distribution block 16 substitutes the computed CP share amount (600 yen), CP commission (60 yen), and CP discount amount (20 yen) into equation (1) to compute a CP profit amount (520 yen). At the same time, the profit distribution block 16 substitutes the computed SP share amount (400 yen), SP commission (40 yen), and SP discount amount (30 yen) into equation (2) to compute an SP profit amount (330 yen).

Next, the profit distribution block 16 substitutes the computed CP commission (60 yen), SP commission (40 yen), and EMD discount amount (50 yen) into equation (10) to compute an EMD profit amount (50 yen).

The profit distribution block 16 sends the computed CP profit amount (520 yen) to the content provider management block 12 and the computed SP profit amount (330 yen) to the service provider management block 11. At the same time, the profit distribution block 16 sends the computed CP profit amount (520 yen), the SP profit amount (330 yen), and the EMD profit amount (50 yen) to the cashier block 20.

The profit distribution block 16 also notifies the content provider management block 12 and the service provider management block 11 of the use of no discount point which has been notified from the charging block 19.

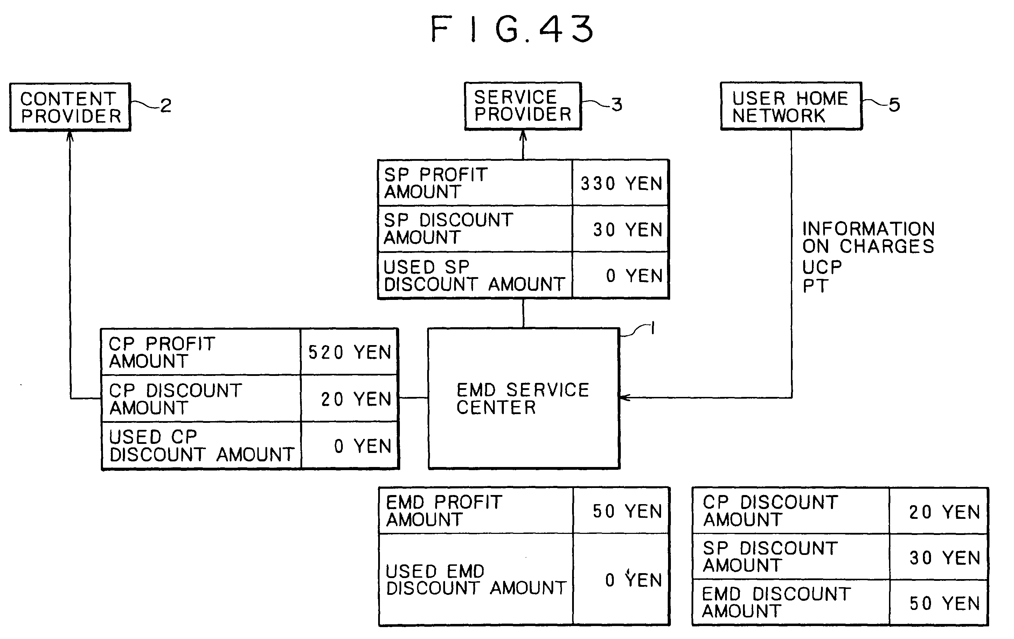

The content provider management block 12 supplies to the content provider 2 the CP discount amount (20 yen), CP profit amount (520 yen), information indicative of no use of discount point (for example, the used CP discount amount is 0 yen), and its signature as shown in FIG. 43. The service provider management block 11 supplies to the service provider 3 the SP discount amount (30 yen), SP profit amount (330 yen), information indicative of no use of discount point (for example, the used SP discount amount is 0 yen), and its signature.

On the basis of the CP profit amount, SP profit amount, and EMD profit amount supplied from the profit distribution block 16, the cashier block 20 communicates with the settlement organization to execute the settlement of these amounts. At the same time, on the basis of the user payment amount supplied from the charging block 19, the cashier block 20 communicates with the user's settlement organization to execute the settlement thereof and supplies the settlement result to the user management block 18. In the present example, it is assumed that the EMD service center 1 keeps the CP discount amount (20 yen) and the SP discount amount (30 yen). Namely, a total discount amount (100 (= 20 + 30 + 50) yen) is held in the EMD service center 1.

Thus, when the settlement processing that uses no discount point has been completed, this settlement processing ends.

If "Use Discount Point" is found set to "Charging History" of the information on charges in step S401, then, the user management block 18 reads "Discount Point Information" of the system registration information corresponding to the ID of the SAM set to "SAM ID" of the information on charges in step S404. In the present example, it is assumed that the same discount amounts (CP discount amount = 20 yen, SP discount amount = 30 yen, and EMD discount amount = 50 yen) as "Discount Point Information" shown in FIG. 10 is read.

In step S405, the user management block 18 outputs the discount amounts read in step S404 to the history data management block 15 along with the information on charges, UCP and PT received in step S303.

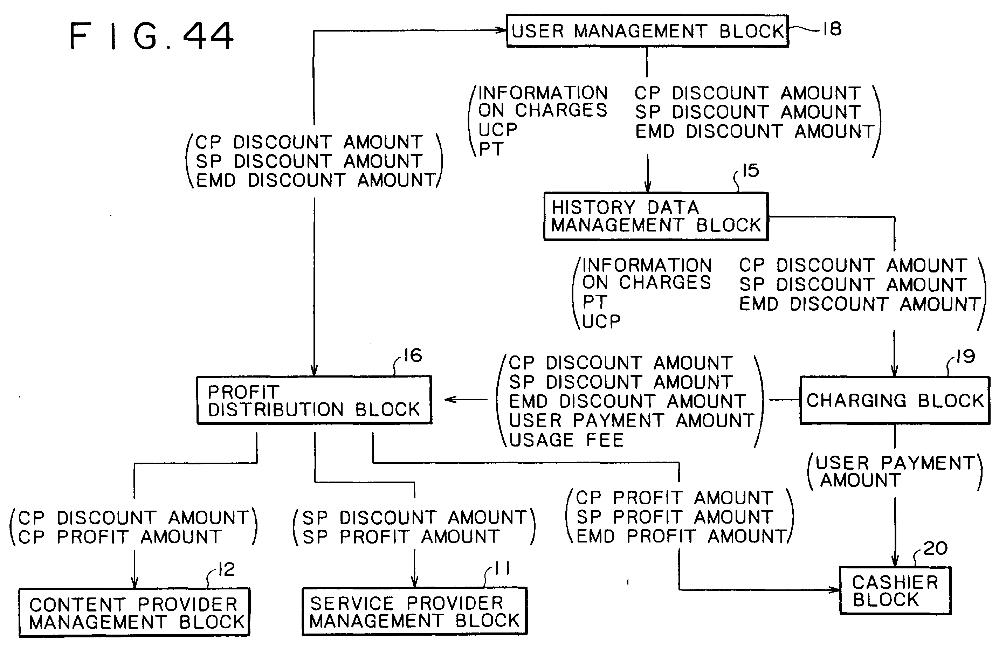

Next, in step S406, the settlement processing that uses discount point is executed. Details of this processing will be described with reference to FIG. 44. The history data management block 15 holds the information on charges, UCP, PT, and discount amounts (CP discount amount, SP discount amount, and EMD discount amount) supplied from the user management block 18 and supplies these items of information to the charging block 19. On the basis of these items of information, the charging block 19 detects a content usage fee to compute a user payment amount. Because the content usage fee is computed in the same manner as in step S403, the description of the computation will be skipped. In the present example, it is assumed that the detected content usage fee is 2000 yen.

The user payment amount is obtained by substituting the user discount amount obtained by adding the CP discount amount, SP discount amount, and EMD discount amount together supplied from the history data management block 15 and the detected content usage fee (in the present example, 2000 yen) into equation (12). In the present example, the user discount amount is 100 (= 20 + 30 + 50) yen, so that the user payment amount is 1900 (= 2000 - 100) yen.

The charging block 19 sends both the detected content usage fee (in the present example, 2000 yen) and the user payment amount (in the present example, 1900 yen) to the profit distribution block 16 and the user payment amount alone to the cashier block 20. At the same time, the charging block 19 sends to the profit distribution block 16 the CP discount amount, SP discount amount, and EMD discount amount supplied from the history data management block 15 (these amounts are discounted from the charges of this time).

Next, the profit distribution block 16 substitutes the user payment amount supplied from the charging block 19 into equation (9) to compute a user discount amount. Then, the profit distribution block 16 substitutes the obtained user discount amount into equations (7), (8), and (11) to compute a CP discount amount, an SP discount amount, and an EMD discount amount respectively. In this case, the user discount amount is 190 (= $1900 \times 0.1$) yen, the CP discount amount is 38 (= $190 \times 0.2$) yen, the SP discount amount is 57 (= $190 \times 0.3$) yen, and the EMD discount amount is 95 (= $190 \times 0.5$) yen.

The profit distribution block 16 sends all of the computed CP discount amount (38 yen), SP discount amount (57 yen), and EMD discount amount (95 yen) to the user management block 18. On the basis of these discount amounts, the user management block 18 updates the discount amount in "Discount Point Information" of the system registration information. For example, if a discount amount remains, the supplied discount amounts are added to it. Then, the profit distribution block 16 sends the computed CP discount amount (38 yen) to the content provider management block 12 and the computed SP discount amount (57 yen) to the service provider management block 11.

Next, the profit distribution block 16 computes a CP profit amount and an SP profit amount. To be more specific, the profit distribution block 16 substitutes the content usage fee (2000 yen) supplied from the charging block 19 into equations (3) and (4) to compute a CP share amount and an SP share amount. Then, the profit distribution block 16 substitutes the computed CP share amount into equation (5) and the computed SP share amount into equation (6) to compute a CP commission and an SP commission respectively. In the present example, the CP share amount is 1200 (= $2000 \times 0.6$) yen and the SP share amount is 800 (= $2000 \times 0.4$) yen. The CP commission is 120 (= $1200 \times 0.1$) yen and the SP commission is 80 (= $800 \times 0.1$) yen.

The profit distribution block 16 substitutes the computed CP share amount (1200 yen), CP commission (120 yen), and CP discount amount (38 yen) into equation (1) to compute a CP profit amount (1042 yen). The profit distribution block 16 substitutes the computed SP share amount (800 yen), SP commission (80 yen), and SP discount amount (57 yen) into equation (2) to compute an SP profit amount (663 yen). The profit distribution block 16 substitutes the computed CP commission (120 yen), SP commission (80 yen), and EMD discount amount (95 yen) into equation (10) to compute an EMD profit amount (105 yen).

The profit distribution block 16 sends the computed CP profit amount (1042 yen) to the content provider management block 12 and the computed SP profit amount (663 yen) to the service provider management block 11. In this case also, the discount amounts (CP discount amount (20 yen) and SP discount amount (30 yen)) used this time are supplied from the charging block 19 to the profit distribution block 16, which are then sent to the content provider management block 12 and the service provider management block 11.

The profit distribution block 16 sends the computed CP profit amount (1042 yen), SP profit amount (663 yen), and EMD profit amount (105 yen) to the cashier block 20.

The content provider management block 12 supplies the CP discount amount (38 yen) computed this time, the CP discount amount (20 yen) used this time, and the CP profit amount (1042 yen) to the content provider 2 along with a signature as shown in FIG. 45. The service provider management block 11 supplies the SP discount amount (57 yen) computed this time, the SP discount amount (30 yen) used this time, and the SP profit amount (663 yen) to the service provider 3 along with a signature.

The cashier block 20 communicates the settlement organization to execute settlement processing in the same manner as in step S403. It should be noted that the EMD service center 1 further holds an amount obtained by subtracting the discount amount (190 yen) used this time from a total of the discount amounts (100 yen) computed this time, amounting along with the EMD profit amount (105 yen) to a total of 195 yen.

When the settlement processing without using discount point has been completed, the settlement processing ends.

It should be noted that the system as referred to herein denotes an entire apparatus composed of a plurality of devices.

Information providing media for providing a computer program for executing the above-mentioned processing operations to the user include information recording media such as a magnetic disc, a CD-ROM, and a solid memory as well as communication media such as a network and a communication satellite.

In the EMD system having the above-mentioned configuration, the receiver 51 sends to the EMD service center 1 the information on charges having "Charging History" indicative of use of no use of discount point with a predetermined timing along with UCP and PT. The EMD service center 1 references "Charging History." If "Use Discount Point" is found set to "Charging History," the EMD service center 1 discounts, on the basis of the previously stored "Discount Point Information" of the system registration information, the content usage fee detected on the basis of the information on charges, UCP and, PT. Thus, according to the above-mentioned configuration, the EMD service center 1 can provide content at discount price.

(2) Second embodiment

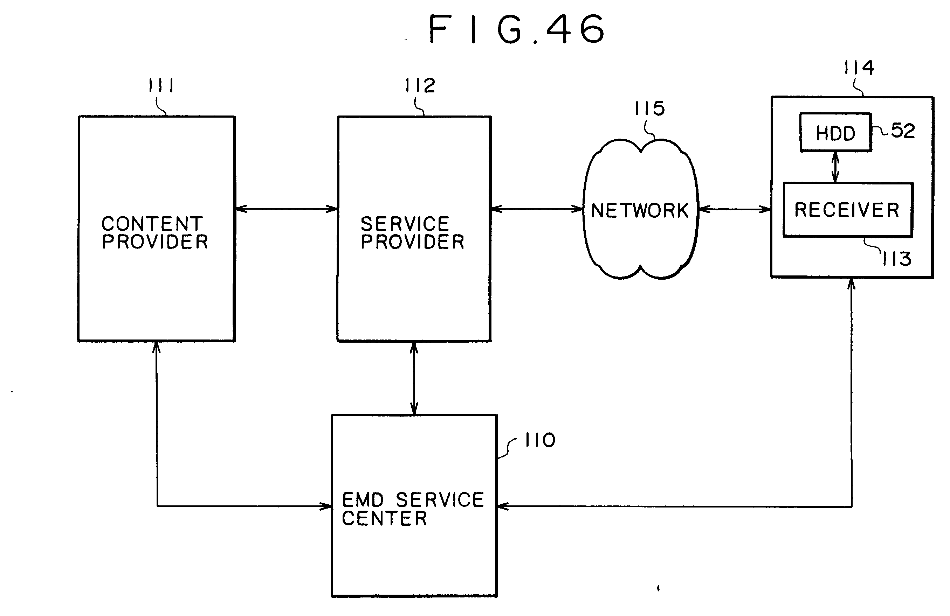

Now, referring to FIG. 46, there is shown an EMD system practiced as a second preferred embodiment of the invention. The EMD system according to the second embodiment comprises an EMD service center 110 for accepting registrations into the EMD system and managing component devices of the EMD system, a content provider 111 for providing content, a service provider 112 for providing predetermined services corresponding to the content provided by the content provider, and a user home network 114 composed of a device (in the present example, a receiver 113) by which the content is used.

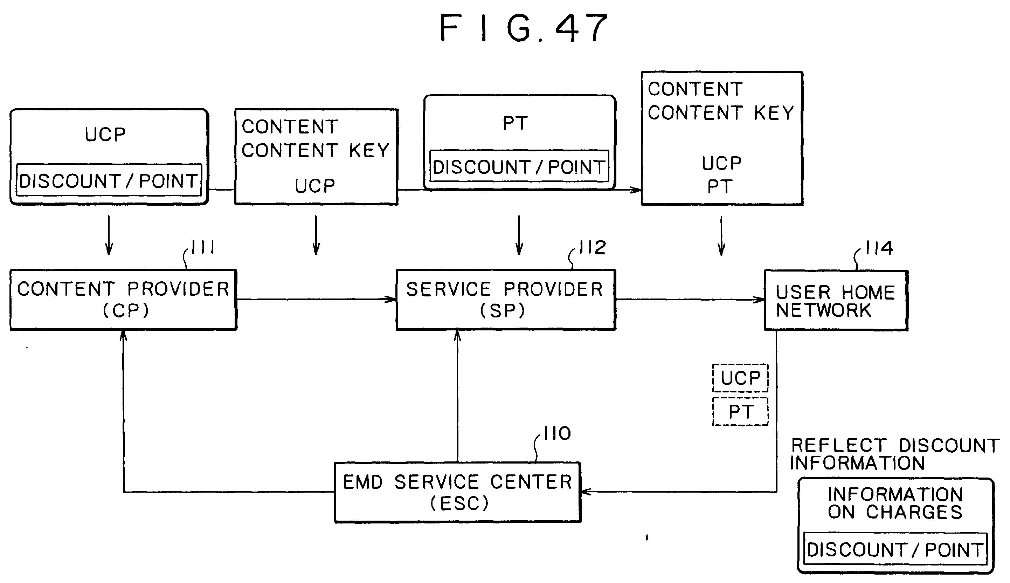

As shown in FIG. 47, in this EMD system, the EMD service center 110 specifies the discount information for the price of content and sends the specified discount information to the content provider 111 and the service provider 112. Consequently, the discount information is shared among the EMD service center 110, the content provider 111, and the service provider 112. This discount information is made up of the discount amount and discount ratio for the price of content (these being hereafter generically referred to as discount information) and the point amount and point ratio for a discount (these being hereafter generically referred to as point information) that occur when content is purchased. The discount information may also be specified by the content provider 111 and the service provider 112.

The content provider 111 sets discount information as desired for the cost price of content concerned to each content description (two types of discount information, discount amount or discount ratio and discount point amount or discount point ratio may be set for each usage description) and sends to the service provider 112 a content secure container composed of a signed UCP including this discount information, the content (encrypted by content key Kco), the content key Kco (encrypted by delivery key Kd), and the signature of the content provider 111.

The service provider 112 sets discount information as desired to the sale price in the content price condition (two types of discount information, discount amount or discount ratio and discount point amount or discount point ratio may be set to one price condition) sends to the user home network 114 (or the receiver 113) through a network 115 a service provider secure container composed of a signed PT including the discount information, the content (encrypted by content key Kco), the content key Kco (encrypted by delivery key Kd), the signature of the content provider 111, and the signature of the service provider 112.

The user home network 114 (or the receiver 113) generates, as the processing for using the content, a UCS on the basis of the UCP and PT included in the received service provider secure container and, at the same time, generates, on the basis of these UCP and PT, the information on charges that reflects the discount information. The user home network 114 sends the generated information on charges along with these UCP and PT to the EMD service center 110 when, for example, the user home network receives the supply of the delivery key Kd from the EMD service center 110. It should be noted that, if the information included in the UCP and PT is set to that generated information on charges before sending it to the EMD service center 110, the user home network 114 may be adapted not to separately send these UCP and PT to the EMD service center 110.

Then, the EMD service center 110 executes settlement processing on the basis of the information on charges supplied from the user home network 114 (or the receiver 113) and discounts the content sale price on the basis of the discount information included in that information on charges. Thus, in the EMD system according to the second embodiment is adapted that the content may be purchased at a discount price determined by the discount information set by the content provider 111 and the service provider 112 as desired.

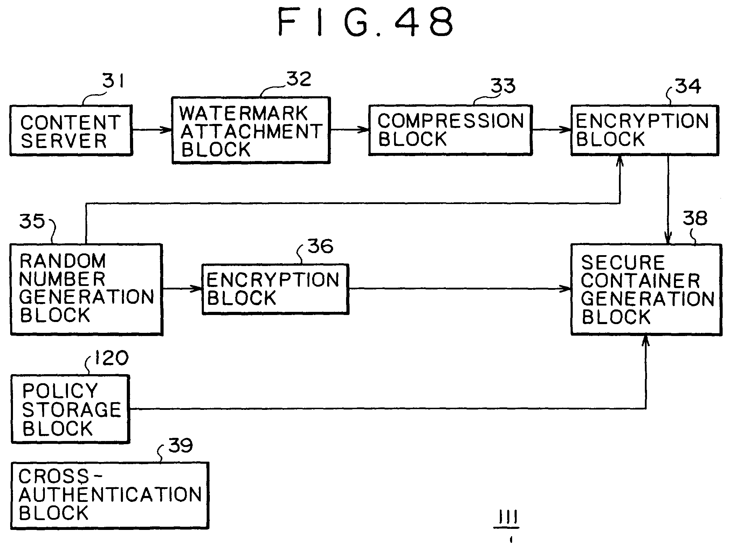

Referring to FIG. 48, components similar to those previously described with reference to FIG. 11 are denoted by the same reference numerals. FIG. 48 shows a functional block diagram of the content provider 111. A policy storage block 120 stores the UCP including the discount information set by the content provider 111 to the content usage description. When sending the content, the policy storage block 120 outputs this UCP to a secure container generation block 38.

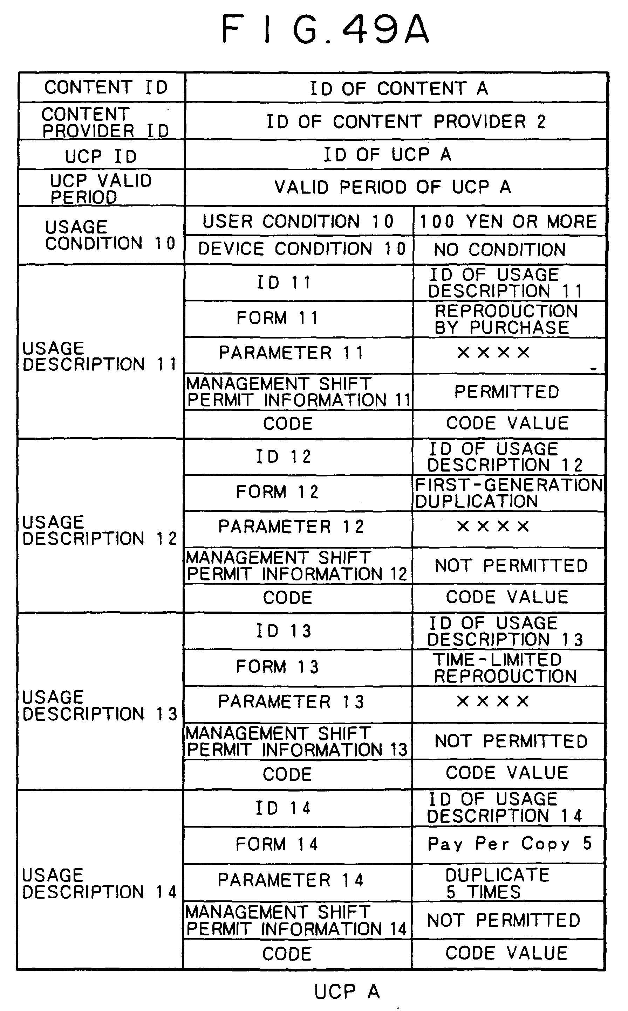

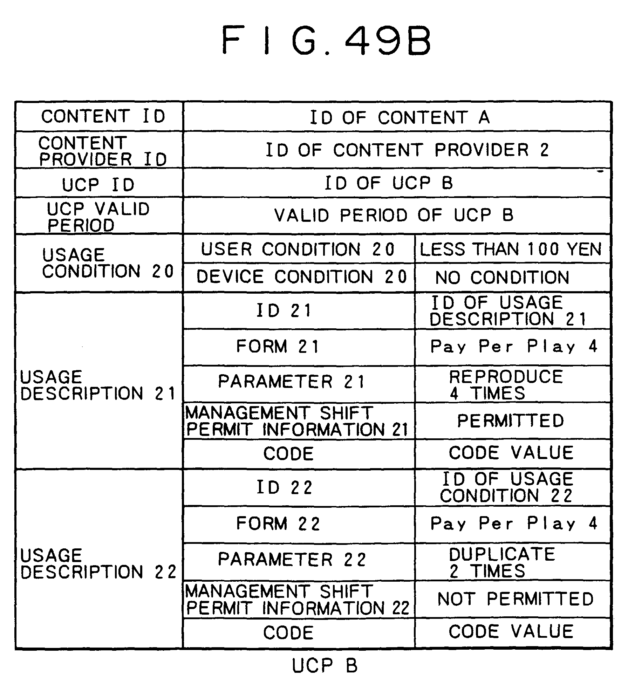

FIGS. 49A and 49B show UCP A and UCP B respectively (in the present example, these two UCPs are set to one piece of content). Like the UCPs used in the first embodiment, each of these UCPs has items "Content ID," "Content Provider ID," "UCP ID," "UCP Valid Period," "Usage Condition," and "Usage Description." Except for this "Usage Description," the other items are the same in the information to be set as those of the UCP of the first embodiment.

Like "Usage Description" of the first embodiment, that of the second embodiment has items "ID," "Form," "Parameter," and "Management shift permit information." These items having the same information as that contained in the corresponding items of UCP of the first embodiment.

In addition, as discount information, "Usage Description" of the UCP of the second embodiment has item "Code" to which a code value (for example, "00010000") indicative of a discount amount for the cost price of content and usage form, a code value (for example, "00010001") indicative of a discount ratio for the cost price of content and usage form, a code value "for example, "00100000") indicative of a point amount caused by the purchase of content and usage form, and a code value (for example, "00100001") indicative of a point ratio caused by the purchase of content and usage form are set.

It should be noted that, if no discount is to be made on the cost price of content and usage form and no point is to be caused by the purchase, nothing or a code value indicative of no discount or point is set to "Code" of "Usage Description."

Thus, the content provider 111 sets discount information to the cost price of the content for sale as desired and includes the description of this discount information into the UCP as a code value.

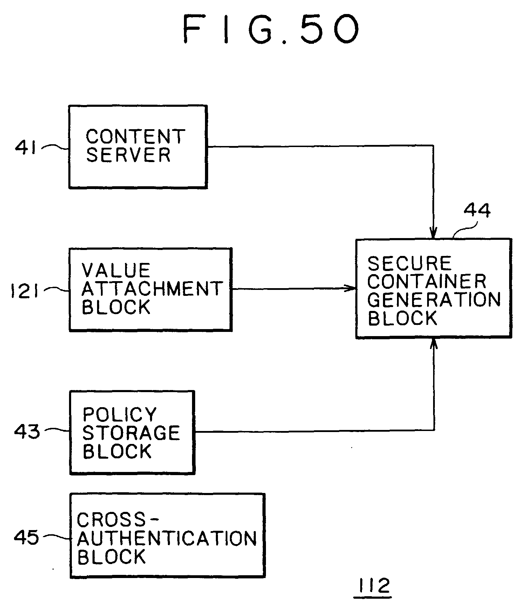

Referring to FIG. 50, components similar to those previously described with reference to FIG. 17 are denoted by the same reference numerals. FIG. 50 shows a functional configuration of the service provider 112. Like the value attachment block 42 of the first embodiment, when the content provider secure container is found correct, a value attachment block 121 generates a PT including discount information in correspondence with the UCP included in the content provider secure container and sends the generated PT to a secure container generation block 44.

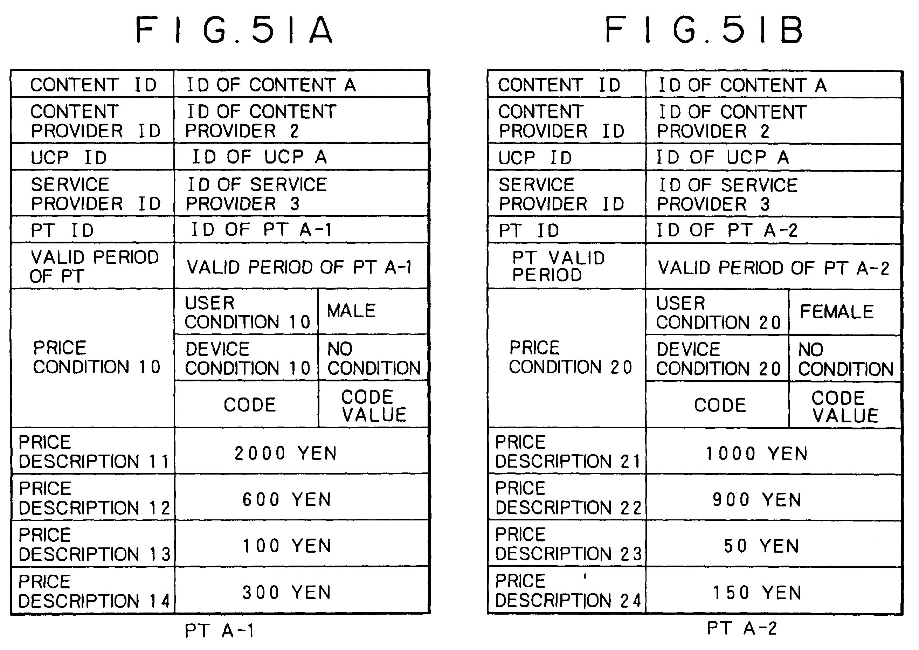

FIGS. 51A and 51B show PT A-1 and PT A-2 respectively (in the present example, these two PTs are set to one piece of content). Each of the PTs has items "Content ID," "Content Provider ID," "UCP ID," "Service Provider ID," "PT ID," "PT Valid Period," "Price Condition," and "Price Description" like the PTs of the first embodiment. Except for "Price Condition," the other items are the same in information to be set as those of the PT of the first embodiment.

Like "Usage Condition" of the UCP described with reference to FIG. 49, "Price Condition" of the PT of the second embodiment has items "User Condition" to which a user condition that can select this PT is set and "Device Condition" to which a device condition that can select this PT is set, in addition to item "Code."

In the present example, like "Code" of "Usage Description" of the UCP described with reference to FIG. 49, "Code" of the PT has, as the description of discount information, a code value (for example, "00010000") indicative of a discount amount for the sale price of content and usage form, a code value (for example, "00010001") indicative of a discount ratio for the sale price of content and usage form, a code value (for example, "00100000" indicative of a point amount caused by the purchase of content and usage form, and a code value (for example, "00100001") indicative of a point ratio caused by the purchase of content and usage form.

It should be noted that, if no discount is to be made on the sale price of content and usage form and no point is to be caused by the purchase, nothing or a code value indicative of no discount or point is set to "Code" of "Usage Description."

Thus, in the service provider 112, the value attachment block 121 sets discount information for the sale price of content for sale separately from the content provider 111 as desired and includes the description of this discount information into the PTs as a code value.

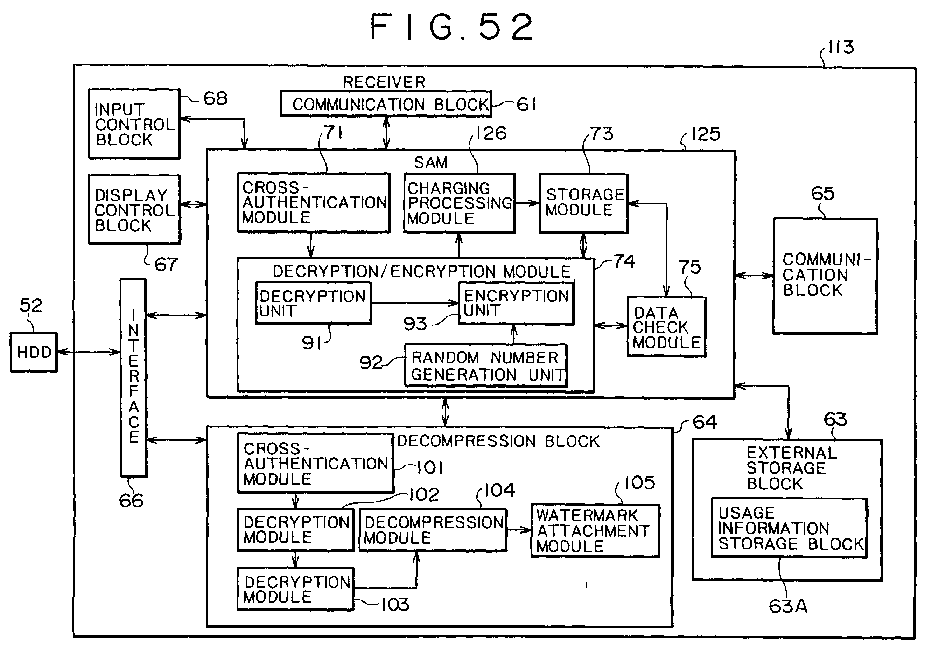

Referring to FIG. 52, components similar to those previously described with reference to FIG. 22 are denoted by the same reference numerals. FIG. 52 shows the receiver 113, in which an charging processing module 126 of a SAM (Secure Application Module) 125 generates a UCS and information on charges including discount information on the basis of the UCP and PT selected by the user. It should be noted that this UCS is the same in configuration as the UCS of the first embodiment.

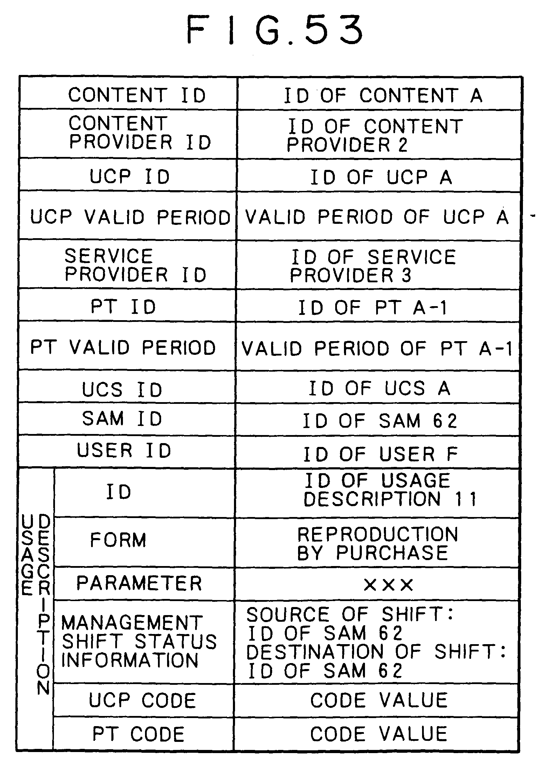

FIG. 53 shows information on charges generated on the basis of the usage description 11 of the UCP A shown in FIG. 49A and the PT A-1 shown in FIG. 51A. Except for the information on charges and "Charging History" described in the first embodiment, the information on charges shown in FIG. 53 has items "Content ID," "Content Provider ID," "UCP ID," "UCP Valid Period," "Service Provider ID," "PT ID," "PT Valid Period," "UCS ID," "SAM ID," "User ID," and "Usage Description." Except for "Usage Description," the other items have the same information as that of the corresponding items of the UCS.

"Usage Description" of the information on charges shown in FIG. 53 has the information set to "Usage Description 11" of the UCS A without change and, in addition thereto, "UCP Code" and "PT Code." This "UCP Code" has a code value set to "Usage Description 11" selected by the user (namely, the description of the discount information set by the content provider 111 to "Usage Description 11." This "PT Code" has a code value without change included in the PT used when this information on charges is generated (namely, the discount information set by the service provider 112 on the basis of this PT).

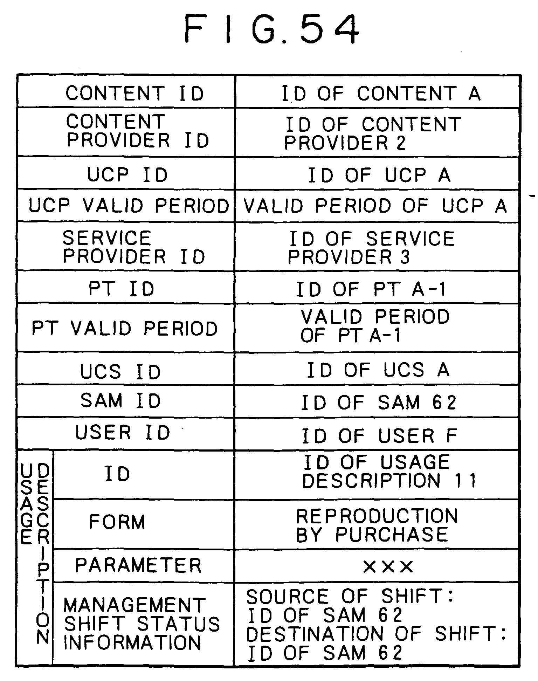

It should be noted that, when the information on charges and the corresponding UCP and PT are sent from the receiver 113 to the EMD service center 110, "UCP ID" and "PT ID" are stored in this information on charges. Therefore, as shown in FIG. 54, "UCP Code" and "PT Code" may not be provided in the information on charges, thereby allowing the EMD service center 110 to identify the corresponding UCP and PT on the basis of "UCP ID" and "PT ID" included in the information on charges to use "Code Value" of "Code" included in the identified UCP and PT for settlement processing.

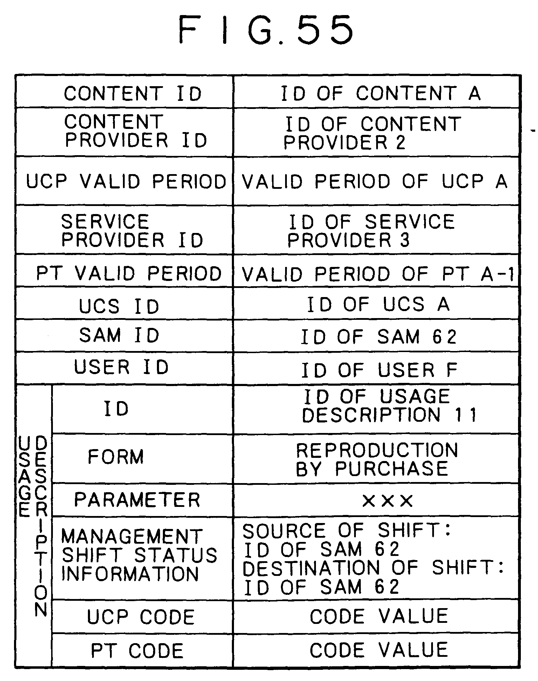

If only the information on charges is sent from the receiver 113 to the EMD service center 110 (namely, the corresponding UCP and PT are not sent), "UCP Code" and "PT Code" may be set to the information on charges instead of "UCP ID" and "PT ID" as shown in FIG. 55.

Thus, when generating the information on charges by use of the charging processing module 126, the SAM 125 does not especially recognize the discount information set by the content provider 111 and the service provider 112 and sets the discount information to the information on charges without change. It should be noted that the receiver 113 holds reference information having no "Discount Point Information" in a storage module 73 and uses this reference information only when selecting the UCP and PT included in the service provider secure container.

Meanwhile, in the EMD service center 110, when settlement processing is executed on the basis of the information on charges supplied from the receiver 113, if the discount information set by the content provider 111 and the service provider 112 is discount information, the settlement processing is executed by use of this discount information. If the discount information is point information, the point information set by the content provider 111 and the point information set by the service provider 112 are stored separately along with the ID of the SAM 125 of the receiver 113.

Consequently, in the receiver 113, the SAM 125 inquires the user through a display device (not shown) of a display control block 67 whether to use the point information at various times such as purchasing content, sending information on charges to the EMD service center 110 (namely, executing settlement processing in the EMD service center 110), and checking the remainder of points from the receiver 113 to the EMD service center 110.

Then, in response to this inquiry, when the user specifies through an input control block 68 the use of one of the point information set by the service provider 112 and the point information set by the content provider 111, the SAM 125 generates a point usage flag indicative of use or no use of the point information specified by the user and sends the generated flag to the EMD service center 110 along with the information on charges.

Only when the point usage flag supplied with the information on charges from the receiver 113 specifies the use of point information, the EMD service center 110 uses the point information stored so far (the point information set by the content provider 111 or the point information set by the service provider 112) to execute settlement processing. For settlement processing, both the point information set by the content provider 111 and the point information set by the service provider 112 may be used or these pieces of point information may be used with the discount information.

Also, the SAM 125, without sending the code value of point information to the EMD service center 110, may store, on the basis of this code value, the point information set by the content provider 111 and the point information set by the service provider 112 into the storage module 73 in the SAM 125 for example. When the use of the point information is specified by the user, the SAM 125 sends the stored point information to the EMD service center along with the information on charges. Then, the EMD service center 110 uses this point information for settlement processing.

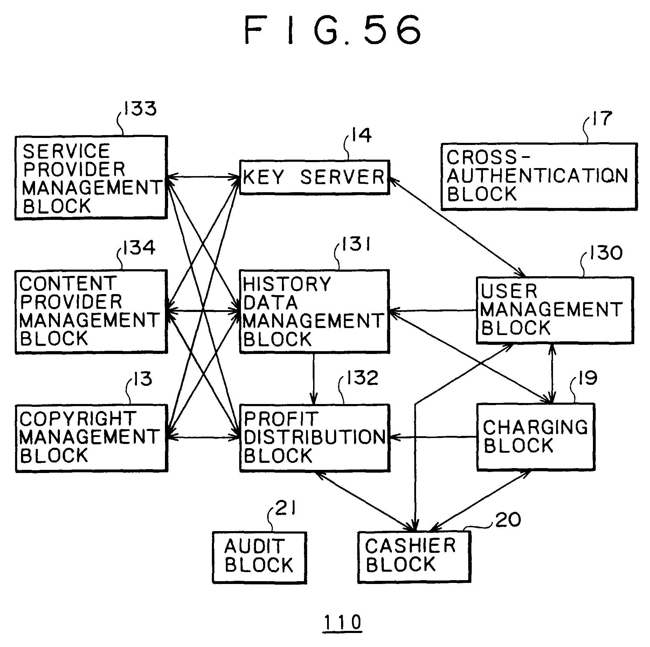

Referring to FIG. 56, components similar to those previously described with reference to FIG. 3 are denoted by the same reference numerals. FIG. 56 shows a configuration of the EMD service center 110. As shown, in the EMD service center 110, a user management block 130 captures the information on charges, the corresponding UCP and PT, and the point usage flag attached thereto from the receiver 113 and supplies them to a history data management block 131.

On the basis of "Usage Description" of the information on charges supplied from the user management block 130, the history data management block 131 extracts the corresponding code value (indicative of the description of the discount information set by the content provider 111) from the UCP and the corresponding sale price and code value (indicative of the description of the discount information set by the service provider 112) from the PT. The history data management block 131 holds a table listing the correlation between the descriptions of discount information and their code values. On the basis of the code values extracted from the UCP and the PT, the history data management block 131 searches this table to recognize the description of the discount information indicated by the code values. The code value may be extracted from the information on charges instead of the UCP and PT.

If none of the code values extracted from the UCP and the PT is found indicative of no discount, the history data management block 131 supplies various pieces of information such as the information on charges and the UCP and PT (hereafter referred to simply as various information) corresponding to a profit distribution block 132, an charging block 19, a service provider management block 133, and a content provider management block 134 without change.

If any of the code values extracted from the UCP and the PT is found indicative of discount information (discount amount or discount ratio), the history data management block 131 discounts the sale price on the basis of this discount information and supplies the resultant discount price information to the profit distribution block 132, the charging block 19, the service provider management block 133, and the content provider management block 134 along with the various information.

Further, if any of the code values extracted from the UCP and the PT is found indicative of point information (point amount or point ratio), the history data management block 131 separates this point information into the point information set by the content provider 111 and the point information set by the service provider 112 and adds them to the stored point information set by the content provider 111 and the point information set by the service provider 112 respectively to stored the resultant point information. At the same time, the history data management block 131 supplies the various information to the profit distribution block 132, the charging block 19, the service provider management block 133, and the content provider management block 134.

If the point usage flag indicates that the point information is used, the history data management block 131 uses the stored point information (set by the content provider 111 or the service provider 112) to discount the sale price and supplies the resultant discount price information to the profit distribution block 132, the charging block 19, the service provider management block 133, and the content provider management block 134 along with the various information.

On the basis of the various information and the discount price information supplied from the history data management block 131, the profit distribution block 132 computes a profit amount for both the service provider 112 and the content provider 111 with a predetermined timing (for example, at execution of settlement processing or on a predetermined day per month) and outputs the computed profit amount to the service provider management block 133, a cashier block 20, and a copyright management block 13. At the same time, the profit distribution block 132 receives content cost price information from the history data management block 131, computes a profit amount for the content provider 111 for that cost price, and outputs the computed profit amount to the content provider management block 134, the cashier block 20, and the copyright management block 13. It should be noted that, in this profit computation, a profit (or a commission) for the EMD service center 110 is not computed, but it may be computed as required.

When the service provider management block 133 has received the above-mentioned various information and discount price from the history data management block 131 and the profit amount for both the service provider 112 and the content provider 111 from the profit distribution block 132, the service provider management block 133 generates, on the basis of these pieces of information, the information (hereafter referred to as service provider settlement information) about the settlement that uses the discount information set by the service provider 112 and the content provider 111 and sends the generated information to the service provider 112.

The service provider settlement information includes a discount price obtained by subtracting, from a content sale price, a discount amount corresponding to the discount information (discount amount or discount ratio) set by the service provider 112 and the content provider 111, an amount corresponding to the point information set by the service provider 112, and the discount information set by the content provider 111. The service provider settlement information is attached with the signature and sent to the service provider 112. The service provider settlement information is used to verify if the discount information set by the service provider 112 has been used correctly.

When the above-mentioned various information and discount price are supplied from the history data management block 131 and the computed profit amount for the content provider 111 from the profit distribution block 132, the content provider management block 134 generates, on the basis of these pieces of supplied information, settlement information (hereafter referred to as content provider settlement information) that uses the discount information set by the content provider 111 and sends the generated information to the content provider 111.

The content provider settlement information includes the discount price obtained by discounting the cost price of content by use of the discount information (discount amount or discount ratio) set by the content provider 111 and an amount corresponding to the point information set by the content provider 111. This content provider settlement information is attached with the signature and is sent to the content provider 111. This information is then used to verify if the discount information set by the content provider 111 has been used correctly.

Thus, in the EMD service center 110, the charging block 19 supplies the content discount price supplied from the history data management block 15 to the cashier block 20 and the profit distribution block 132 as a user payment amount. Consequently, the EMD system according to the second embodiment allows the user to purchase content at a discount price by use of the discount information set by the content provider 111 and the service provider 112.

In the EMD system according to the second embodiment, the profits raised by content purchase are all stored once in the service provider 112. Then, the profits are distributed by the service provider 112 to the content provider 111 according to its share.

Because the discount information is sent from the content provider 111 and the service provider 112 through the receiver 113 to the EMD service center 110, the user management block 130 manages the system management information having generally the same configuration as the system registration information described with reference to FIG. 9, except for item "Discount Point Information."

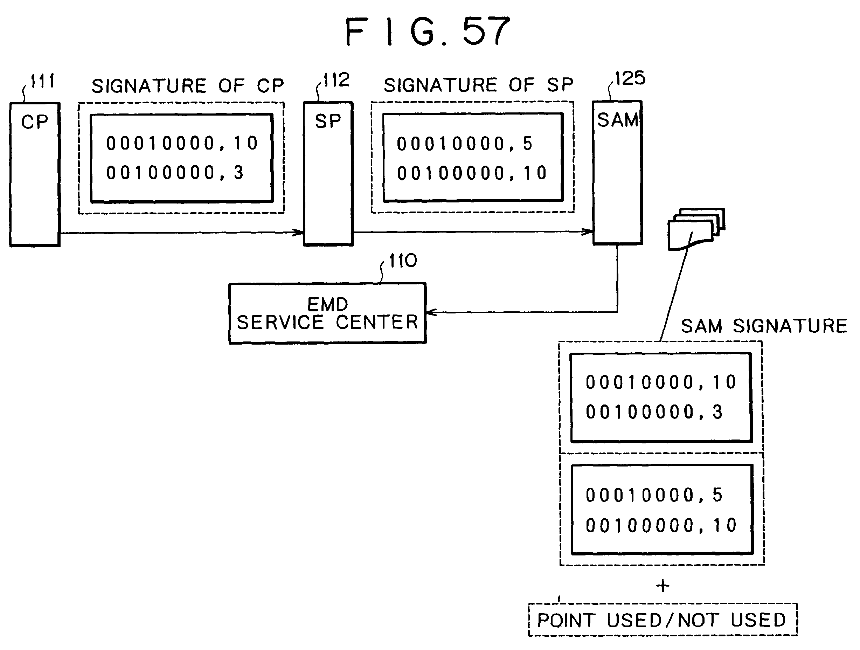

The following describes the flow of the discount information by use of actual amounts of money in the above-mentioned EMD system with reference to FIG. 57. Namely, it is assumed here that the content provider 111 sets discount information as code values to "Usage Description" included in a predetermined UCP, for example, the discount information including a discount amount of "10 yen" and a point amount of "3 yen". The content provider 111 stores the resultant UCP in a content provider secure container and sends it to the service provider 112.

It is also assumed that the service provider 112 generates a PT in which discount information including a discount amount of "5 yen" and a point amount of "10 yen" is set as code values to "Price Condition" in correspondence with the UCP including "Usage Description" for discount information composed of discount amount "10 yen" and discount point of "3 yen" supplied from the content provider 111. The service provider 112 stores this PT along with the UCP into a service provider secure container and sends it to the receiver 113.

In the receiver 113, when the user requires to purchase the content indicated by the PT (in which the discount information including a discount amount of "5 yen" and a point amount of "10 yen" is set to "Price Condition" by the service provider 112) according to "Usage Description" of the corresponding UCP to which the discount information including a discount amount of "10 yen" and a point amount of "3 yen" is set by the content provider 111, the SAM 125 executes content purchase processing on the basis of the UCP and the PT by means of the charging processing module 126. By doing so, the SAM 125 generates information on charges that includes the code value of the discount information set by the content provider 111 to "Usage Description" and the code value of the discount information set by the service provider 112 to "Price Condition."

At the same time, the SAM 125 inquires the user whether to use or not to use point through the display control block 67 at predetermined time intervals. When the user replies with intention of use or no use of point through the input control block 68, the SAM 125 generates a point usage flag accordingly. Then, the SAM 125 attaches the point usage flag to the information on charges and the corresponding UCP and PT at predetermined time intervals and attaches the signature to the entirety of the information on charges, the corresponding UCP and PT, and the point usage flag. The SAM 125 sends these signed information on charges, corresponding UCP and PT, and point usage flag to the EMD service center 110.

Next, in the EMD service center 110, the information on charges, corresponding UCP and PT, and point usage flag supplied from the receiver 113 are put in the user management block 130. If these pieces of information are found untampered by verifying the attached signature, these pieces of information are then sent to the history data management block 131.

Upon receiving these pieces of information, the history data management block 131 determines by the point usage flag whether or not to use the point information and, at the same time, detects a sale price of "200 yen" for example of the content on the basis of the supplied PT and the description (namely, discount amount or discount ratio) of the discount information indicated by the code value included in the information on charges by use of the data table. If no use of point information is found specified, the history data management block 131 subtracts the discount amount of "10 yen" set by the content provider 111 and the discount amount of "5 yen" set by the service provider 112 from the content sales price of "200 yen" to obtain a discounted price of "185 yen."

If use of point information (or point amount) is found specified by the point usage flag, the history data management block 131 subtracts the discount amount of "10 yen" set by the content provider 111 and the discount amount of "5 yen" set by the service provider 112 from the sale price of "200 yen." Then, from this subtraction result, the history data management block 131 further subtracts the stored point amount (including the point amount of "3 yen" set by the content provider 111) set by the content provider 111 or the accumulated point amount (including the point amount of "10 yen" set by the service provider 112) set by the service provider 112, thereby computing a discount price.

If the accumulated point amount set by the service provider 112 is used to discount the price information, the history data management block 131 subtracts the discount amount of "10 yen" set by the content provider 111 and the discount amount of "5 yen" set by the service provider 112 from the sale price of "200 yen" to compute a discount price of "185 yen." Then, the history data management block 131 makes comparison between the total amount (including the point amount of "10 yen" set by the service provider 112) of point amounts set by the service provider 112 for which the use of point is specified and the discount price of "185 yen." The history data management block 131 subtracts the total amount or the discount price, whichever is smaller, from the discount price of "185 yen." Thus, the history data management block 131 computes a discount price which is not negative in value. If there is still a remainder in the stored point amount after being used for discounting the sale price, the history data management block 131 stores the remaining points again.

If the accumulated point amount set by the content provider 111 is use]d for discounting the price information, the history data management block 131 performs the discount that uses the point amount (or point ratio) on the cost price of the content and reflects the resultant discount price for the cost price onto the sale price (in this example, the discount price obtained by subtracting the discount amount of "5 yen" set by the service provider 112 from the sale price) of the content.

Namely, the history data management block 131 subtracts the discount amount of "10 yen" set by the content provider 111 from the cost price of "100 yen" to compute a discount price of "90 yen" and then makes comparison between the total amount (including the point amount of "3 yen" set by the content provider 111) of the point amounts set by the content provider 111 for which use of point is specified and the discount price for the cost price of "90 yen." The history data management block 131 subtracts the total amount of point amount or the discount price against the cost price, whichever is smaller, from the discount price of "90 yen." Thus, the history data management block 131 computes a discount price for the cost price, which is not negative in value. If there is a remainder in the accumulated point amount after being used for discounting the sale price, the history data management block 131 stores the remaining points again.

This history data management block 131 executes the like discount processing when using a discount ratio for discount information or a point ratio for point information.

As described, in the above-mentioned EMD system, content sale prices can be discounted by use of the discount information set arbitrarily by the content provider 111 and the service provider 112, respectively.

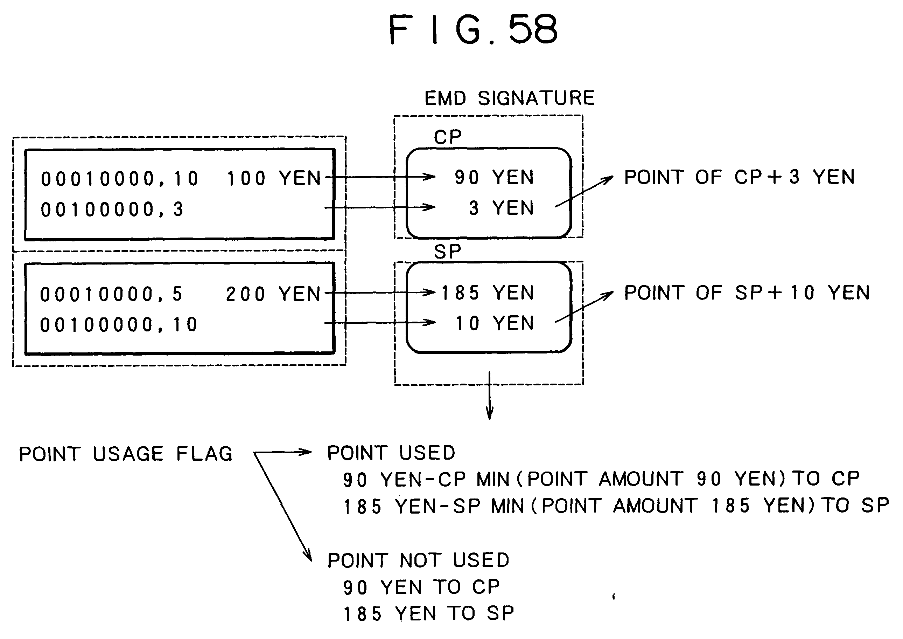

The following describes, with reference to FIG. 58, shares of the service provider 112 and the content provider 111 caused by the above-mentioned discount processing executed on the basis of the service provider settlement information and the content provider settlement information generated by the service provider management block 133 and the content provider management block 134 respectively.

If point information (or point amount) is not used, the service provider management block 133 subtracts a discount amount of "5 yen" set by the service provider 112 and a discount amount of "10 yen" set by the content provider 111 from a content sales amount to compute a discount price of "185 yen." Then, the service provider management block 133 sends to the service provider 112 this discount price of "185 yen" and a point amount of "10 yen" set by the service provider 112 which is added to the user's point amount because no point information (or point amount) is used. These discount price and point information are signed before being sent.

If no point information (or point amount) is used, the content provider management block 134 subtracts the discount amount of "10 yen" set by the content provider 111 from a content cost price of "100 yen" (which becomes the share of the content provider 111 when there is no discount amount set by the content provider 111) to compute a discount amount of "90 yen." Then, the content provider management block 134 sends to the content provider 111 this discount price of "90 yen" and a point amount of "3 yen" set by the content provider 111, which is added to the user's point amount because no point information (or point amount) is used. These discount price and point information (or amount) are signed before being sent.

In other words, when only discount amount is used, the service provider 112 is informed of a share of "185 yen" for both the service provider 112 and the content provider 111. Consequently, the service provider 112 distributes "90 yen" from this "185 yen" as the share of the content provider 111.

On the other hand, if point information (or point amount) is used, the service provider management block 133 subtracts the discount amount of "5 yen" set by the service provider 112 and the discount amount "10 yen" set by the content provider 111 from the content sale price to compute a discount price of "185 yen." The service provider management block 133 further subtracts the discount amount indicated by the accumulated point information (or point amount) set by the service provider 112 from this discount amount of "185 yen" to compute a discount price. Then the service provider management block 133 sends the obtained discount price and the information indicative of the use of the point information (or point amount) set by the service provider 112 to the service provider 112. These obtained discount price and information are signed before being sent.

If point information (or point amount) is used, the content provider management block 134 subtracts the discount amount of "10 yen" set by the content provider 111 from the content cost price of "100 yen" to compute a cost price. Further, the content provider management block 134 subtracts a discount amount indicated by the stored point information (or point amount) set by the content provider 111 from the obtained cost price, discount price to a cost price. The content provider management block 134 sends to the content provider 111 the discount price for the obtained cost price and the information indicative of use of the point information (or point amount) set by the content provider 111. These discount price and information are signed before being sent.

It should be noted that, although not referred to explicitly, the EMD system according to the second embodiment is adapted to provide content to be submitted as a single content consisting of one piece of music or an album content consisting of plural pieces of music.

When providing content as a single or an album, the EMD system according to the second embodiment can specify data formats of various information as described below.

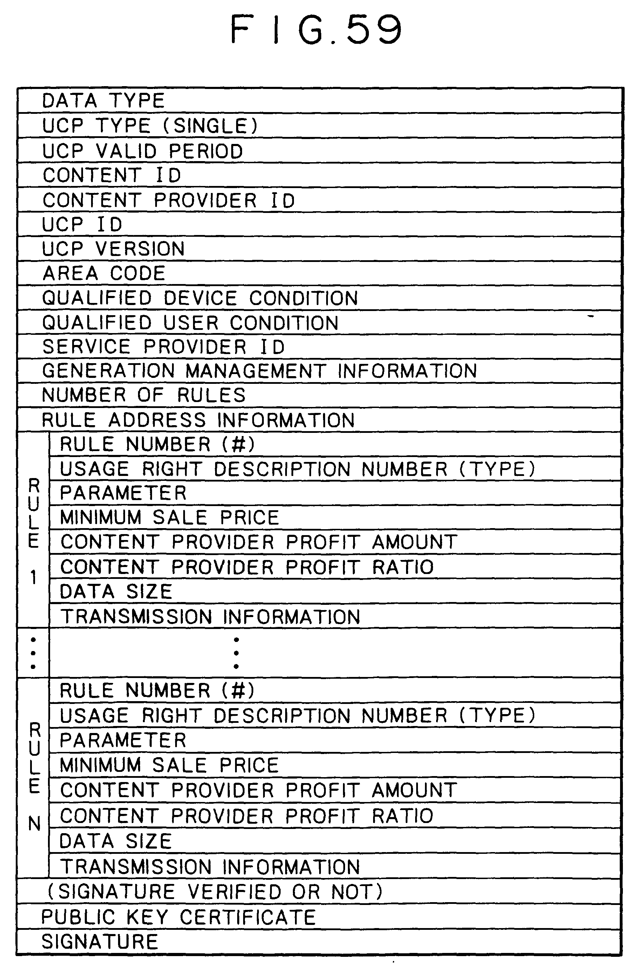

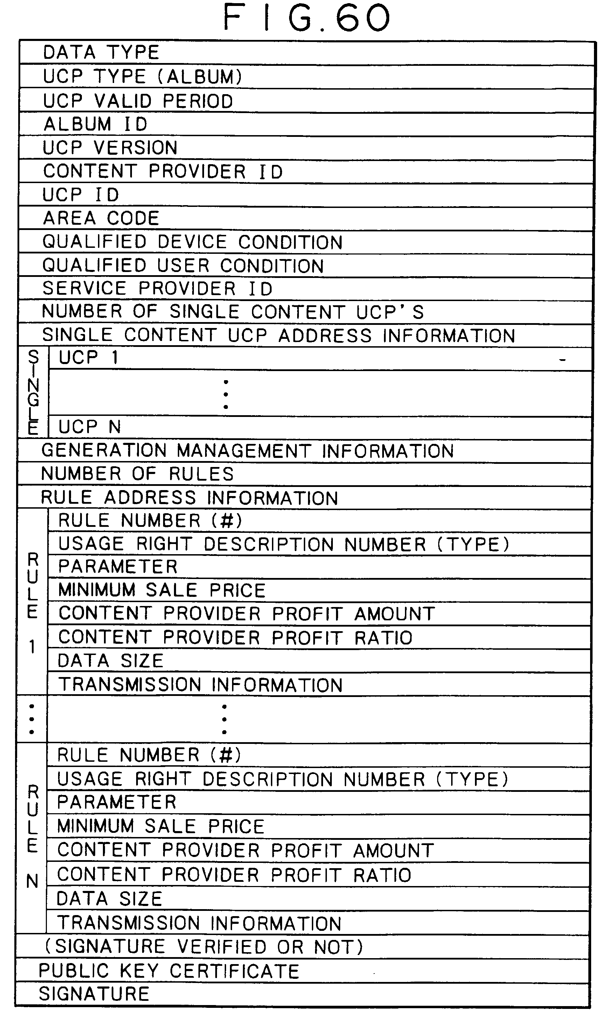

FIGS. 59 and 60 show UCP data formats. The UCPs shown are generated for each single content for each album content respectively by the content provider 111, indicating the usage right of which the user home network 114 can purchase the content.

The UCP data for single content (FIG. 59) include data type, UCP type, UCP valid period, content ID, content provider ID, UCP ID, UCP version, area code, qualified device condition, qualified user condition, service provider ID, generation management information, number of rules including purchasable usage right indicated by this UCP, address information indicative of rule storage location, rule stored at the location indicated by this address information, public key certificate, and signature.

Each rule is composed of rule number, usage right description, its parameter, minimum sale price, content provider profit amount, content provider profit ratio, data size, and transmission information.

The UCP data for album content (FIG. 60) include data type, UCP type, UCP valid period, album ID, UCP version, content provider ID, UCP ID, area code, qualified device condition, qualified user condition, service provider ID, number of UCPs of single contents constituting this album, address information indicative of single content UCP storage location, data packet of single content UCP stored at the location indicated by this address information, generation management information, number of rules including purchasable usage right indicated by this UCP, address information indicative of storage location of this rule, rule stored at location indicated by this address information, public key certificate, and signature.

Each rule consists of rule number assigned as serial number for each usage right, usage right description number, parameter, minimum sale price, content provider profit amount, content provider profit ratio, data size, and transmission information.

In these UCPs, the data type denotes that the data are UCP data. The UCP type denotes that this UCP is either for single content or album content. The UCP valid period denotes a period in which this UCP can be used. This period is represented by date of expiration or the number of days from the day starting the usage as a reference to the end of usage for example. The content ID and the album ID denote purchasable single content or album content indicated by the UCP. The content provider ID denotes the ID of the content provider 111 that specifies this UCP.

The UCP ID identifies this UCP. For example, if two or more UCPs are set for the same content, the UCP ID is used. The UCP version denotes the version information about the UCP updated according to usage period. Therefore, each UCP is managed by these UCP ID and UCP version.

The area code denotes an area in which this UCP can be used. Assigned to this area code are a code indicative of a particular area specifying a UCP usable area and a code for making this UCP usable in all areas. The qualified device condition denotes the condition of a device that can use UCP. The qualified user condition denotes the condition of user who can use UCP.

The service provider ID denotes the ID of the service provider 112 that uses UCP. This ID of the service provider includes an ID of the particular service provider 112 for restricting the service provider 112 that can use UCP and an ID that allows two or more (or all) service providers to use this UCP.

The generation management information denotes the maximum number of times for which content can be repurchased. The signature is attached to the entire UCP from the data type to the public key certificate, except for this signature itself. The algorithm and parameter used for generating this signature and the key for verifying this signature are included in the public key certificate.

In each rule, the usage right description number denotes a number attached to each usage right description. The parameter is a parameter of the usage right description. The minimum sale price denotes a minimum sale price at which single or album content is sold according to the usage right description. The content provider profit amount and profit ratio denote the amount of profit and the profit ratio for sale price that the content provider 111 can get when single content or album content is purchased. The data size is the data size of information to be transmitted. This transmission information consists of the point set by the content provider 111, which is added to the user's point amount when the user makes purchases of the usage right, mileage information consisting of the discount amount of the usage right according to this point, and the various information set by the content provider 111 as required.

In the UCP of album content, a plurality of the rules each shows each a purchase form of this album. In the UCPs of two or more single contents stored in the UCP of album content, the rule stored in each UCP denotes a purchase form of a single content in the album such that each corresponding single content may be purchased as a single piece of music separately or only as an album piece of music (namely, the corresponding single content may only be purchased with other single contents as an album).

Consequently, the UCP of album content is defined so that album content can be purchased either as an album content or a single content on the basis of the rule of that UCP.

In the UCP of album content, the signature is attached to the entire UCP. Therefore, only verifying the signature allows checking of not only the UCP of this album content but also the UCPs of single contents for tampering without verifying each single content UCP, thereby facilitating signature verification.

It should be noted that the UCPs of single and album contents may store information indicative whether to execute content signature verification or not. This information is provided in consideration of a relatively large content data quantity, which takes long for signature verification. When this information is stored in the UCPS, content signature verification is executed or not as specified by this information.

In the above-mentioned UCP of album content, the UCPs of plural single contents constituting this album are stored; but these single content UCPs may not be stored.

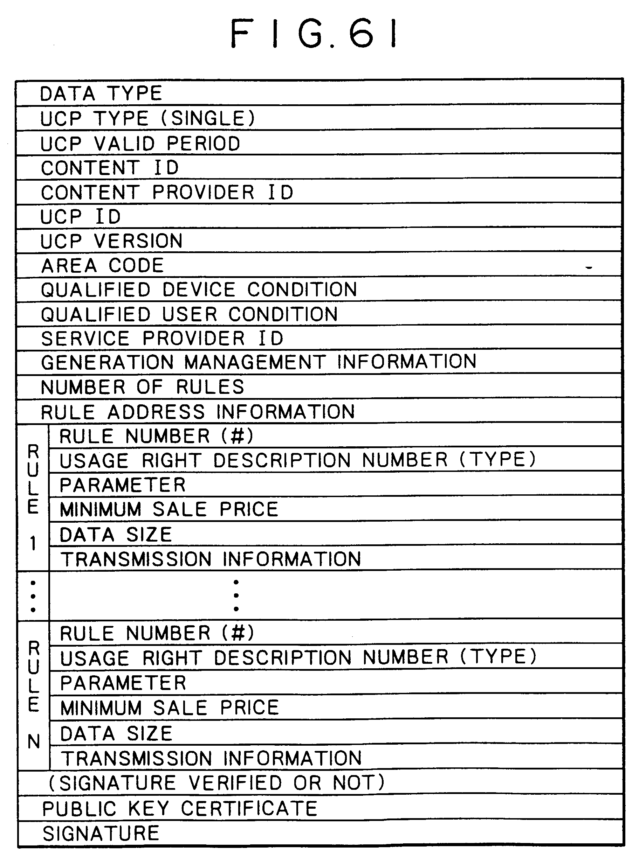

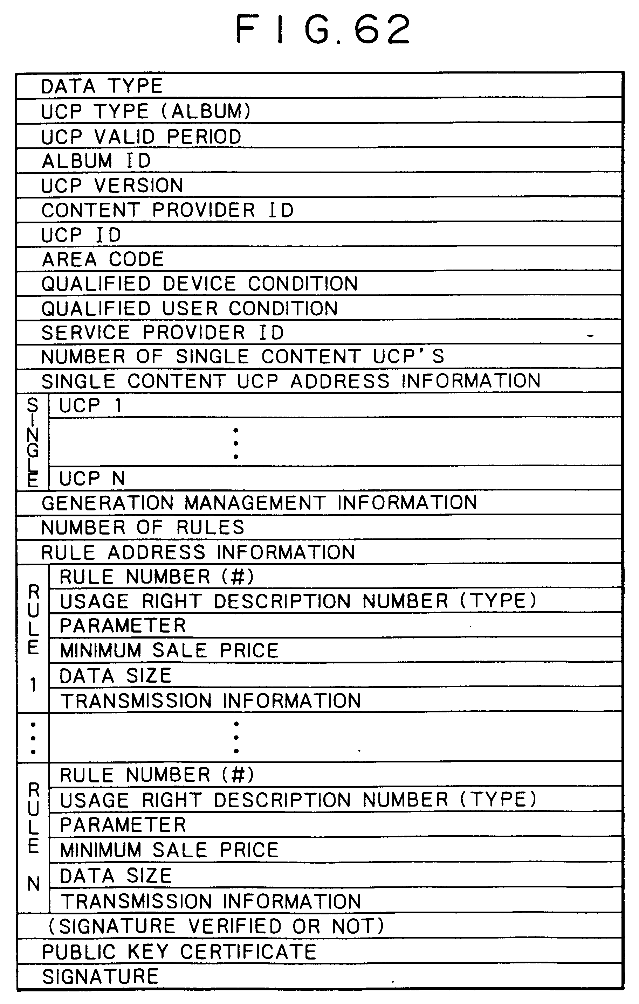

In addition, in the UCPs of single and album contents, the content provider profit amount and ratio may be collectively managed by the EMD service center 110, so that, as shown in FIGS. 61 and 62, these UCPs may be configured without the content provider profit amount and ratio.

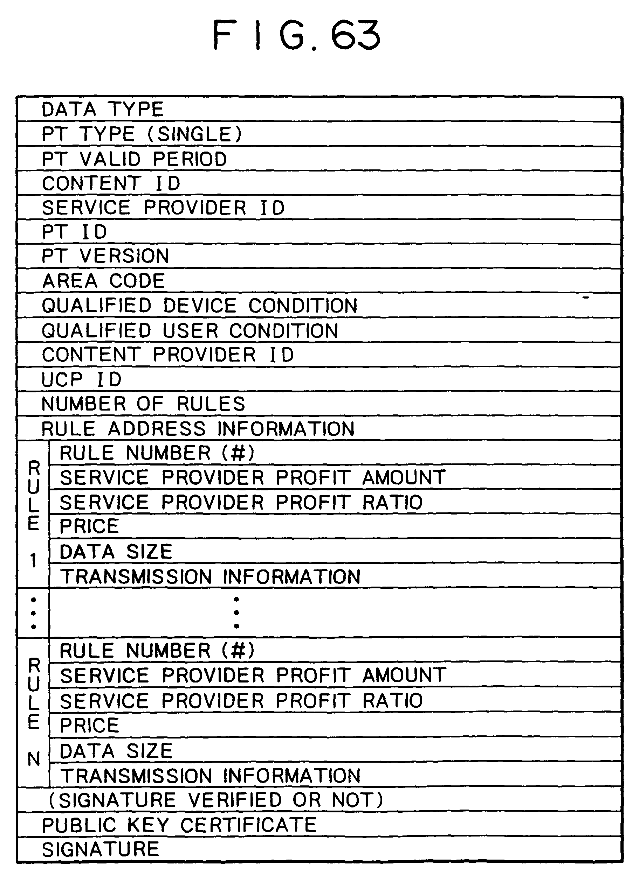

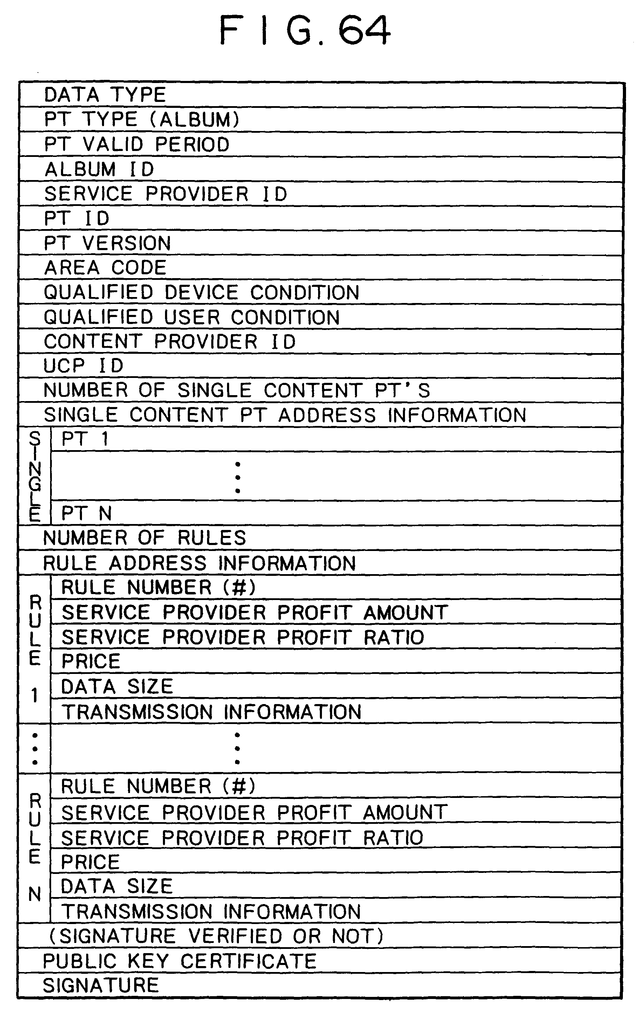

FIGS. 63 and 64 show data formats of PTs. These PTs are generated by the service provider 112 for each single content UCP or each album content UCP supplied from the content provider 111 and show the prices of single content and album content, respectively.

The data of PT for single content (FIG. 63) include data type, PT type, PT valid period, content ID, service provider ID, PT ID, PT version, area code, qualified device condition, qualified user condition, content provider ID, ID of UCP attached with this PT, number of rules including purchasable usage right indicated by this PT, address information indicative of storage location of this rule, rule stored at the location indicated by this address information, public key certificate, and signature.

Each rule in the single content PT consists of rule number attached as serial number for each usage right, service provider profit amount, service provider profit ratio, price, data size, and transmission information.

The data of the PT for album content (FIG. 64) include data type, PT type, PT valid period, album ID, service provider ID, PT ID, PT version, area code, qualified device condition, qualified user condition, content provider ID, ID of UCP attached with this PT, number of PTs of single contents constituting this album, address information indicative of storage location of single content PT, data packet of single content PT stored at the location indicated by this address information, number of rules including purchasable usage right indicated by this PT, address information indicative of storage location of these rules, rules stored at the location indicated by this address information, public key certificate, and signature.

Each rule in the album content PT consists of rule number attached as a serial number for each usage right, service provider profit amount, service provider profit ratio, price, data size, and transmission information.

In these PTs, the data type indicates that these data are data about PT. The PT type denotes whether this PT is a single content PT or an album content PT. The PT valid period denotes a period in which this PT can be used. This period is represented by date of expiration or the number of days from the start of usage to the end of usage for example. The album ID indicates purchasable single content and album content indicated by this PT. The service provider ID denotes the ID of the service provider 112 that generated this PT.

The PT ID identifies this PT. For example, the PT ID is used for identifying the ID of this PT when two or more PTs are specified for the same content. The PT version denotes the version information about the history of PT revision according to usage period. Therefore, each PT is managed by these PT ID and PT version.

The area code denotes an area in which this PT can be used. Assigned to this area code are a code indicative of a particular area specifying a PT usable area and a code for making this PT usable in all areas. The qualified device condition denotes the condition of a device that can use the PT. The qualified user condition denotes the condition of user who can use the PT. The content provider ID denotes the ID of the content provider 111 specifying the UCP to which the PT is attached. The UCP ID is for identifying the UCP to which the PT is attached.

The signature is attached to the entire PT from the data type to the public key certificate, except for this signature itself. The algorithm and parameter used for generating this signature and the key for verifying this signature are included in the public key certificate.

In each rule, the rule number employ exactly the same number corresponds to the rule number used in the UCP. The service provider profit amount and profit ratio denote the amount of profit and the profit ratio for sale price that the service provider 112 can get when single content or album content has been purchased. The price denotes the sale price of single content and album content set by the service provider 112 on the basis of the usage right description and the corresponding minimum sale price. The data size is the data size of information to be transmitted. This transmission information consists of the point set by the service provider 112, which is added to the user's point amount when the user purchases the usage right, mileage information consisting of the discount amount of the usage right according to this point, and the various information set by the service provider 112 as required.

When generating the PT, the service provider 112 can set all purchasable usage rights indicated by the corresponding UCP as the purchasable usage rights indicated by this PT. At the same time, the service provider 112 can set usage rights selected from among all purchasable usage rights indicated by that UCP as the purchasable usage rights indicated by the PT. Thus, the service provider 112 can select any of the usage rights specified by the content provider 111.

In the PT of album content, the plural rules specifies each a sale price according to album purchase form. Of the plural single content PTs stored in the album content PT, the rule of the PT of single content that can be sold as a single piece of music specifies the sale price of this single content to be sold.

Therefore, in the album content PT, only this PT above can recognize both the sale price of album and the sale price of single content that can be sold as a single piece of music.

Further, in the PT of album content, the signature is attached to the entire PT, so that verifying only this signature allows checking of the PT of this album content and the PTS of single contents for tampering without verifying each one of single content PT, thereby facilitating signature verification.

It should be noted that, in the PTs of single content and album content, the information whether or not having been verified or not verified the signature for content can be stored as with the case of the UCPs described above with reference to FIGS. 59 and 60. In the above-mentioned PT of album content, the PTs of plural single contents constituting this album are stored; but these single content PTs may not be stored therein.

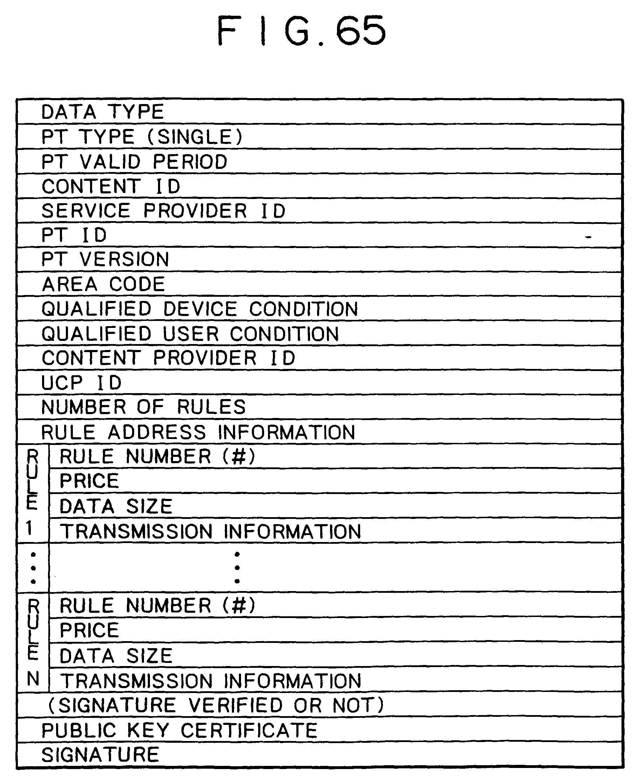

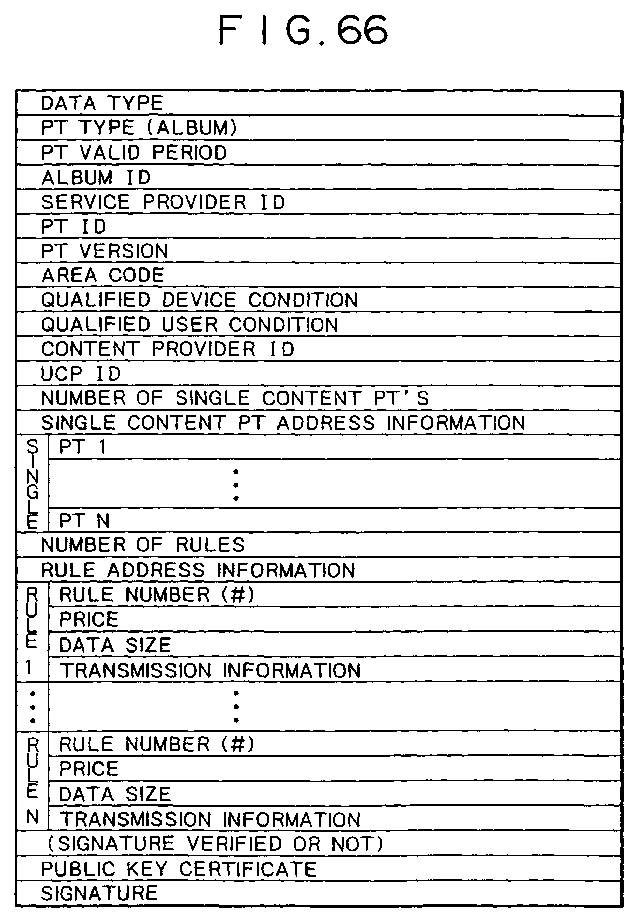

In addition, in the PTs of single and album contents, the service provider profit amount and profit ratio may be collectively managed by the EMD service center 110, so that, as shown in FIGS. 65 and 66, these PTs may be configured without the service provider profit amount and ratio.

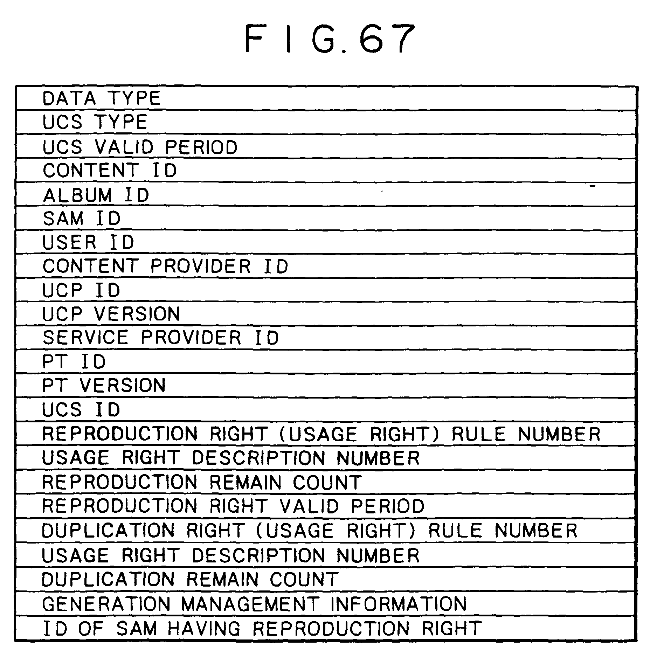

Referring to FIG. 67, there is shown a data format of UCS. This UCS is generated when the user purchases content in the device in the user home network 114, on the basis of the UCP of the purchased content. This USC indicates the usage right description selected by the user from the usage right descriptions indicated by this UCP.

The UCS data include data type, UCS type, UCS valid period, content ID, album ID, SAM ID, user ID, content provider ID, UCP ID, UCP version, service provider ID, PT ID, PT version, UCS ID, rule number attached to reproduction right (usage right) as a serial number, usage right description number, reproduction remain count, reproduction right valid period, rule number attached to duplication right (usage right) as a serial number, usage right description number, duplication remain count, generation management information, and ID of SAM holding reproduction right.

In the UCS, the data type denotes that these data are UCS data. The UCS type indicates that this UCS is of single content or album content. The UCS valid period denotes a period in which this UCS can be used. This period is represented by date of expiration or the number of days from the start of usage to the end of usage for example.

The content ID describes the ID of the purchased single content. The album ID indicates that the album is purchased. Actually, if content is purchased as a single, the ID of the purchased single content is stored only in the content ID; if content is purchased as album, the IDs of all single contents constituting the album are stored in the content ID and the ID of the album is stored in the album ID. Therefore, the album ID can easily be determined by just checking the album ID whether the purchased content is single or album.

The SAM ID indicates the SAM of the device in the user home network 114 in which content purchase has been processed. The user ID indicates that plural users who shares the device in the user home network 114 in which content has been purchased are present.

The content provider ID indicates the ID of the content provider 111 that specifies the UCP used for generating a UCS. The UCP ID indicates the UCP used for generating this UCS. The UCP version denotes the version information of the UCP used for generating the UCS. The service provider ID denotes the ID of the service provider 112 that generated the PT used for generating the UCS. The PT ID denotes the PT used for generating this UCS. Consequently, these items of information indicate the content provider 111 or the service provider 112 from which the user purchased content.

The UCS ID is attached by the SAM of the device in the user home network 114 that purchased content, thereby identifying this UCS. The reproduction right rule number indicates a serial number attached to the reproduction right of the usage right. For this rule number, the number of the rule indicated by the corresponding UCP and PT is used without change. The usage right description indicates the description of reproduction right to be described later. The reproduction remain count indicates the remaining number of times for which the purchased content can be reproduced. The reproduction right valid period indicates a period in which the purchased content can be reproduced. This period is defined by an expiration date for reproduction, for example.

The duplication right rule number indicates a serial number attached to the duplication right of the usage right. For this rule number, the number of the rule indicated by the corresponding UCP and PT is used without change.

The usage right description indicates the description of duplication right to be described later. The duplication remain count indicates the remaining number of times for which the purchased content can be duplicated.

The generation management information indicates the remaining number of times for which the repurchased content can be repurchased. The ID of the SAM holding reproduction right indicates the SAM holding the reproduction right at the current point of time. When management shift is made, the ID of the SAM having the reproduction right changes.

It should be noted that, in the UCS, a valid period may be specified for the reproduction right. If the valid period is specified, the duplication enabled period for purchased content is indicated by the expiration date of this valid period.

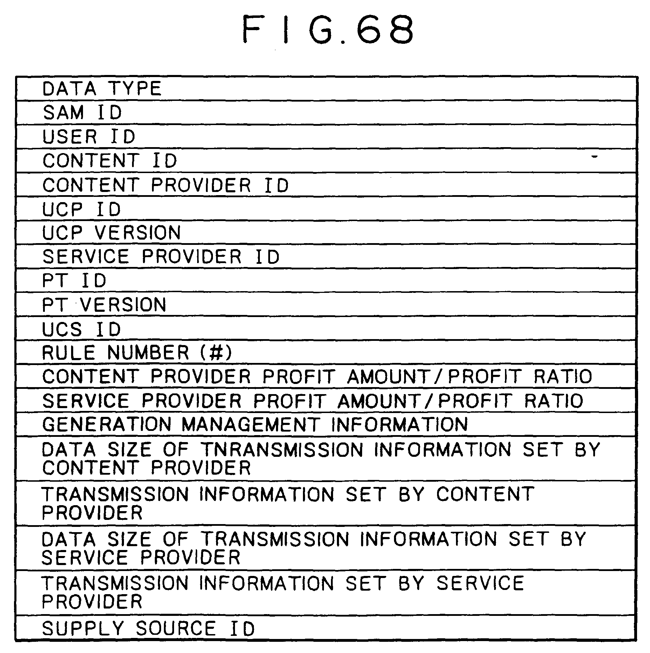

Referring to FIG. 68, there is shown information on charges, which is generated by the device in the user home network 114 at purchasing content, on the basis of the UCP and the PT corresponding to the content.

The information on charges includes data type, SAM ID, user ID, content ID, content provider ID, UCP ID, UCP version, service provider ID, PT ID, PT version, UCS ID, rule number, profit amount and profit ratio of content provider 111, profit amount and profit ratio of service provider, generation management information, data size of transmission information set by content provider, transmission information set by that content provider, data size of transmission information set by service provider, transmission information set by that service provider, and ID of supply source.

In the above-mentioned information on charges, the data type indicates information on charges. The SAM ID indicates the SAM of the device that generated this information on charges by executing content purchase processing. The user ID indicates plural users who share the device in the user home network 114 in which content has been purchased are present. The content ID indicates the purchased content (single content or album content).

The content provider ID indicates the ID of the content provider 111 that specified the UCP used for the content purchase processing (namely, the ID of the content provider 111 included in this UCP). The UCP ID indicates the UCP used for the content purchase processing. The UCP version indicates the version information of the UCP used for the content purchase processing. The service provider ID indicates the ID of the service provider 112 that generated the PT used for content purchase processing (namely, the ID of the service provider included in this PT). The PT ID indicates the PT used for the content purchase processing. The PT version indicates the version information used for content purchase processing.

The UCS ID indicates the ID of the UCS generated at content purchase processing. The rule number indicates the number attached to the purchased usage right as a serial number. The profit amount and profit ratio of content provider indicate the amount of money of the share to be distributed to the content provider 111 due to the purchase of content and the ratio to the sale respectively. The profit amount and profit ratio of service provider 112 indicate the amount of money of the share to be distributed to the service provider 112 upon the purchase of the content and the ratio to the sale, respectively.

The generation management information indicates the generation of the purchased content. The data size of transmission information set by a content provider and the transmission information set by that content provider store the data size indicated by the UCP used for content purchase processing and the transmission information without change. The data size of transmission information set by a service provider and the transmission information set by that service provider store the data size indicated by the PT used for content purchase processing and the transmission information without change. The supply source ID indicates the device from which the content purchased and processed is provided. This ID is accumulated every time the content is repurchased.

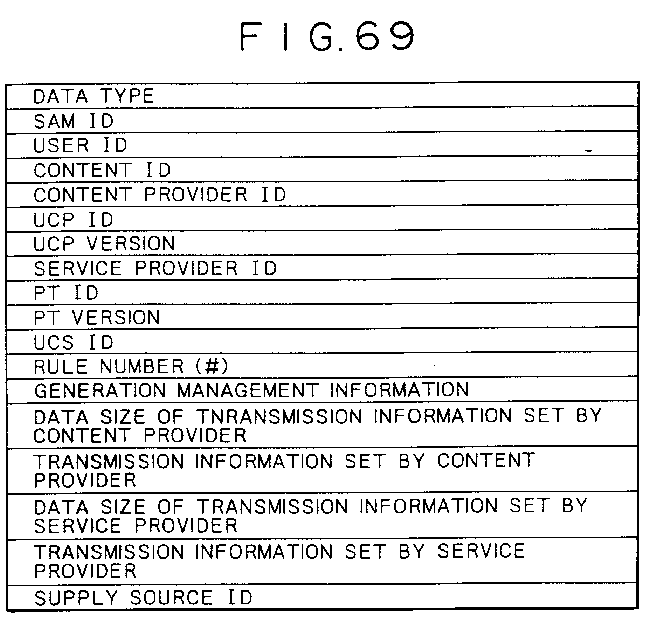

It should be noted that, in the above-mentioned information on charges, the profit amount and profit ratio of the content provider and the profit amount and profit ratio of the service provider may be collectively managed by the EMD service center 110. Therefore, as shown in FIG. 69, the information on charges may also be configured without these profit amounts and profit ratios of content provider and service provider.

As described, in the EMD system according to the second embodiment of the invention, the code associated with discount information is specified among the content provider 111, the service provider 112, and the EMD service center 110. The content provider 111 sets, by means of the UCP, a code value indicative of the description of discount information for each content usage description. The service provider 112 sets, by means of PT, a code value indicative of discount information for the price condition of content. These UCP and PT are sent to the receiver 113 along with the content.

Next, in this EMD system, on the basis of the UCP and PT corresponding to the content specified by the user for purchase, the SAM 125 of the receiver 113 stores the code values indicative of the descriptions of the discount information set by the content provider 111 and the service provider 112, as desired, to generate information on charges. The SAM 125 then sends the generated information on charges along with the corresponding UCP and PT to the EMD service center 110. The EMD service center 110 computes a discount price on the basis of the code values indicative of the descriptions of the discount information set by the content provider 111 and the service provider 112 as desired.

Therefore, in the above-mentioned EMD system, the content usage description and the discount information according to that usage description are set by the content provider 111 side, thereby making it unnecessary for the SAM 125 of the receiver 113 to hold the discount information beforehand nor recognize it. This allows the content provider 111 and the service provider 112 to set discount information as desired. This also facilitates the setting of new rules (usage descriptions) for discount information among the content provider 111, the service provider 112, and the EMD service center 110. Consequently, the SAM 125 of the receiver 113 can easily execute discount processing according to various rules (usage descriptions) upon purchase of content.

In the above-mentioned EMD system, if a discount given to a bundle sale of two or more pieces of content at once is specified as a new rule of discount information, such a bundle of contents is set to "Usage Description" of the UCP in the content provider 111 and a code value of the discount information is set to "Usage Description." At the same time, the code value of the discount information is set to "Price Condition" of the PT corresponding to that UCP in the service provider 112. Consequently, in the EMD service center 110, the sale price for the bundle of content can be easily discounted in the receiver 113 on the basis of the information on charges generated this time while the receiver 113 is not particularly aware of the sale of the bundle of content being subject to discount.

In the above-mentioned EMD system, a signature is attached to each of the UCP and the PT and the signed UCP and PT are transmitted. Consequently, in the EMD service center 110, the sale price can be discounted on the basis of the official discount information set by the content provider 111 and the service provider 112. At the same time, the signed settlement information for content provider and the signed settlement information for service provider are sent from the EMD service center 110 to the content provider 111 and the service provider 112, respectively. Consequently, the content provider 111 and the service provider 112 can check if the discount information set by these providers 111 and 112 has been used correctly or not.

In the above-mentioned EMD system, point information is provided for discount information and the user can specify to whether to use or not this point information as desired. Consequently, in addition to compulsory, unilateral discount by the system, the content purchasing side can request discount, thereby significantly enhancing the ease of use of the EMD system itself. It should be noted that, in using the point information, a discount price is calculated by directly subtracting a discount amount corresponding to the point information to be used from a sale price, thereby facilitating the use of this point information without resorting to such settlement methods as credit card, bank transaction, and prepaid electronic money.

According to the above-mentioned constitution, the code associated with discount information is shared among the content provider 111, the service provider 112, and the EMD service center 110. The content provider 111 and the service provider 112 separately sets discount information code values in the UCP and the PT. When content purchase is made, the receiver 113 stores the discount information code values set by these providers 111 and 112 into the information on charges generated upon the purchase of content and sends this information on charges to the EMD service center 110 as it is. On the basis of the discount information code values included in the received information on charges, the EMD service center 110 computes a discount price. Thus, the above-mentioned constitution allows the content provider 111 and the service provider 112 to set discount information as desired, to specify new rules associated with discount information for use, thereby easily realizing wide discounting for content purchase.


(3) Other embodiments


In the above-mentioned first and second embodiments, the user home networks 5 and 114 made up of the receiver 51 and the receiver 113, respectively, are used for the information processing apparatus according to the present invention. However, it will be apparent to those skilled in the art that the invention is not limited to this information processing apparatus; rather, a wide variety of information processing apparatuses having other configurations are also available.

In the above-mentioned first and second embodiments, the EMD service centers 1 and 110 are used respectively for the information management apparatus according to the present invention. However, it will be apparent to those skilled in the art that a wide variety of management apparatuses having other configurations are also available.

In the above-mentioned second embodiment, the EMD system is used for the information providing system according to the present invention. However, it will be apparent to those skilled in the art that, in addition to the EMD system, various other information providing system are also available including systems for providing non-music content such as computer programs and video data.

In the above-mentioned second embodiment, the content provider 111 and the service provider 112 are used for the information transmission apparatuses according to the present invention. However, it will be apparent to those skilled in the art that the present invention is not limited to these providers; rather, also available are information transmission apparatuses of other configurations such as those composed of the content provider 111 alone or the service provider 112 alone.

In the above-mentioned first embodiment, the storage module 73 is used for storage means for storing the discount amount of content usage fee. However, it will be apparent to those skilled in the art that the present invention is not limited to the storage module 73; rather, various other storage means are also available as long as they can store the discount amount of content usage fee.

In the above-mentioned first embodiment, the charging processing module 72 is used for generating means for generating information on charges including the information for identifying content usage fee. However, it will be apparent to those skilled in the art that the present invention is not limited to the charging processing module 72; rather, various other generating means are available as long as they can generate the information on charges including the information for identifying content usage fee.

In the above-mentioned first embodiment, the input control block 68 is used for setting means for setting, to the information on charges generated by the generation means, the settlement of content fee is to be performed by discounting the usage fee by the discount amount stored in the storage means. However, it will be apparent to those skilled in the art that the present invention is not limited to the input control block 68; rather, other various setting means are also available as long as they can set the settlement processing with discount to the information on charges generated by the generating means.

In the above-mentioned first embodiment, the communication block 61 is used for transmission means for sending to the management apparatus, the information on charges generated by the generating means and set with the above-mentioned settlement processing with discount by the setting means. However, it will be apparent to those skilled in the art that the present invention is not limited to the communication block 61 for settlement processing; rather, various other communication means are also available as long as they can send the above-mentioned information on charges to the management apparatus.

In the above-mentioned first embodiment, the user management block 18 is used for storage means for storing the discount amount that can be used by the information processing apparatus. However, it will be apparent to those skilled in the art that the present invention is not limited to the user management block 18; rather, various other storage means are also available as long as they can store the discount amount that can be used by the information processing apparatus.

In the above-mentioned first embodiment, the user management block 18 is used for receiving means for receiving the information on charges that is supplied from the information processing apparatus, including the information for identifying content usage fee, and being set with the settlement processing in which the content charges is discounted by a discount amount. However, it will be apparent to those skilled in the art that the present invention is not limited to the user management block 18; rather, various other receiving means are also applicable as long as they can receive the above-mentioned information on charges set with the settlement processing performed by discounting the charge for content by discount amount.

In the above-mentioned first embodiment, the charging block 19 is used for reading means for reading the content usage fee from the information on charges received by the receiving means. However, it will be apparent to those skilled in the art that the present invention is not limited to the charging block 19; rather, various other reading means are also available as long as they can read the content usage fee from the information on charges received by the receiving means.

In the above-mentioned first embodiment, the history data management block 15 is used for settling means for settling content fee by discounting the discount amount stored in the storage means from the usage fee identified by the information on charges. However, it will be apparent to those skilled in the art that the present invention is not limited to the history data management block 15; rather, various other settling means are also available as long as they can make the above-mentioned settlement processing in conjunction with discount processing.

In the above-mentioned first embodiment, the profit distribution block 16 is used for computing means for computing the discount amount that can be used by the information processing apparatus on the basis of the amount of charges settled by the settling means. However, it will be apparent to those skilled in the art that the present invention is not limited to the profit distribution block 16; rather, various other computing means are also available as long as they can compute the discount amount that can be used by the information processing apparatus.

In the above-mentioned first embodiment, the charging block 19 is used for means for determining a discount amount by multiplying a charging amount to be settled by the settling means by a predetermined discount ratio. However, it will be apparent to those skilled in the art that the present invention is not limited to the charging block 19; rather, various other determination means are also available as long as they can determine a discount amount by multiplying the above-mentioned charging amount by the above-mentioned predetermined discount ratio.

In the above-mentioned first embodiment, the profit distribution block 16 is used for discount amount computing means for computing a discount share amount for the content providing apparatus by multiplying a discount amount determined by the determination means by a first share ratio, a discount share amount for the information providing apparatus by multiplying the above-mentioned discount amount by a second share ratio, and a discount share amount for the management apparatus by multiplying the above-mentioned discount amount by a third share ratio. However, it will be apparent to those skilled in the art that the present invention is not limited to the profit distribution block 16; rather, various other discount amount computing means are also available as long as they can compute the above-mentioned discount share amounts by multiplying the discount amount by the first/second/third discount ratio respectively for the information processing apparatus, information providing apparatus and the management apparatus.

In the above-mentioned second embodiment, the code is used for setting discount information. However, it will be apparent to those skilled in the art that the present invention is not limited to this use of code; rather, the code usage is widely applied to various other processing operations such as categorizing content usage status for example.

As described and according to an information processing apparatus according to claim 1 appended hereto, an information processing method according to claim 2 appended hereto, and an information providing medium according to claim 3 appended hereto, information on charges includes information that charges is settled by discounting a content usage fee. Consequently, content can be purchased at a discount price.

As described and according to an information processing apparatus according to claim 4 appended hereto, an information processing method according to claim 7 appended hereto, and an information providing medium according to claim 8 appended hereto, charges is settled after discounting usage fee by a discount amount. Consequently, content can be provided at a discount price.

As described, there is provided an information providing system comprising: an information transmission apparatus for sending predetermined content data and a code indicative of predetermined information associated with use of the content data; an information processing apparatus for receiving the content data and the code supplied from the information transmission apparatus and sending the code when using the content data; and a management apparatus for receiving the code supplied from the information processing apparatus and executing predetermined processing using the predetermined information indicated by the code. According to the above-mentioned information providing system, when the content data are used, predetermined processing according to use of these content data can be executed, and at the same time, only changing the code specified by the management apparatus can easily allow execution of different processing operations for the use of the content data, thereby realizing the information processing apparatus for easily executing various processing.

As described, there is provided an information transmission apparatus managed by a management apparatus for sending predetermined content data to an information processing apparatus, the information transmission apparatus sending the predetermined content data and a code indicative of predetermined information associated with use of the predetermined content data, the code being sent from the information processing apparatus to the management apparatus when using the predetermined content data, the management apparatus executing predetermined processing using the predetermined information on the basis of the code received from the information processing apparatus. According to the above-mentioned information transmission apparatus, when the content data are used, the management apparatus can execute predetermined processing according to the use of the content data, and at the same time, only changing the specified code allows the management apparatus to easily execute different processing operations for the use of the content data.

As described, there is provided a management apparatus for managing an information processing apparatus for receiving predetermined content data from an information transmission apparatus, wherein the predetermined content data and a code indicative of predetermined information associated with use of the content data are sent from the information transmission apparatus to the information processing apparatus and the code is sent, when using the content data, from the information processing apparatus to the management apparatus, which executes predetermined processing by use of the predetermined information indicated by the received code. According to the above-mentioned management apparatus, when the content data are used, predetermined processing according to the use of the content data can be executed, and at the same time, only changing the specified code facilitates different processing operations for the use of the content data.

As described, there is provided an information processing apparatus managed by a management apparatus for receiving predetermined content data from an information transmission apparatus, the information processing apparatus receiving the content data and a code indicative of predetermined information associated with use of the content data from the information transmission apparatus and sending the received code, when using the content data, to the management apparatus that executes predetermined processing by use of the predetermined information indicated by the received code. According to the above-mentioned information processing apparatus, when the content data are used, only sending the corresponding code to the management apparatus allows it to execute the processing corresponding to the use of the content data, and at the same time, if the specified code is changed, the management apparatus need not be aware of that change. Sending the changed code to the management apparatus allows it to easily execute different processing operations for the use of the content data.

As described, there is provided an information providing method comprising the steps of: data sending step in which predetermined content data and a code indicative of predetermined information associated with use of the content data are sent from an information transmission apparatus to an information processing apparatus; code sending step in which the content data and the code sent from the information transmission apparatus are received by the information processing apparatus and the information processing apparatus sends the code when using the content data to a management apparatus; and processing executing step in which the code sent from the information processing apparatus is received by the management apparatus and the management apparatus executes predetermined processing by use of the information indicated by the received code. According to the above-mentioned information providing method, when the content data are used, predetermined processing according to the use of the content data can be executed, and at the same time, only changing the code specified by the management apparatus facilitates different processing operations for the use of the content data.

While the preferred embodiments of the present invention have been described using specific terms, such description is for illustrative purposes only, and it is to be understood that changes and variations may be made without departing from the scope of the appended claims.

**Claims**

1. An information processing apparatus managed by a management apparatus for decrypting encrypted information and using decrypted information, comprising:

   storage means for storing a discount amount of a usage fee of said encrypted information;
   generating means for generating information on charges including information for identifying said usage fee of said encrypted information;
   setting means for setting, to said information on charges, information that charges for said encrypted information is settled by discounting said discount amount; and
   sending means for sending, to said management apparatus, said information on charges set with said information that charges for said encrypted information is settled by discounting said discount amount.

2. An information processing method for an information processing apparatus managed by a management apparatus for decrypting encrypted information and using decrypted information, comprising the steps of:

   storing a discount amount of a usage fee of said encrypted information;
   generating information on charges including information for identifying said usage fee of said encrypted information;
   setting, to said information on charges, information that charges for said encrypted information is settled by discounting said discount amount; and
   sending, to said management apparatus, said information on charges set with said information that charges for said encrypted information is settled by discounting said discount amount.

3. An information providing medium for providing a computer-readable program for making an information processing method for an information processing apparatus managed by a management apparatus for decrypting encrypted information and using decrypted information execute processing comprising the steps of:

   storing a discount amount of a usage fee of said encrypted information;
   generating information on charges including information for identifying said usage fee of said encrypted information;
   setting, to said information on charges, information that charges for said encrypted information is settled by discounting said discount amount; and
   sending, to said management apparatus, said information on charges set with said information that charges for said encrypted information is settled by discounting said discount amount.

4. A management apparatus for managing an information processing apparatus that decrypts encrypted information to use decrypted information, comprising:

   storage means for storing a discount amount usable by said information processing apparatus;
   receiving means for receiving information on charges supplied from said information processing apparatus, including information for identifying a usage fee of said encrypted information, and set with information that charges for said encrypted information is settled by discounting said discount amount;
   reading means for reading said usage fee of said encrypted information from said information on charges;
   settling means for settling charges of said encrypted information by subtracting said discount amount from said usage fee identified by said information on charges; and
   computing means for computing, on the basis of an amount of said charges settled by said settling means, a discount amount usable by said information processing apparatus.

5. The management apparatus according to claim 4, further comprising: determining means for determining a discount amount by multiplying said charges to be settled by said settling means by a predetermined discount ratio; wherein said storage means stores said discount amount determined by said determining means.

6. The management apparatus according to claim 4, further comprising discount amount computing means for computing, when said management apparatus is connected to an information providing apparatus for providing said encrypted information and a information providing apparatus for providing a predetermined service in correspondence with said encrypted information, a discount share amount for said information providing apparatus by multiplying said discount amount determined by said determining means by a first share ratio, a discount share amount for said information providing apparatus by multiplying said discount amount by a second share ratio, and a discount share amount for said management apparatus by multiplying said discount amount by a third share ratio.

7. A managing method for a management apparatus for managing an information processing apparatus that decrypts encrypted information to use decrypted information, comprising the steps of:

storing a discount amount usable by said information processing apparatus;
receiving information on charges supplied from said information processing apparatus, including information for identifying a usage fee of said encrypted information, and set with information that charges for said encrypted information is settled by discounting said discount amount;
reading said usage fee of said encrypted information from said information on charges;
settling charges of said encrypted information by subtracting said discount amount from said usage fee identified by said information on charges; and
computing, on the basis of an amount of said charges settled in said settling step, a discount amount usable by said information processing apparatus.

8. An information providing medium for providing a computer-readable program for making a management apparatus for managing an information processing apparatus that decrypts encrypted information to use decrypted information execute processing comprising the steps of:

storing a discount amount usable by said information processing apparatus;
receiving information on charges supplied from said information processing apparatus, including information for identifying a usage fee of said encrypted information, and set with information that charges for said encrypted information is settled by discounting said discount amount;
reading said usage fee of said encrypted information from said information on charges;
settling charges of said encrypted information by subtracting said discount amount from said usage fee identified by said information on charges; and
computing, on the basis of an amount of said charges settled in said settling step, a discount amount usable by said information processing apparatus.

9. An information providing system comprising:

an information transmission apparatus for sending predetermined content data and a code indicative of predetermined information associated with usage of said content data;
an information processing apparatus for receiving said content data and said code and sending said code when using said content data; and
a management apparatus for receiving said code and executing predetermined processing using said predetermined information indicated by said code.

10. The information providing system according to claim 9, wherein said predetermined information is discount information, and said management apparatus, on receiving said code, executes discount processing using said discount information indicated by said code.

11. The information providing system according to claim 9, wherein said predetermined information is discount point information and said management apparatus, on receiving said code, executes discount processing using said discount point information indicated by said code.

12. The information providing system according to claim 11, wherein said information processing apparatus, when said content data are used, attaches a flag indicative of use or no use of said discount point information to said code and sends said code to said management apparatus; and said management apparatus, if said flag attached to said code indicates use of said discount point information, executes said discount processing using said discount point information and, if said flag indicates no use of said discount point information, stores said discount point information.

13. An information transmission apparatus managed by a management apparatus for sending predetermined content data to an information processing apparatus, said information transmission apparatus sending said predetermined content data and a code indicative of predetermined information associated with use of said predetermined content data, said code being sent from said information processing apparatus to said management apparatus when using said predetermined content data, said management apparatus executing predetermined processing using said predetermined information on the basis of said code received from said information processing apparatus.

14. The information transmission apparatus according to claim 13, wherein said predetermined information is discount information and said code for having said management apparatus execute discount processing using said discount information is sent to said information processing apparatus.

15. The information transmission apparatus according to claim 13, wherein said predetermined information is discount point information and said code for making said management apparatus execute discount information using said discount point information is sent to said information processing apparatus.

16. A management apparatus for managing an information processing apparatus for receiving predetermined content data from an information transmission apparatus, wherein said predetermined content data and a code indicative of predetermined information associated with use of said content data are sent from said information transmission apparatus to said information processing apparatus and said code is sent, when using said content data, from said information processing apparatus to said management apparatus, which executes predetermined processing by use of said predetermined information indicated by said received code.

17. The management apparatus according to claim 16, wherein said predetermined information is discount information and, on receiving said code from said information processing apparatus, said management apparatus executes discount processing by use of said discount information indicated by said received code.

18. The management apparatus according to claim 16, wherein said predetermined information is discount point information and, on receiving said code from said information processing apparatus, said management apparatus executes discount processing by use of said discount point information indicated by said received code.

19. The management apparatus according to claim 18, wherein said information processing apparatus, when said content data are used, attaches a flag indicative of use or no use of said discount point information to said code and sends said code to said management apparatus; and said management apparatus, if said flag attached to said code indicates use of said discount point information, executes said discount processing using said discount point information and, if said flag indicates no use of said discount point information, stores said discount point information.

20. An information processing apparatus managed by a management apparatus for receiving predetermined content data sent from an information transmission apparatus, said information processing apparatus receiving said content data and a code indicative of predetermined information associated with use of said content data from said information transmission apparatus and sending said received code, when using said content data, to said management apparatus that executes predetermined processing by use of said predetermined information.

21. The information processing apparatus according to claim 20, wherein said predetermined information is discount information and, when using said content data, said code is sent to said management apparatus that executes discount processing by use of said discount information indicated by said code.

22. The information processing apparatus according to claim 20, wherein said predetermined information is discount point information and, when using said content data, said code is sent to said management apparatus that executes discount processing by use of said discount point information indicated by said code.

23. The information processing apparatus according to claim 22, wherein said information processing apparatus, when said content data are used, sends said code attached with a flag indicative of use or no use of said discount point information to said management apparatus that executes said discount processing if said flag indicates use of said discount point information and, if said flag indicates no use of said discount point information, stores said discount point information.

24. An information providing method comprising the steps of:

data sending in which predetermined content data and a code indicative of predetermined information associated with use of said content data are sent from an information transmission apparatus to an information processing apparatus;

code sending in which said content data and said code sent from said information transmission apparatus are received by said information processing apparatus and said information processing apparatus sends said code when using said content data to a management apparatus; and

processing executing in which said code sent from said information processing apparatus is received by said management apparatus and said management apparatus executes predetermined processing by use of said predetermined information indicated by said received code.

25. The information providing method according to claim 24, wherein said data sending step sends said code indicative of said predetermined information comprising discount information from said information transmission apparatus; and said processing executing step executes, by said management apparatus, discount processing by use of said discount information indicated by said received code.

26. The information providing method according to claim 24, wherein said data sending step sends said code indicative of said predetermined information comprising discount point information from said information transmission apparatus; and said processing executing step executes, by said management apparatus, discount processing by use of said discount point information indicated by said received code.

27. The information providing method according to claim 26, wherein said code sending step attaches, by said information processing apparatus, a flag indicative of use or no use of said discount point information to said code when using said content data and sends said code to said management apparatus; and said processing executing step executes, by said management apparatus, said discount processing by use of said discount point information if said flag attached to said code indicates use of said discount point information and stores said discount point information if said flag indicates no use of said discount point information.

# F I G . I

EP 1 047 030 A2

# FIG.2

CONTENT PROVIDER 2
- CONTENT
- CONTENT KEY
- UCP

CONTENT
CONTENT KEY
UCP

SERVICE PROVIDER 3
- PT

CONTENT
CONTENT KEY
UCP
PT

USER HOME NETWORK 5
- UCS
- INFORMATION ON CHARGES

PT

UCP

PT
UCP
INFORMATION ON CHARGES

EMD SERVICE CENTER

DELIVERY KEY Kd

DELIVERY KEY Kd

⟦⟧ : DECRYPTED INFORMATION

EP 1 047 030 A2

# F I G . 3

```
                    11                  14                        17
┌──────────────┐        ┌──────────────┐   ┌──────────────────┐
│ SERVICE      │        │              │   │ CROSS-           │
│ PROVIDER     │        │ KEY  SERVER  │   │ AUTHENTICATION   │
│ MANAGEMENT   │        │              │   │ BLOCK            │
│ BLOCK        │        └──────────────┘   └──────────────────┘
└──────────────┘

        12                  15                        18
┌──────────────┐        ┌──────────────┐   ┌──────────────────┐
│ CONTENT      │        │ HISTORY      │   │ USER             │
│ PROVIDER     │        │ DATA         │   │ MANAGEMENT       │
│ MANAGEMENT   │        │ MANAGEMENT   │   │ BLOCK            │
│ BLOCK        │        │ BLOCK        │   └──────────────────┘
└──────────────┘        └──────────────┘

        13                  16                        19
┌──────────────┐        ┌──────────────┐   ┌──────────────────┐
│ COPYRIGHT    │        │ PROFIT       │   │ CHARGING         │
│ MANAGEMENT   │        │ DISTRIBUTION │   │ BLOCK            │
│ BLOCK        │        │ BLOCK        │   └──────────────────┘
└──────────────┘        └──────────────┘

        21                          20
┌──────────────┐        ┌──────────────┐
│ AUDIT        │        │ CASHIER      │
│ BLOCK        │        │ BLOCK        │
└──────────────┘        └──────────────┘
```

1

# F I G. 4

**DELIVERY KEYS HELD
BY CONTENT PROVIDER**

DELIVERY
KEY TO →
BE USED

| DELIVERY KEY | DELIVERY KEY VERSION | VALID PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

SEND
DELIVERY
KEY

**DELIVERY KEYS HELD BY EMD
SERVICE CENTER**

DELIVERY
KEY TO →
BE USED

| DELIVERY KEY | DELIVERY KEY VERSION | VALID PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

SEND
DELIVERY
KEY

**DELIVERY KEYS HELD BY RECEIVER**

DELIVERY
KEY TO →
BE USED

| DELIVERY KEY | DELIVERY KEY VERSION | VALID PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |

EP 1 047 030 A2

# F I G . 5

**DELIVERY KEYS HELD BY CONTENT PROVIDER**

DELIVERY KEY TO BE USED →

| DELIVERY KEY | DELIVERY KEY VERSION | VALID PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

**DELIVERY KEYS HELD BY EMD SERVICE CENTER**

DELIVERY KEY TO BE USED →

SEND DELIVERY KEY

| DELIVERY KEY | DELIVERY KEY VERSION | VALID PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

SEND DELIVERY KEY

**DELIVERY KEYS HELD BY RECEIVER**

DELIVERY KEY TO BE USED →

| DELIVERY KEY | DELIVERY KEY VERSION | VALID PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |

EP 1 047 030 A2

# F I G. 6

EP 1 047 030 A2

**DELIVERY KEYS HELD BY CONTENT PROVIDER**

DELIVERY KEY TO BE USED →

| DELIVERY KEY | DELIVERY KEY VERSION | VALID PERIOD | |
|---|---|---|---|
| | | START | END |
| cccccccc | 3 | 1998/3/1 | 1998/3/31 |
| ddddddd | 4 | 1998/4/1 | 1998/4/30 |
| eeeeeeee | 5 | 1998/5/1 | 1998/5/31 |
| fffffff | 6 | 1998/6/1 | 1998/6/30 |
| ggggggg | 7 | 1998/7/1 | 1998/7/31 |
| hhhhhhhh | 8 | 1998/8/1 | 1998/8/31 |

SEND DELIVERY KEY →

**DELIVERY KEYS HELD BY EMD SERVICE CENTER**

DELIVERY KEY TO BE USED →

| DELIVERY KEY | DELIVERY KEY VERSION | VALID PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| ccccccccc | 3 | 1998/3/1 | 1998/3/31 |
| ddddddd | 4 | 1998/4/1 | 1998/4/30 |
| eeeeeeee | 5 | 1998/5/1 | 1998/5/31 |
| fffffff | 6 | 1998/6/1 | 1998/6/30 |
| ggggggg | 7 | 1998/7/1 | 1998/7/31 |
| hhhhhhhh | 8 | 1998/8/1 | 1998/8/31 |

SEND DELIVERY KEY ↓

**DELIVERY KEYS HELD BY RECEIVER**

DELIVERY KEY TO BE USED →

| DELIVERY KEY | DELIVERY KEY VERSION | VALID PERIOD | |
|---|---|---|---|
| | | START | END |
| ccccccccc | 3 | 1998/3/1 | 1998/3/31 |
| ddddddd | 4 | 1998/4/1 | 1998/4/30 |
| eeeeeeee | 5 | 1998/5/1 | 1998/5/31 |

# F I G. 7

DELIVERY KEYS HELD
BY CONTENT PROVIDER

DELIVERY
KEY TO → BE USED

| DELIVERY KEY | DELIVERY KEY VERSION | VALID PERIOD | |
|---|---|---|---|
| | | START | END |
| ddddddd | 4 | 1998/4/1 | 1998/4/30 |
| eeeeeee | 5 | 1998/5/1 | 1998/5/31 |
| fffffff | 6 | 1998/6/1 | 1998/6/30 |
| ggggggg | 7 | 1998/7/1 | 1998/7/31 |
| hhhhhhh | 8 | 1998/8/1 | 1998/8/31 |
| iiiiiii | 9 | 1998/9/1 | 1998/9/30 |

SEND DELIVERY KEY

DELIVERY KEYS HELD BY EMD
SERVICE CENTER

DELIVERY
KEY TO → BE USED

| DELIVERY KEY | DELIVERY KEY VERSION | VALID PERIOD | |
|---|---|---|---|
| | | START | END |
| aaaaaaa | 1 | 1998/1/1 | 1998/1/31 |
| bbbbbbb | 2 | 1998/2/1 | 1998/2/28 |
| ccccccc | 3 | 1998/3/1 | 1998/3/31 |
| ddddddd | 4 | 1998/4/1 | 1998/4/30 |
| eeeeeee | 5 | 1998/5/1 | 1998/5/31 |
| fffffff | 6 | 1998/6/1 | 1998/6/30 |
| ggggggg | 7 | 1998/7/1 | 1998/7/31 |
| hhhhhhh | 8 | 1998/8/1 | 1998/8/31 |
| iiiiiii | 9 | 1998/9/1 | 1998/9/30 |

SEND DELIVERY KEY

DELIVERY KEYS HELD BY RECEIVER

DELIVERY
KEY TO → BE USED

| DELIVERY KEY | DELIVERY KEY VERSION | VALID PERIOD | |
|---|---|---|---|
| | | START | END |
| ddddddd | 4 | 1998/4/1 | 1998/4/30 |
| eeeeeee | 5 | 1998/5/1 | 1998/5/31 |
| fffffff | 6 | 1998/6/1 | 1998/6/30 |

EP 1 047 030 A2

# F I G.8

| DELIVERY KEY | DELIVERY KEY VERSION | VALID PERIOD | |
|---|---|---|---|
| | | START | END |
| aaaaaaaaa | 1 | 1998/1/1 | 1998/1/31 |

PROVISIONAL DELIVERY KEY Kd

# F I G . 9

| SAM ID | | ID OF SAM 62 |
|---|---|---|
| DEVICE NUMBER | | DEVICE NUMBER (100) OF RECEIVER 51 |
| SETTLEMENT ID | | ID OF SETTLEMENT USER F |
| SETTLEMENT USER INFORMATION | NAME | NAME OF USER F |
| | ADDRESS | ADDRESS OF USER F |
| | TELEPHONE NO. | TELEPHONE NO. OF USER F |
| | SETTLEMENT ORGANIZATION INFORMATION | SETTLEMENT ORGANIZATION INFORMATION OF USER F |
| | BIRTHDAY | BIRTHDAY OF USER F |
| | AGE | AGE OF USER F |
| | GENDER | GENDER OF USER F (MALE) |
| | USER ID | ID OF USER F |
| | PASSWORD | PASSWORD OF USER F |
| SUBORDINATE USER INFORMATION | NAME | |
| | ADDRESS | |
| | TELEPHONE NO. | |
| | BIRTHDAY | |
| | GENDER | |
| | USER ID | |
| | PASSWORD | |
| DISCOUNT POINT INFORMATION | | DISCOUNT POINT INFORMATION OF RECEIVER 51 |

SYSTEM REGISTRATION INFORMATION

# F I G. I0

| USER | DISCOUNT AMOUNT |
|---|---|
| SETTLEMENT USER | CP DISCOUNT AMOUNT (2 0 YEN) SP DISCOUNT AMOUNT (3 0 YEN) EMD DISCOUNT AMOUNT (5 0 YEN) |

DISCOUNT POINT INFORMATION OF RECEIVER 5 1

-

# F I G. I I

31 CONTENT SERVER

32 WATERMARK ATTACHMENT BLOCK

33 COMPRESSION BLOCK

34 ENCRYPTION BLOCK

35 RANDOM NUMBER GENERATION BLOCK

36 ENCRYPTION BLOCK

38 SECURE CONTAINER GENERATION BLOCK

37 POLICY STORAGE BLOCK

39 CROSS- AUTHENTICATION BLOCK

2

# FIG.12A

| CONTENT ID | ID OF CONTENT A | |
|---|---|---|
| CONTENT PROVIDER ID | ID OF CONTENT PROVIDER 2 | |
| UCP ID | ID OF UCP A | |
| VALID PERIOD OF UCP | VALID PERIOD OF UCP A | |
| USAGE CONDITION 10 | USER CONDITION 10 | 100 YEN OR MORE |
| | DEVICE CONDITION 10 | NO CONDITION |
| USAGE DESCRIPTION 11 | ID 11 | ID OF USAGE DESCRIPTION 11 |
| | FORM 11 | REPRODUCTION BY PURCHASE |
| | PARAMETER 11 | ×××× |
| | MANAGEMENT SHIFT PERMIT INFORMATION 11 | PERMITTED |
| USAGE DESCRIPTION 12 | ID 12 | ID OF USAGE DESCRIPTION 12 |
| | FORM 12 | FIRST-GENERATION DUPLICATION |
| | PARAMETER 12 | ×××× |
| | MANAGEMENT SHIFT PERMIT INFORMATION 12 | NOT PERMITTED |
| USAGE DESCRIPTION 13 | ID 13 | ID OF USAGE DESCRIPTION 13 |
| | FORM 13 | TIME-LIMITED REPRODUCTION |
| | PARAMETER 13 | ×××× |
| | MANAGEMENT SHIFT PERMIT INFORMATION 13 | NOT PERMITTED |
| USAGE DESCRIPTION 14 | ID 14 | ID OF USAGE DESCRIPTION 14 |
| | FORM 14 | Pay Per Copy 5 |
| | PARAMETER 14 | DUPLICATED 5 TIMES |
| | MANAGEMENT SHIFT PERMIT INFORMATION 14 | NOT PERMITTED |

UCP A

# F I G. I2B

| CONTENT ID | | ID OF CONTENT A |
|---|---|---|
| CONTENT PROVIDER ID | | ID OF CONTENT PROVIDER 2 |
| UCP ID | | ID OF UCP B |
| VALID PERIOD OF UCP | | VALID PERIOD OF UCP B |
| USAGE DESCRIPITION 20 | USER CONDITION 20 | LESS THAN 300 YEN |
| | DEVICE CONDITION 20 | NO CONDITION |
| USAGE DESCRIPTION 21 | ID 21 | ID OF USAGE DESCRIPTION 21 |
| | FORM 21 | Pay Per Play 4 |
| | PARAMETER 21 | REPRODUCED 4 TIMES |
| | MANAGEMENT SHIFT PERMIT INFORMATION 21 | NOT PERMITTED |
| USAGE DESCRIPTION 22 | ID 22 | ID OF USAGE DESCRIPTION 22 |
| | FORM 22 | Pay Per Copy 2 |
| | PARAMETER 22 | DUPLICATED 2 TIMES |
| | MANAGEMENT SHIFT PERMIT INFORMATION 22 | NOT PERMITTED |

UCP B

# FIG. 13A

SOURCE DEVICE

```
┌─────────────────┐
│                 │
│    CONTENT      │
│                 │
└─────────────────┘
```

SHIFT OF
CONTENT
MANAGEMENT →

SHIFT OF
CONTENT
MANAGEMENT

DESTINATION
DEVICE

```
┌─────────────────┐
│                 │
│    CONTENT      │
│                 │
└─────────────────┘
```

ANOTHER DEVICE

```
┌ ─ ─ ─ ─ ─ ─ ─ ─ ┐
│                 │
│    CONTENT      │
│                 │
└ ─ ─ ─ ─ ─ ─ ─ ─ ┘
```

# FIG. 13B

SOURCE DEVICE

```
┌ ─ ─ ─ ─ ─ ─ ─ ─ ┐
│                 │
│    CONTENT      │
│                 │
└ ─ ─ ─ ─ ─ ─ ─ ─ ┘
```

SHIFT OF
CONTENT →

DESTINATION
DEVICE

```
┌─────────────────┐
│                 │
│    CONTENT      │
│                 │
└─────────────────┘
```

EP 1 047 030 A2

FIG.14A

ORIGINAL

FIRST
GENERATION

SECOND
GENERATION

FIG.14B

ORIGINAL

FIRST
GENERATION

SECOND
GENERATION

EP 1 047 030 A2

# F I G .15

CONTENT PROVIDER
SECURE CONTAINER

CONTENT KEY KcoA

CONTENT A

DELIVERY KEY Kd

CONTENT KEY KcoA

UCP A , UCP B

SECRET KEY Kscp OF
CONTENT PROVIDER 2

SIGNATURE

HASH FUNCTION

CONTENT KEY
KcoA

CONTENT A

DELIVERY KEY
Kd

CONTENT KEY
KcoA

UCP A , UCP B

# F I G. 16

CERTIFICATE OF CONTENT PROVIDER 2

VERSION NUMBER OF CERTIFICATE

SERIAL NUMBER OF CERTIFICATE ASSIGNED BY CERTIFICATE AUTHORITY

ALGORITHM AND PARAMETER USED FOR SIGNATURE

NAME OF CERTIFICATE AUTHORITY

VALID PERIOD OF CERTIFICATE

NAME (ID) OF CONTENT PROVIDER 2

PUBLIC KEY $K_{pcp}$ OF CONTENT PROVIDER 2

SECRET KEY $K_{sca}$ OF CERTIFICATE AUTHORITY

SIGNATURE

HASH FUNCTION

VERSION NUMBER OF CERTIFICATE

SERIAL NUMBER OF CERTIFICATE ASSIGNED BY CERTIFICATE AUTHORITY

ALGORITHM AND PARAMETER USED FOR SIGNATURE

NAME OF CERTIFICATE AUTHORITY

VALID PERIOD OF CERTIFICATE

NAME (ID) OF CONTENT PROVIDER 2

PUBLIC KEY $K_{pcp}$ OF CONTENT PROVIDER 2

# F I G .17

# F I G.18A

| CONTENT ID | ID OF CONTENT A | |
|---|---|---|
| CONTENT PROVIDER ID | ID OF CONTENT PROVIDER 2 | |
| UCP ID | ID OF UCP A | |
| SERVICE PROVIDER ID | ID OF SERVICE PROVIDER 3 | |
| PT ID | ID OF PT A-1 | |
| VALID PERIOD OF PT | VALID PERIOD OF PT A-1 | |
| PRICE CONDITION 10 | USER CONDITION 10 | MALE |
| | DEVICE CONDITION 10 | NO CONDITION |
| PRICE DESCRIPTION 11 | 2000 YEN | |
| PRICE DESCRIPTION 12 | 600 YEN | |
| PRICE DESCRIPTION 13 | 100 YEN | |
| PRICE DESCRIPTION 14 | 300 YEN | |

PT A-1

# F I G.18B

| CONTENT ID | ID OF CONTENT A | |
|---|---|---|
| CONTENT PROVIDER ID | ID OF CONTENT PROVIDER 2 | |
| UCP ID | ID OF UCP A | |
| SERVICE PROVIDER ID | ID OF SERVICE PROVIDER 3 | |
| PT ID | ID OF PT A-2 | |
| VALID PERIOD OF PT | VALID PERIOD OF PT A-2 | |
| PRICE CONDITION 20 | USER CONDITION 20 | FEMALE |
| | DEVICE CONDITION 20 | NO CONDITION |
| PRICE DESCRIPTION 21 | 1000 YEN | |
| PRICE DESCRIPTION 22 | 300 YEN | |
| PRICE DESCRIPTION 23 | 50 YEN | |
| PRICE DESCRIPTION 24 | 150 YEN | |

PT A-2

EP 1 047 030 A2

# FIG.19A

| CONTENT ID | ID OF CONTENT A | |
|---|---|---|
| CONTENT PROVIDER ID | ID OF CONTENT PROVIDER 2 | |
| UCP ID | ID OF UCP B | |
| SERVICE PROVIDER ID | ID OF SERVICE PROVIDER 3 | |
| PT ID | ID OF PT B-1 | |
| VALID PERIOD OF PT | VALID PERIOD OF PT B-1 | |
| PRICE CONDITION 30 | USER CONDITION 30 | NO CONDITION |
| | DEVICE CONDITION 30 | SUBORDINATE DEVICE |
| PRICE DESCRIPTION 31 | 100 YEN | |
| PRICE DESCRIPTION 32 | 300 YEN | |

PT B-1

# FIG.19B

| CONTENT ID | ID OF CONTENT A | |
|---|---|---|
| CONTENT PROVIDER ID | ID OF CONTENT PROVIDER 2 | |
| UCP ID | ID OF UCP B | |
| SERVICE PROVIDER ID | ID OF SERVICE PROVIDER 3 | |
| PT ID | ID OF PT B-2 | |
| VALID PERIOD OF PT | VALID PERIOD OF PT B-2 | |
| PRICE CONDITION 40 | USER CONDITION 40 | NO CONDITION |
| | DEVICE CONDITION 40 | MAIN DEVICE |
| PRICE DESCRIPTION 41 | 50 YEN | |
| PRICE DESCRIPTION 42 | 150 YEN | |

PT B-2

EP 1 047 030 A2

# F I G. 20

SERVICE PROVIDER
SECURE CONTAINER

CONTENT KEY KcoA

CONTENT A

DELIVERY KEY Kd

CONTENT KEY KcoA

UCP A, UCP B

SIGNATURE OF CONTENT
PROVIDER 2

PT A-1, PT A-2, PT B-1, PT B-2

SECRET KEY Kssp OF
SERVICE PROVIDER 3

SIGNATURE

HASH FUNCTION

CONTENT KEY Kco

CONTENT

DELIVERY KEY Kd

CONTENT KEY Kco

UCP A, UCP B

SIGNATURE OF
CONTENT PROVIDER 2

PT A-1, PT A-2,
PT B-1, PT B-2

# F I G. 2 1

CERTIFICATE OF SERVICE PROVIDER 3

VERSION NUMBER OF CERTIFICATE

SERIAL NUMBER OF CERTIFICATE ASSIGNED BY CERTIFICATE AUTHORITY

ALGORITHM AND PARAMETER USED FOR SIGNATURE

NAME OF CERTIFICATE AUTHORITY

VALID PERIOD OF CERTIFICATE

NAME (ID) OF SERVICE PROVIDER 3

PUBLIC KEY Kpsp OF SERVICE PROVIDER 3

SECRET KEY Ksca OF CERTIFICATE AUTHORITY

SIGNATURE

HASH FUNCTION

VERSION NUMBER OF CERTIFICATE

SERIAL NUMBER OF CERTIFICATE ASSIGNED BY CERTIFICATE AUTHORITY

ALGORITHM AND PARAMETER USED FOR SIGNATURE

NAME OF CERTIFICATE AUTHORITY

VALID PERIOD OF CERTIFICATE

NAME (ID) OF SERVICE PROVIDER 3

PUBLIC KEY Kpsp OF SERVICE PROVIDER 3

# F I G. 22

# F I G. 23

CERTIFICATE OF SAM 62

| VERSION NUMBER OF CERTIFICATE |

| SERIAL NUMBER OF CERTIFICATE ASSIGNED BY CERTIFICATE AUTHORITY |

| ALGORITHM AND PARAMETER USED FOR SIGNATURE |

| NAME OF CERTIFICATE AUTHORITY |

| VALID PERIOD OF CERTIFICATE |

| NAME (I D) OF SAM 62 |

| PUBLIC KEY Kpu OF SAM 62 |

SECRET KEY Ksca OF CERTIFICATE AUTHORITY

SIGNATURE

HASH FUNCTION

VERSION NUMBER OF CERTIFICATE

SERIAL NUMBER OF CERTIFICATE ASSIGNED BY CERTIFICATE AUTHORITY

ALGORITHM AND PARAMETER USED FOR SIGNATURE

NAME OF CERTIFICATE AUTHORITY

VALID PERIOD OF CERTIFICATE

NAME (I D) OF SAM 62

PUBLIC KEY Kpu OF SAM 62

PARAMETER INDICATIVE SUBORDINATION TO OTHER SAM

# F I G. 24

| CONTENT ID | | ID OF CONTENT A |
|---|---|---|
| CONTENT PROVIDER ID | | ID OF CONTENT PROVIDER 2 |
| UCP ID | | ID OF UCP A |
| VALID PERIOD OF UCP | | VALID PERIOD OF UCP A |
| SERVICE PROVIDER ID | | ID OF SERVICE PROVIDER 3 |
| PT ID | | ID OF PT A-1 |
| VALID PERIOD OF PT | | VALID PERIOD OF PT A-1 |
| UCS ID | | ID OF UCS A |
| SAM ID | | ID OF SAM 62 |
| USER ID | | ID OF USER F |
| USAGE DESCRIPTION | ID | ID OF USAGE DESCRIPTION 11 |
| | FORM | REPRODUCTION BY PURCHASE |
| | PARAMETER | ×××  |
| | MANAGEMENT SHIFT STATE INFORMATION | SOURCE OF SHIFT: ID OF SAM 62 DESTINATION OF SHIFT: ID OF SAM 62 |
| USAGE HISTORY | | ××× |

UCS A

# FIG. 25

BLOCK Bp-1 {

USAGE INFORMATION MEMORY
AREA Rp-1

USAGE INFORMATION MEMORY
AREA Rp-2

USAGE INFORMATION MEMORY
AREA Rp-3

USAGE INFORMATION MEMORY
AREA Rp-N

| Kco1 | ucs1 |
| Kco2 | ucs2 |
| KcoA | ucsA |
| | |
| | |

BLOCK Bp-M {

USAGE INFORMATION MEMORY
AREA Rp-1

USAGE INFORMATION MEMORY
AREA Rp-2

USAGE INFORMATION MEMORY
AREA Rp-N

63A

EP 1 047 030 A2

# F I G. 26

| CONTENT ID | | ID OF CONTENT A |
|---|---|---|
| CONTENT PROVIDER ID | | ID OF CONTENT PROVIDER 2 |
| UCP ID | | ID OF UCP A |
| VALID PERIOD OF UCP | | VALID PERIOD OF UCP A |
| SERVICE PROVIDER ID | | ID OF SERVICE PROVIDER 3 |
| PT ID | | ID OF PT A-1 |
| VALID PERIOD OF PT | | VALID PERIOD OF PT A-1 |
| UCS ID | | ID OF UCS A |
| SAM ID | | ID OF SAM 62 |
| USER ID | | ID OF USER F |
| USAGE DESCRIPTION | ID | ID OF USAGE DESCRIPTION 11 |
| | FORM | REPRODUCTION BY PURCHASE |
| | PARAMETER | X X X |
| | MANAGEMENT SHIFT STATE INFORMATION | SOURCE OF SHIFT: ID OF SAM 62 DESTINATION OF SHIFT: ID OF SAM 62 |
| CHARGING HISTORY | | NOT USING DISCOUNT POINT |

INFORMATION ON CHARGES A

# F I G. 27

| |
|---|
| PUBLIC KEY Kpu OF SAM 62 |
| SECRET KEY Ksu OF SAM 62 |
| PUBLIC KEY Kpesc OF EMD SERVICE CENTER 1 |
| PUBLIC KEY Kpca OF CERTIFICATE AUTHORITY |
| SAVE KEY Ksave |
| DELIVERY KEYS Kd FOR 3 MONTHS |
| |
| CERTIFICATE OF SAM 62 |
| REFERENCE INFORMATION 51 |
| INFORMATION ON CHARGES |
| |

| CHECK VALUE Hp-1 | CHECK VALUE Hp-2 | |
|---|---|---|
| | | CHECK VALUE Hp-M |

# F I G. 28

| SAM ID | | ID OF SAM 6 2 |
|---|---|---|
| DEVICE NUMBER | | DEVICE NUMBER (1 0 0) OF RECEIVER 5 1 |
| SETTLEMENT ID | | SETTLEMENT ID OF USER F |
| UPPER LIMIT AMOUNT OF CHARGING | | UPPER LIMIT AMOUNT FOR OFFICIAL REGISTRATION |
| SETTLEMENT INFORMATION USER | NAME | NAME OF USER F |
| | ADDRESS | ADDRESS OF USER F |
| | TELEPHONE NUMBER | TELEPHONE NUMBER OF USER F |
| | SETTLEMENT ORGANIZATION INFORMATION | SETTLEMENT ORGANIZATION INFORMATION OF USER F |
| | BIRTHDAY | BIRTHDAY OF USER F |
| | AGE | AGE OF USER F (21 YEARS OLD) |
| | GENDER | GENDER OF USER F (MALE) |
| | USER ID | ID OF USER F |
| | PASSWORD | PASSWORD OF USER F |
| SUBORDINATE INFORMATION USER | NAME | |
| | ADDRESS | |
| | TELEPHONE NUMBER | |
| | BIRTHDAY | |
| | GENDER | |
| | USER ID | |
| | PASSWORD | |

| DISCOUNT POINT INFORMATION | DISCOUNT POINT INFORMATION OF RECEIVER 5 1 |
|---|---|

REFERENCE INFORMATION 5 1

# F I G. 29

| USER | DISCOUNT AMOUNT |
|------|-----------------|
| SETTLEMENT USER | CP DISCOUNT AMOUNT ( 2 0 YEN)<br>SP DISCOUNT AMOUNT ( 3 0 YEN)<br>EMD DISCOUNT AMOUNT ( 5 0 YEN) |

DISCOUNT POINT INFORMATION OF REFERENCE
INFORMATION 5 1

# F I G. 30

EP 1 047 030 A2

REGIS-
TRATION
CONDITION
OF
RECEIVER
51

| SAM ID | USER ID | PURCHASE PROCESSING | CHARGING PROCESSING | CHARGING DEVICE | CONTENT SUPPLY DEVICE | STATUS FLAG | REGIS-TRATION CONDITION SIGNATURE | REGIS-TRATION LIST SIGNATURE |
|---|---|---|---|---|---|---|---|---|
| ID OF SAM 62 | ID OF USER F | PERMITTED | PERMITTED | ID OF SAM 62 | NO | NOT LIMITED | X X X X | X X X X |

}LIST PORTION

OBJECT SAM ID    <u>ID OF SAM 62</u>

VALID PERIOD    <u>X X X X</u>

VERSION NUMBER    <u>X X X X</u>

CONNECTED DEVICE COUNT    <u>' 1</u>

} OBJECT SAM INFORMATION PORTION

# F I G . 3 1

```
   ┌──────────────────────────┐
   │  START PROCESSING OF     │
   │  USING CONTENT A         │
   └──────────────────────────┘
                │
                ▼
   ┌──────────────────────────┐
   │ DELIVERY KEY Kd IS SUPPLIED │   S11
   │ FROM EMD SERVICE CENTER 1   │
   │ TO CONTENT PROVIDER 2       │
   └──────────────────────────┘
                │
                ▼
   ┌──────────────────────────┐
   │ CONTENT PROVIDER SECURE   │
   │ CONTAINER IS SUPPLIED FROM │   S12
   │ CONTENT PROVIDER 2 TO      │
   │ SERVICE PROVIDER 3         │
   └──────────────────────────┘
                │
                ▼
   ┌──────────────────────────┐
   │ SERVICE PROVIDER SECURE    │
   │ CONTAINER IS SENT FROM SERVICE │  S13
   │ PROVIDER 3 TO RECEIVER 51  │
   └──────────────────────────┘
                │
                ▼
   ┌──────────────────────────┐
   │ SERVICE PROVIDER SECURE    │
   │ CONTAINER IS RECEIVED      │   S14
   │ BY RECEIVER 51             │
   └──────────────────────────┘
                │
                ▼
   ┌──────────────────────────┐
   │ CONTENT A IS USED          │   S15
   └──────────────────────────┘
                │
                ▼
             ( END )
```

# F I G . 3 2

```
╭─────────────────────────────╮
│  START PROCESSING OF        │
│  SUPPLYING DELIVERY KEY Kd   │
╰─────────────────────────────╯
              │
              ▼
┌─────────────────────────────┐
│  CROSS-AUTHENTICATE         │  ～S31
│  CONTENT PROVIDER           │
└─────────────────────────────┘
              │
              ▼
┌─────────────────────────────┐
│  CONTENT PROVIDER           │  ～S32
│  RECEIVES DELIVERY KEY Kd    │
└─────────────────────────────┘
              │
              ▼
┌─────────────────────────────┐
│  CONTENT PROVIDER           │  ～S33
│  STORES DELIVERY KEY Kd      │
└─────────────────────────────┘
              │
              ▼
          ╭─────────╮
          │ RETURN  │
          ╰─────────╯
```

# F I G. 33

| CONTENT PROVIDER | EMD SERVICE CENTER |
|---|---|

GENERATE 64-BIT RANDOM NUMBER R1  S41

ENCRYPT R1 BY KEY Kc  S42

SEND ENCRYPTED R1 TO EMD SERVICE CENTER  S43

DECRYPT RECEIVED R1  S44

GENERATE 32-BIT RANDOM NUMBER R2  S45

TRANSPOSE LOW-ORDER 32 BITS OF RANDOM NUMBER R1 BY RAMDOM NUMBER R2 TO GET R1H ‖ R2  S46

S49
DECRYPT RECEIVED R1H‖R2  S49

ENCRYPT R1H ‖ R2 BY KEY Kc  S47

IF HIGH-ORDER 32 BITS OF DECRYPTED R1H ‖ R2 ARE FOUND MATCHING, AUTHEN-TICATE EMD SERVICE CENTER  S50

SEND ENCRYPTED R1H ‖ R2 TO CONTENT PROVIDER  S48

GENERATE 32-BIT RANDOM NUMBER R3  S51

FORM R2‖ R3  S52

DECRYPT RECEIVED R2‖ R3  S55

ENCRYPT R2‖ R3 BY KEY Kc  S53

SEND ENCRYPTED R2‖R3 TO EMD SERVICE CENTER  S54

IF HIGH-ORDER 32 BITS OF DECRYPTED R2‖ R3 ARE FOUND MATCHING, AUTHEN-TICATE CONTENT PROVIDER  S56

EP 1 047 030 A2

# FIG.34

**CONTENT PROVIDER**

GENERATE 64-BIT RANDOM NUMBER R1 — S61

ENCRYPT R1 BY KEY Kc1 — S62

SEND ENCRYPTED R1 TO EMD SERVICE CENTER — S63

DECRYPT RECEIVED R1 AND R2 — S69

IF DECRYPTED R1 IS FOUND MATCHING, AUTHENTICATE EMD SERVICE CENTER — S70

ENCRYPT R2 BY KEY Kc1 — S71

SEND ENCRYPTED R2 TO EMD SERVICE CENTER — S72

**EMD SERVICE CENTER**

DECRYPT RECEIVED R1 — S64

ENCRYPT R1 BY KEY Kc2 — S65

GENERATE 64-BIT RANDOM NUMBER R2 — S66

ENCRYPT R2 BY KEY Kc2 — S67

SEND ENCRYPTED R1 AND R2 TO CONTENT PROVIDER — S68

DECRYPT RECEIVED R2 — S73

IF DECRYPTED R2 IS FOUND MATCHING, AUTHENTICATE CONTENT PROVIDER — S74

EP 1 047 030 A2

# F I G . 35

CONTENT PROVIDER

GENERATE 64-BIT RANDOM NUMBER R1 — S81

SEND R1 AND CERTIFICATE TO EMD SERVICE CENTER — S82

CHECK SIGNATURE OF CERTIFICATE AND, IF FOUND CORRECT, EXTRACT PUBLIC KEY Kpesc FROM CERTIFICATE — S89

DECRYPT R1 ‖ R2 BY PUBLIC KEY Kpesc — S90

DECRYPT R1 ‖ R2 BY SECRET KEY Kscp — S91

IF MATCH IS FOUND BETWEEN DECRYPTED R1 ‖ R2 IN S90 AND DECRYPTED R1 ‖ R2 IN S91, AUTHENTICATE EMD SERVICE CENTER — S92

GENERATE 64-BIT RANDOM NUMBER R3 — S93

FORM R2 ‖ R3 — S94

ENCRYPT R2 ‖ R3 BY PUBLIC KEY Kpesc — S95

SEND ENCRYPTED R2 ‖ R3 TO EMD SERVICE CENTER — S96

EMD SERVICE CENTER

CHECK SIGNATURE OF CERTIFICATE AND, IF FOUND CORRECT, EXTRACT PUBLIC KEY Kpcp FROM CERTIFICATE — S83

GENERATE 64-BIT RANDOM NUMBER R2 — S84

FORM R1 ‖ R2 — S85

ENCRYPT R1 ‖ R2 BY SECRET KEY Ksesc — S86

ENCRYPT R1 ‖ R2 BY PUBLIC KEY Kpcp — S87

SEND R1 ‖ R2 ENCRYPTED BY SECRET KEY Ksesc, R1 ‖ R2 ENCRYPTED BY PUBLIC KEY Kpcp, AND CERTIFICATE TO CONTENT PROVIDER — S88

DECRYPT R2 ‖ R3 BY SECRET KEY Ksesc — S97

IF MATCH IS FOUND BETWEEN DECRYPTED R2 AND R2 GENERATED IN S84, AUTHENTICATE CONTENT PROVIDER — S98

EP 1 047 030 A2

# F I G. 36

START CONTENT PROVIDER SECURE
CONTAINER SUPPLY PROCESSING

INSERT WATERMARK INTO CONTENT — S201

COMPRESS CONTENT — S202

GENERATE RANDOM NUMBER TO
PROVIDE CONTENT KEY — S203

ENCRYPT CONTENT BY CONTENT KEY — S204

ENCRYPT CONTENT KEY
BY DELIVERY KEY — S205

GENERATE SIGNATURE — S206

GENERATE SECURE
CONTAINER — S207

CROSS-AUTHENTICATE
SERVICE PROVIDER — S208

SEND SECURE CONTAINER — S209

RETURN

# F I G . 37

```
┌─────────────────────────────────────┐
│ STRAT SERVICE PROVIDER SECURE        │
│ CONTAINER SUPPLY PROCESSING          │
└─────────────────────────────────────┘
```

EXTRACT PUBLIC KEY FROM
CERTIFICATE OF SECURE CONTAINER  — S221

CHECK SECURE CONTAINER FOR
TAMPERING  — S222 -

EXTRACT UCP FROM SECURE
CONTAINER  — S223

GENERATE PT  — S224

GENERATE SECURE CONTAINER  — S225

CROSS-AUTHENTICATE RECEIVER  — S226

SEND SECURE CONTAINER  — S227

( RETURN )

# F I G. 38

START SERVICE PROVIDER
SECURE CONTAINER
RECEPTION PROCESSING

RECEIVE SECURE CONTAINER FROM
SERVICE PROVIDER — S241

RECEIVE PUBLIC KEY CERTIFICATE FROM
SERVICE PROVIDER — S242

CHECK SIGNATURE DATA OF
SECURE CONTAINER — S243

BASED ON UCP AND PT, SELECT
USAGE DESCRIPTION — S244

BASED ON UCP AND PT, GENERATE
INFORMATION ON CHARGES AND UCS — S245

RECORD CONTENT ON HDD — S246

DECRYPT CONTENT KEY BY
DELIVERY KEY — S247

ENCRYPT CONTENT KEY BY
SAVE KEY — S248

SEARCH EXTERNAL STORAGE
BLOCK FOR FREE BLOCK — S249

COMPUTE HASH VALUE OF THE
FREE BLOCK — S250

MATCH FOUND BETWEEN
COMPUTED HASH VALUE
AND PREDETERMINED
CHECK VALUE OF
STORAGE MODULE ? — S251

NO

S256
ALL BLOCKS IN
EXTERNAL STORAGE
BLOCK CHECKED ?

YES

YES — S252

STORE CONTENT KEY, ETC. INTO
EXTERNAL STORAGE BLOCK

NO — S257
SEARCH EXTERNAL
STORAGE BLOCK FOR
ANOTHER FREE BLOCK

— S253
COMPUTE HASH VALUE OF BLOCK
STORING CONTENT KEY, ETC. IN
EXTERNAL STORAGE BLOCK

— S254
WRITE COMPUTED HASH VALUE
OVER THE PREDETERMINED CHECK
VALUE IN THE STORAGE MODULE

— S255
STORE INFORMATION ON CHARGES
INTO STORAGE MODULE

RETURN

# F I G. 39

START REPRODUCTION PROCESSING

COMPUTE HASH VALUE OF BLOCK — S261

MATCH FOUND WITH HASH VALUE IN SAM ? — S262 — NO

YES — S263

REPRODUCIBLE ? — NO

YES

ERROR PROCESSING — S277

UPDATE UCS — S264

STORE UCS INTO EXTERNAL STORAGE BLOCK — S265

COMPUTE CHECK VALUE Hp AND STORE — S266

CROSS-AUTHENTICATE BETWEEN SAM AND DECOMPRESSION BLOCK AND SHARE TEMPORARY KEY BETWEEN THEM — S267

DECRYPT CONTENT KEY BY SAVE KEY — S268

ENCRYPT CONTENT KEY BY TEMPORARY KEY — S269

SEND CONTENT KEY TO DECOMPRESSION BLOCK — S270

DECRYPT CONTENT KEY BY TEMPORARY KEY — S271

DECOMPRESSION BLOCK RECEIVES CONTENT — S272

DECRYPT CONTENT BY CONTENT KEY — S273

DECOMPRESS CONTENT — S274

ATTACH WATERMARK TO CONTENT — S275

OUTPUT CONTENT — S276

RETURN

81

# F I G. 40

```
      ╭─────────────────────╮
      │  START SETTLEMENT    │
      │  PROCESSING          │
      ╰─────────────────────╯
                │
                ▼
   ┌─────────────────────────────┐
   │ CROSS-AUTHENTICATE          │
   │ BETWEEN RECEIVER 51 AND     │  S301
   │ EMD SERVICE CENTER 1        │
   └─────────────────────────────┘
                │
                ▼
   ┌─────────────────────────────┐
   │ RECEIVER 51 SENDS           │
   │ CERTIFICATE TO EMD          │  S302
   │ SERVICE CENTER 1            │
   └─────────────────────────────┘
                │
                ▼
   ┌───────────────────────────────────┐
   │ RECEIVER 51 SENDS DELIVERY KEY     │
   │ VERSION, UCP, REGISTRATION LIST,   │
   │ AND ENCRYPTED INFORMATION ON       │  S303
   │ CHARGES TO EMD SERVICE CENTER 1    │
   └───────────────────────────────────┘
                │
                ▼
   ┌───────────────────────────────────┐
   │ EMD SERVICE CENTER 1 CHECKS        │
   │ OPERATION LIMITATION CONDITION OF  │  S304
   │ RECEIVER 51                        │
   └───────────────────────────────────┘
                │
                ▼
   ┌───────────────────────────────────┐
   │ EMD SERVICE CENTER 1 ANALYZES      │
   │ INFORMATION ON CHARGES AND         │
   │ EXECUTES PROCESSING OF             │  S305
   │ SETTLEMENT                         │
   └───────────────────────────────────┘
                │
                ▼
   ┌───────────────────────────────────┐
   │ EMD SERVICE CENTER 1 CHECKS        │
   │ WHETHER SETTLEMENT HAS BEEN        │  S306
   │ SUCCESSFUL OR NOT                  │
   └───────────────────────────────────┘
                │
                ▼
   ┌───────────────────────────────────┐
   │ EMD SERVICE CENTER 1               │
   │ GENERATES REGISTRATION LIST        │  S307
   └───────────────────────────────────┘
                │
                ▼
   ┌───────────────────────────────────┐
   │ EMD SERVICE CENTER 1 SENDS         │
   │ DELIVERY KEY ENCRYPTED BY          │
   │ TEMPORARY KEY AND REGISTRATION     │  S308
   │ LIST TO RECEIVER 51                │
   └───────────────────────────────────┘
                │
                ▼
   ┌───────────────────────────────────┐
   │ RECEIVER 51 ERASES INFORMATION     │
   │ ON CHARGES AND UPDATES REGIS-      │  S309
   │ TRATION LIST AND DELIVERY KEY      │
   └───────────────────────────────────┘
                │
                ▼
         ╭──────────╮
         │   END    │
         ╰──────────╯
```

# FIG. 41

```
        ( START SETTLEMENT )
        (   PROCESSING    )
                 │
                 ▼
           ╱──────────╲  S401
          ╱    USE     ╲
         ╱  DISCOUNT    ╲────────── YES ──────────┐
         ╲   POINT ?    ╱                         │
          ╲            ╱                          ▼
           ╲──────────╱                    ┌──────────────┐ S404
                 │ NO                       │USER MANAGEMENT│
                 ▼           S402           │BLOCK 18 READS │
        ┌──────────────────┐               │DISCOUNT AMOUNT│
        │USER MANAGEMENT    │              └──────────────┘
        │BLOCK 18           │                      │
        │SENDS INFORMATION  │                      ▼     S405
        │ON CHARGES, PT AND │              ┌──────────────┐
        │UCP TO HISTORY DATA│              │USER MANAGEMENT│
        │CONTROL BLOCK 15   │              │BLOCK 18 SENDS │
        └──────────────────┘               │INFORMATION ON │
                 │                          │CHARGES, PT,UCP│
                 ▼           S403           │AND DISCOUNT   │
        ┌──────────────────┐               │AMOUNT TO      │
        │SETTLEMENT         │               │HISTORY DATA   │
        │PROCESSING         │               │CONTROL BLOCK 15│
        │WITHOUT USING      │              └──────────────┘
        │DISCOUNT POINT     │                      │
        └──────────────────┘                      ▼     S406
                 │                          ┌──────────────┐
                 │                          │SETTLEMENT     │
                 │                          │PROCESSING BY  │
                 │                          │USING DISCOUNT │
                 │                          │POINT          │
                 │                          └──────────────┘
                 │                                 │
                 ◄─────────────────────────────────┘
                 │
                 ▼
             ( END )
```

83

F I G. 42

USER MANAGEMENT BLOCK ~18

(INFORMATION ON CHARGES UCP PT)

HISTORY DATA MANAGEMENT BLOCK ~15

(INFORMATION ON CHARGES UCP PT)

CHARGING BLOCK ~19

(USER PAYMENT AMOUNT)

CASHIER BLOCK ~20

(USER PAYMENT AMOUNT USAGE FEE)

(CP PROFIT AMOUNT SP PROFIT AMOUNT EMD PROFIT AMOUNT)

(CP DISCOUNT AMOUNT SP DISCOUNT AMOUNT EMD DISCOUNT AMOUNT)

PROFIT DISTRIBUTION BLOCK ~16

(SP DISCOUNT AMOUNT SP PROFIT AMOUNT)

SERVICE PROVIDER MANAGEMENT BLOCK ~11

(CP DISCOUNT AMOUNT CP PROFIT AMOUNT)

CONTENT PROVIDER MANAGEMENT BLOCK ~12

# F I G . 4 3

CONTENT PROVIDER ～2

SERVICE PROVIDER ～3

USER HOME NETWORK ～5

| SP PROFIT AMOUNT | 330 YEN |
|---|---|
| SP DISCOUNT AMOUNT | 30 YEN |
| USED SP DISCOUNT AMOUNT | 0 YEN |

INFORMATION ON CHARGES UCP PT

| CP PROFIT AMOUNT | 520 YEN |
|---|---|
| CP DISCOUNT AMOUNT | 20 YEN |
| USED CP DISCOUNT AMOUNT | 0 YEN |

EMD SERVICE CENTER ～1

| EMD PROFIT AMOUNT | 50 YEN |
|---|---|
| USED EMD DISCOUNT AMOUNT | 0 YEN |

| CP DISCOUNT AMOUNT | 20 YEN |
|---|---|
| SP DISCOUNT AMOUNT | 30 YEN |
| EMD DISCOUNT AMOUNT | 50 YEN |

EP 1 047 030 A2

# F I G. 44

EP 1 047 030 A2

USER MANAGEMENT BLOCK — 18

$\begin{pmatrix} \text{INFORMATION} & \text{CP DISCOUNT AMOUNT} \\ \text{ON CHARGES} & \text{SP DISCOUNT AMOUNT} \\ \text{UCP} & \text{EMD DISCOUNT AMOUNT} \\ \text{PT} & \end{pmatrix}$

$\begin{pmatrix} \text{CP DISCOUNT AMOUNT} \\ \text{SP DISCOUNT AMOUNT} \\ \text{EMD DISCOUNT AMOUNT} \end{pmatrix}$

HISTORY DATA MANAGEMENT BLOCK — 15

$\begin{pmatrix} \text{INFORMATION} & \text{CP DISCOUNT AMOUNT} \\ \text{ON CHARGES} & \text{SP DISCOUNT AMOUNT} \\ \text{PT} & \text{EMD DISCOUNT AMOUNT} \\ \text{UCP} & \end{pmatrix}$

PROFIT DISTRIBUTION BLOCK — 16

$\begin{pmatrix} \text{CP DISCOUNT AMOUNT} \\ \text{SP DISCOUNT AMOUNT} \\ \text{EMD DISCOUNT AMOUNT} \\ \text{USER PAYMENT AMOUNT} \\ \text{USAGE FEE} \end{pmatrix}$

CHARGING BLOCK — 19

$\begin{pmatrix} \text{CP DISCOUNT AMOUNT} \\ \text{CP PROFIT AMOUNT} \end{pmatrix}$

$\begin{pmatrix} \text{SP DISCOUNT AMOUNT} \\ \text{SP PROFIT AMOUNT} \end{pmatrix}$

$\begin{pmatrix} \text{CP PROFIT AMOUNT} \\ \text{SP PROFIT AMOUNT} \\ \text{EMD PROFIT AMOUNT} \end{pmatrix}$

$\begin{pmatrix} \text{USER PAYMENT} \\ \text{AMOUNT} \end{pmatrix}$

CONTENT PROVIDER MANAGEMENT BLOCK — 12

SERVICE PROVIDER MANAGEMENT BLOCK — 11

CASHIER BLOCK — 20

F I G. 45

USER HOME NETWORK — 5

INFORMATION ON CHARGES
UCP
PT

SERVICE PROVIDER — 3

| | | |
|---|---|---|
| SP PROFIT AMOUNT | 663 YEN | |
| SP DISCOUNT AMOUNT | 57 YEN | |
| USED SP DISCOUNT AMOUNT | 30 YEN | |

EMD SERVICE CENTER — 1

CONTENT PROVIDER — 2

| | | |
|---|---|---|
| CP PROFIT AMOUNT | 1042 YEN | |
| CP DISCOUNT AMOUNT | 38 YEN | |
| USED CP DISCOUNT AMOUNT | 20 YEN | |

| | | |
|---|---|---|
| CP DISCOUNT AMOUNT | 38 YEN | |
| SP DISCOUNT AMOUNT | 57 YEN | |
| EMD DISCOUNT AMOUNT | 95 YEN | |

| | | |
|---|---|---|
| EMD PROFIT AMOUNT | 105 YEN | |
| USED EMD DISCOUNT AMOUNT | 50 YEN | |

# FIG.46

EP 1 047 030 A2

EP 1 047 030 A2

# FIG.48

EP 1 047 030 A2

# F I G. 49A

| CONTENT ID | ID OF CONTENT A | |
|---|---|---|
| CONTENT PROVIDER ID | ID OF CONTENT PROVIDER 2 | |
| UCP ID | ID OF UCP A | |
| UCP VALID PERIOD | VALID PERIOD OF UCP A | |
| USAGE CONDITION 10 | USER CONDITION 10 | 100 YEN OR MORE |
| | DEVICE CONDITION 10 | NO CONDITION |
| USAGE DESCRIPTION 11 | ID 11 | ID OF USAGE DESCRIPTION 11 |
| | FORM 11 | REPRODUCTION BY PURCHASE |
| | PARAMETER 11 | × × × × |
| | MANAGEMENT SHIFT PERMIT INFORMATION 11 | PERMITTED |
| | CODE | CODE VALUE |
| USAGE DESCRIPTION 12 | ID 12 | ID OF USAGE DESCRIPTION 12 |
| | FORM 12 | FIRST-GENERATION DUPLICATION |
| | PARAMETER 12 | × × × × |
| | MANAGEMENT SHIFT PERMIT INFORMATION 12 | NOT PERMITTED |
| | CODE | CODE VALUE |
| USAGE DESCRIPTION 13 | ID 13 | ID OF USAGE DESCRIPTION 13 |
| | FORM 13 | TIME-LIMITED REPRODUCTION |
| | PARAMETER 13 | × × × × |
| | MANAGEMENT SHIFT PERMIT INFORMATION 13 | NOT PERMITTED |
| | CODE | CODE VALUE |
| USAGE DESCRIPTION 14 | ID 14 | ID OF USAGE DESCRIPTION 14 |
| | FORM 14 | Pay Per Copy 5 |
| | PARAMETER 14 | DUPLICATE 5 TIMES |
| | MANAGEMENT SHIFT PERMIT INFORMATION 14 | NOT PERMITTED |
| | CODE | CODE VALUE |

UCP A

# FIG. 49B

| CONTENT ID | ID OF CONTENT A | |
|---|---|---|
| CONTENT PROVIDER ID | ID OF CONTENT PROVIDER 2 | |
| UCP ID | ID OF UCP B | |
| UCP VALID PERIOD | VALID PERIOD OF UCP B | |
| USAGE CONDITION 20 | USER CONDITION 20 | LESS THAN 100 YEN |
| | DEVICE CONDITION 20 | NO CONDITION |
| USAGE DESCRIPTION 21 | ID 21 | ID OF USAGE DESCRIPTION 21 |
| | FORM 21 | Pay Per Play 4 |
| | PARAMETER 21 | REPRODUCE 4 TIMES |
| | MANAGEMENT SHIFT PERMIT INFORMATION 21 | PERMITTED |
| | CODE | CODE VALUE |
| USAGE DESCRIPTION 22 | ID 22 | ID OF USAGE CONDITION 22 |
| | FORM 22 | Pay Per Play 4 |
| | PARAMETER 22 | DUPLICATE 2 TIMES |
| | MANAGEMENT SHIFT PERMIT INFORMATION 22 | NOT PERMITTED |
| | CODE | CODE VALUE |

UCP B

# F I G . 5 0

41 — CONTENT SERVER

121 — VALUE ATTACHMENT BLOCK

43 — POLICY STORAGE BLOCK

45 — CROSS-AUTHENTICATION BLOCK

44 — SECURE CONTAINER GENERATION BLOCK

112

# F I G. 5 I A

| CONTENT ID | ID OF CONTENT A | |
|---|---|---|
| CONTENT PROVIDER ID | ID OF CONTENT PROVIDER 2 | |
| UCP ID | ID OF UCP A | |
| SERVICE PROVIDER ID | ID OF SERVICE PROVIDER 3 | |
| PT ID | ID OF PT A-1 | |
| VALID PERIOD OF PT | VALID PERIOD OF PT A-1 | |
| PRICE CONDITION 10 | USER CONDITION 10 | MALE |
| | DEVICE CONDITION 10 | NO CONDITION |
| | CODE | CODE VALUE |
| PRICE DESCRIPTION 11 | 2000 YEN | |
| PRICE DESCRIPTION 12 | 600 YEN | |
| PRICE DESCRIPTION 13 | 100 YEN | |
| PRICE DESCRIPTION 14 | 300 YEN | |

PT A-1

# F I G. 5 I B

| CONTENT ID | ID OF CONTENT A | |
|---|---|---|
| CONTENT PROVIDER ID | ID OF CONTENT PROVIDER 2 | |
| UCP ID | ID OF UCP A | |
| SERVICE PROVIDER ID | ID OF SERVICE PROVIDER 3 | |
| PT ID | ID OF PT A-2 | |
| PT VALID PERIOD | VALID PERIOD OF PT A-2 | |
| PRICE CONDITION 20 | USER CONDITION 20 | FEMALE |
| | DEVICE CONDITION 20 | NO CONDITION |
| | CODE | CODE VALUE |
| PRICE DESCRIPTION 21 | 1000 YEN | |
| PRICE DESCRIPTION 22 | 900 YEN | |
| PRICE DESCRIPTION 23 | 50 YEN | |
| PRICE DESCRIPTION 24 | 150 YEN | |

PT A-2

EP 1 047 030 A2

# FIG.52

EP 1 047 030 A2

# F I G.53

| | | | |
|---|---|---|---|
| CONTENT ID | | ID OF CONTENT A | |
| CONTENT PROVIDER ID | | ID OF CONTENT PROVIDER 2 | |
| UCP ID | | ID OF UCP A | |
| UCP VALID PERIOD | | VALID PERIOD OF UCP A | |
| SERVICE PROVIDER ID | | ID OF SERVICE PROVIDER 3 | |
| PT ID | | ID OF PT A-1 | |
| PT VALID PERIOD | | VALID PERIOD OF PT A-1 | |
| UCS ID | | ID OF UCS A | |
| SAM ID | | ID OF SAM 62 | |
| USER ID | | ID OF USER F | |
| USAGE DESCRIPTION | DESCRIPTION | ID | ID OF USAGE DESCRIPTION 11 |
| | | FORM | REPRODUCTION BY PURCHASE |
| | | PARAMETER | x x x |
| | | MANAGEMENT SHIFT STATUS INFORMATION | SOURCE OF SHIFT: ID OF SAM 62 DESTINATION OF SHIFT: ID OF SAM 62 |
| | | UCP CODE | CODE VALUE |
| | | PT CODE | CODE VALUE |

# F I G. 5 4

| | | | |
|---|---|---|---|
| | CONTENT ID | | ID OF CONTENT A |
| | CONTENT PROVIDER ID | | ID OF CONTENT PROVIDER 2 |
| | UCP ID | | ID OF UCP A |
| | UCP VALID PERIOD | | VALID PERIOD OF UCP A |
| | SERVICE PROVIDER ID | | ID OF SERVICE PROVIDER 3 |
| | PT ID | | ID OF PT A-1 |
| | PT VALID PERIOD | | VALID PERIOD OF PT A-1 |
| | UCS ID | | ID OF UCS A |
| | SAM ID | | ID OF SAM 62 |
| | USER ID | | ID OF USER F |
| USAGE DESCRIPTION | | ID | ID OF USAGE DESCRIPTION 11 |
| | | FORM | REPRODUCTION BY PURCHASE |
| | | PARAMETER | ×××️ |
| | | MANAGEMENT SHIFT STATUS INFORMATION | SOURCE OF SHIFT: ID OF SAM 62 DESTINATION OF SHIFT: ID OF SAM 62 |

# F I G. 55

| | | CONTENT ID | ID OF CONTENT A |
|---|---|---|---|
| | | CONTENT PROVIDER ID | ID OF CONTENT PROVIDER 2 |
| | | UCP VALID PERIOD | VALID PERIOD OF UCP A |
| | | SERVICE PROVIDER ID | ID OF SERVICE PROVIDER 3 |
| | | PT VALID PERIOD | VALID PERIOD OF PT A-1 |
| | | UCS ID | ID OF UCS A |
| | | SAM ID | ID OF SAM 62 |
| | | USER ID | ID OF USER F |
| USAGE | DESCRIPTION | ID | ID OF USAGE DESCRIPTION 11 |
| | | FORM | REPRODUCTION BY PURCHASE |
| | | PARAMETER | X X X |
| | | MANAGEMENT SHIFT STATUS INFORMATION | SOURCE OF SHIFT: ID OF SAM 62 DESTINATION OF SHIFT: ID OF SAM 62 |
| | | UCP CODE | CODE VALUE |
| | | PT CODE | CODE VALUE |

# FIG. 56

SERVICE PROVIDER MANAGEMENT BLOCK _133_

KEY SERVER _14_

CROSS-AUTHENTICATION BLOCK _17_

CONTENT PROVIDER MANAGEMENT BLOCK _134_

HISTORY DATA MANAGEMENT BLOCK _131_

USER MANAGEMENT BLOCK _130_

COPYRIGHT MANAGEMENT BLOCK _13_

PROFIT DISTRIBUTION BLOCK _132_

CHARGING BLOCK _19_

AUDIT BLOCK _21_

CASHIER BLOCK _20_

110

F I G. 57

# F I G. 58

EMD SIGNATURE

CP

| 00010000, 10    100 YEN | → 90 YEN |
| 00100000, 3 | → 3 YEN |

POINT OF CP + 3 YEN

SP

| 00010000, 5     200 YEN | → 185 YEN |
| 00100000, 10 | → 10 YEN |

POINT OF SP + 10 YEN

POINT USAGE FLAG →

POINT USED
90 YEN-CP MIN (POINT AMOUNT 90 YEN) TO CP
185 YEN-SP MIN (POINT AMOUNT 185 YEN) TO SP

POINT NOT USED
90 YEN TO CP
185 YEN TO SP

EP 1 047 030 A2

# F I G. 59

| | |
|---|---|
| DATA TYPE | |
| UCP TYPE (SINGLE) | |
| UCP VALID PERIOD | |
| CONTENT ID | |
| CONTENT PROVIDER ID | |
| UCP ID | |
| UCP VERSION | |
| AREA CODE | |
| QUALIFIED DEVICE CONDITION | |
| QUALIFIED USER CONDITION | |
| SERVICE PROVIDER ID | |
| GENERATION MANAGEMENT INFORMATION | |
| NUMBER OF RULES | |
| RULE ADDRESS INFORMATION | |
| RULE 1 | RULE NUMBER (#) |
| | USAGE RIGHT DESCRIPTION NUMBER (TYPE) |
| | PARAMETER |
| | MINIMUM SALE PRICE |
| | CONTENT PROVIDER PROFIT AMOUNT |
| | CONTENT PROVIDER PROFIT RATIO |
| | DATA SIZE |
| | TRANSMISSION INFORMATION |
| ⋮ | ⋮ |
| RULE N | RULE NUMBER (#) |
| | USAGE RIGHT DESCRIPTION NUMBER (TYPE) |
| | PARAMETER |
| | MINIMUM SALE PRICE |
| | CONTENT PROVIDER PROFIT AMOUNT |
| | CONTENT PROVIDER PROFIT RATIO |
| | DATA SIZE |
| | TRANSMISSION INFORMATION |
| (SIGNATURE VERIFIED OR NOT) | |
| PUBLIC KEY CERTIFICATE | |
| SIGNATURE | |

# F I G. 60

| | |
|---|---|
| DATA TYPE | |
| UCP TYPE (ALBUM) | |
| UCP VALID PERIOD | |
| ALBUM ID | |
| UCP VERSION | |
| CONTENT PROVIDER ID | |
| UCP ID | |
| AREA CODE | |
| QUALIFIED DEVICE CONDITION | |
| QUALIFIED USER CONDITION | |
| SERVICE PROVIDER ID | |
| NUMBER OF SINGLE CONTENT UCP'S | |
| SINGLE CONTENT UCP ADDRESS INFORMATION | |

| S I N G L E | UCP 1                - |
|---|---|
| | ⋮ |
| | UCP N |

| | |
|---|---|
| GENERATION MANAGEMENT INFORMATION | |
| NUMBER OF RULES | |
| RULE ADDRESS INFORMATION | |

| R U L E 1 | RULE NUMBER (#) |
|---|---|
| | USAGE RIGHT DESCRIPTION NUMBER (TYPE) |
| | PARAMETER |
| | MINIMUM SALE PRICE |
| | CONTENT PROVIDER PROFIT AMOUNT |
| | CONTENT PROVIDER PROFIT RATIO |
| | DATA SIZE |
| | TRANSMISSION INFORMATION |
| ⋮ | ⋮ |
| R U L E N | RULE NUMBER (#) |
| | USAGE RIGHT DESCRIPTION NUMBER (TYPE) |
| | PARAMETER |
| | MINIMUM SALE PRICE |
| | CONTENT PROVIDER PROFIT AMOUNT |
| | CONTENT PROVIDER PROFIT RATIO |
| | DATA SIZE |
| | TRANSMISSION INFORMATION |

| | |
|---|---|
| (SIGNATURE VERIFIED OR NOT) | |
| PUBLIC KEY CERTIFICATE | |
| SIGNATURE | |

# FIG.61

| DATA TYPE | |
|---|---|
| UCP TYPE (SINGLE) | |
| UCP VALID PERIOD | |
| CONTENT ID | |
| CONTENT PROVIDER ID | |
| UCP ID | |
| UCP VERSION | |
| AREA CODE | - |
| QUALIFIED DEVICE CONDITION | |
| QUALIFIED USER CONDITION | |
| SERVICE PROVIDER ID | |
| GENERATION MANAGEMENT INFORMATION | |
| NUMBER OF RULES | |
| RULE ADDRESS INFORMATION | |
| RULE 1 | RULE NUMBER (#) |
| | USAGE RIGHT DESCRIPTION NUMBER (TYPE) |
| | PARAMETER |
| | MINIMUM SALE PRICE |
| | DATA SIZE |
| | TRANSMISSION INFORMATION |
| ⋮ | ⋮ |
| RULE N | RULE NUMBER (#) |
| | USAGE RIGHT DESCRIPTION NUMBER (TYPE) |
| | PARAMETER |
| | MINIMUM SALE PRICE |
| | DATA SIZE |
| | TRANSMISSION INFORMATION |
| (SIGNATURE VERIFIED OR NOT) | |
| PUBLIC KEY CERTIFICATE | |
| SIGNATURE | |

# F I G.62

| | |
|---|---|
| DATA TYPE | |
| UCP TYPE (ALBUM) | |
| UCP VALID PERIOD | |
| ALBUM ID | |
| UCP VERSION | |
| CONTENT PROVIDER ID | |
| UCP ID | |
| AREA CODE | |
| QUALIFIED DEVICE CONDITION | |
| QUALIFIED USER CONDITION | |
| SERVICE PROVIDER ID | |
| NUMBER OF SINGLE CONTENT UCP'S | |
| SINGLE CONTENT UCP ADDRESS INFORMATION | |
| S I N G L E | UCP 1 |
| | . . . |
| | UCP N |
| GENERATION MANAGEMENT INFORMATION | |
| NUMBER OF RULES | |
| RULE ADDRESS INFORMATION | |
| R U L E 1 | RULE NUMBER (#) |
| | USAGE RIGHT DESCRIPTION NUMBER (TYPE) |
| | PARAMETER |
| | MINIMUM SALE PRICE |
| | DATA SIZE |
| | TRANSMISSION INFORMATION |
| . . . | . . . |
| R U L E N | RULE NUMBER (#) |
| | USAGE RIGHT DESCRIPTION NUMBER (TYPE) |
| | PARAMETER |
| | MINIMUM SALE PRICE |
| | DATA SIZE |
| | TRANSMISSION INFORMATION |
| (SIGNATURE VERIFIED OR NOT) | |
| PUBLIC KEY CERTIFICATE | |
| SIGNATURE | |

# FIG.63

| | |
|---|---|
| DATA TYPE | |
| PT TYPE (SINGLE) | |
| PT VALID PERIOD | |
| CONTENT ID | |
| SERVICE PROVIDER ID | |
| PT ID | |
| PT VERSION | |
| AREA CODE | |
| QUALIFIED DEVICE CONDITION | |
| QUALIFIED USER CONDITION | |
| CONTENT PROVIDER ID | |
| UCP ID | |
| NUMBER OF RULES | |
| RULE ADDRESS INFORMATION | |
| RULE 1 | RULE NUMBER (#) |
| | SERVICE PROVIDER PROFIT AMOUNT |
| | SERVICE PROVIDER PROFIT RATIO |
| | PRICE |
| | DATA SIZE |
| | TRANSMISSION INFORMATION |
| ⋮ | ⋮ |
| RULE N | RULE NUMBER (#) |
| | SERVICE PROVIDER PROFIT AMOUNT |
| | SERVICE PROVIDER PROFIT RATIO |
| | PRICE |
| | DATA SIZE |
| | TRANSMISSION INFORMATION |
| (SIGNATURE VERIFIED OR NOT) | |
| PUBLIC KEY CERTIFICATE | |
| SIGNATURE | |

# F I G. 64

| | | |
|---|---|---|
| DATA TYPE | | |
| PT TYPE (ALBUM) | | |
| PT VALID PERIOD | | |
| ALBUM ID | | |
| SERVICE PROVIDER ID | | |
| PT ID | | |
| PT VERSION | | |
| AREA CODE | | |
| QUALIFIED DEVICE CONDITION | | |
| QUALIFIED USER CONDITION | | |
| CONTENT PROVIDER ID | | |
| UCP ID | | |
| NUMBER OF SINGLE CONTENT PT'S | | |
| SINGLE CONTENT PT ADDRESS INFORMATION | | |
| S I N G L E | PT 1 | |
| | · · · | |
| | PT N | |
| NUMBER OF RULES | | |
| RULE ADDRESS INFORMATION | | |
| R U L E 1 | RULE NUMBER (#) | |
| | SERVICE PROVIDER PROFIT AMOUNT | |
| | SERVICE PROVIDER PROFIT RATIO | |
| | PRICE | |
| | DATA SIZE | |
| | TRANSMISSION INFORMATION | |
| · · · | · · · | |
| R U L E N | RULE NUMBER (#) | |
| | SERVICE PROVIDER PROFIT AMOUNT | |
| | SERVICE PROVIDER PROFIT RATIO | |
| | PRICE | |
| | DATA SIZE | |
| | TRANSMISSION INFORMATION | |
| (SIGNATURE VERIFIED OR NOT) | | |
| PUBLIC KEY CERTIFICATE | | |
| SIGNATURE | | |

# F I G. 65

| | DATA TYPE |
|---|---|
| | PT TYPE (SINGLE) |
| | PT VALID PERIOD |
| | CONTENT ID |
| | SERVICE PROVIDER ID |
| | PT ID |
| | PT VERSION |
| | AREA CODE |
| | QUALIFIED DEVICE CONDITION |
| | QUALIFIED USER CONDITION |
| | CONTENT PROVIDER ID |
| | UCP ID |
| | NUMBER OF RULES |
| | RULE ADDRESS INFORMATION |
| RULE 1 | RULE NUMBER (#) |
| | PRICE |
| | DATA SIZE |
| | TRANSMISSION INFORMATION |
| ⋮ | ⋮ |
| RULE N | RULE NUMBER (#) |
| | PRICE |
| | DATA SIZE |
| | TRANSMISSION INFORMATION |
| | (SIGNATURE VERIFIED OR NOT) |
| | PUBLIC KEY CERTIFICATE |
| | SIGNATURE |

# F I G. 66

| | |
|---|---|
| DATA TYPE | |
| PT TYPE (ALBUM) | |
| PT VALID PERIOD | |
| ALBUM ID | |
| SERVICE PROVIDER ID | |
| PT ID | |
| PT VERSION | |
| AREA CODE | |
| QUALIFIED DEVICE CONDITION | |
| QUALIFIED USER CONDITION | |
| CONTENT PROVIDER ID | |
| UCP ID | |
| NUMBER OF SINGLE CONTENT PT'S | |
| SINGLE CONTENT PT ADDRESS INFORMATION | |
| SINGLE | PT 1 |
| | ⋮ |
| | PT N |
| NUMBER OF RULES | |
| RULE ADDRESS INFORMATION | |
| RULE 1 | RULE NUMBER (#) |
| | PRICE |
| | DATA SIZE |
| | TRANSMISSION INFORMATION |
| ⋮ | ⋮ |
| RULE N | RULE NUMBER (#) |
| | PRICE |
| | DATA SIZE |
| | TRANSMISSION INFORMATION |
| (SIGNATURE VERIFIED OR NOT) | |
| PUBLIC KEY CERTIFICATE | |
| SIGNATURE | |

# F I G.67

| DATA TYPE |
|---|
| UCS TYPE |
| UCS VALID PERIOD |
| CONTENT ID |
| ALBUM ID |
| SAM ID |
| USER ID |
| CONTENT PROVIDER ID |
| UCP ID |
| UCP VERSION |
| SERVICE PROVIDER ID |
| PT ID |
| PT VERSION |
| UCS ID |
| REPRODUCTION RIGHT (USAGE RIGHT) RULE NUMBER |
| USAGE RIGHT DESCRIPTION NUMBER |
| REPRODUCTION REMAIN COUNT |
| REPRODUCTION RIGHT VALID PERIOD |
| DUPLICATION RIGHT (USAGE RIGHT) RULE NUMBER |
| USAGE RIGHT DESCRIPTION NUMBER |
| DUPLICATION REMAIN COUNT |
| GENERATION MANAGEMENT INFORMATION |
| ID OF SAM HAVING REPRODUCTION RIGHT |

# F I G.68

| |
|---|
| DATA TYPE |
| SAM ID |
| USER ID |
| CONTENT ID |
| CONTENT PROVIDER ID |
| UCP ID |
| UCP VERSION |
| SERVICE PROVIDER ID |
| PT ID |
| PT VERSION |
| UCS ID |
| RULE NUMBER (#) |
| CONTENT PROVIDER PROFIT AMOUNT / PROFIT RATIO |
| SERVICE PROVIDER PROFIT AMOUNT / PROFIT RATIO |
| GENERATION MANAGEMENT INFORMATION |
| DATA SIZE OF TNRANSMISSION INFORMATION SET BY CONTENT PROVIDER |
| TRANSMISSION INFORMATION SET BY CONTENT PROVIDER |
| DATA SIZE OF TRANSMISSION INFORMATION SET BY SERVICE PROVIDER |
| TRANSMISSION INFORMATION SET BY SERVICE PROVIDER |
| SUPPLY SOURCE ID |

# F I G.69

| DATA TYPE |
|---|
| SAM ID |
| USER ID |
| CONTENT ID |
| CONTENT PROVIDER ID |
| UCP ID |
| UCP VERSION |
| SERVICE PROVIDER ID |
| PT ID |
| PT VERSION |
| UCS ID |
| RULE NUMBER (#) |
| GENERATION MANAGEMENT INFORMATION |
| DATA SIZE OF TNRANSMISSION INFORMATION SET BY CONTENT PROVIDER |
| TRANSMISSION INFORMATION SET BY CONTENT PROVIDER |
| DATA SIZE OF TRANSMISSION INFORMATION SET BY SERVICE PROVIDER |
| TRANSMISSION INFORMATION SET BY SERVICE PROVIDER |
| SUPPLY SOURCE ID |